# EUROPEAN PATENT APPLICATION

(11) **EP 4 349 903 A1**
(43) Date of publication of application: **10.04.2024**
(21) Application number: 22816106.3
(22) Date of filing: 31.05.2022
(51) Int. Cl.: C08L 7/00, B60C 1/00, C08K 3/04, C08K 3/36, C08K 5/16, C08K 5/54, C08L 9/00

(54) **SILANE COUPLING AGENT COMPOSITION AND RUBBER COMPOSITION COMPRISING SAME**

(30) Priority: 04.06.2021 JP 2021094661
(71) Applicant: ENEOS Corporation, Chiyoda-ku Tokyo 100-8162 (JP)
(72) Inventor: ASHIURA Makoto, Tokyo 100-8162 (JP); CHINO Keisuke, Tokyo 100-8162 (JP); MATSUO Yusuke, Tokyo 100-8162 (JP); TSUTSUMI Toshiyuki, Tokyo 100-8162 (JP); IWASAKI Keitaro, Tokyo 100-8162 (JP); SASAYAMA Takuma, Tokyo 100-8162 (JP)
(74) Representative: Müller-Boré & Partner Patentanwälte PartG mbB
(86) International application number: PCT/JP2022/022133
(87) International publication number: WO 2022/255360

(57) **Abstract**

Provided is a silane coupling agent composition that can result in improvement in the various characteristics of a rubber composition and/or a crosslinking substance thereof. The silane coupling agent composition of the present invention includes a silane compound and a silanization reaction accelerator.

## Description

### BACKGROUND OF THE INVENTION

### Field of the Invention

The present invention relates to a silane coupling agent composition and a rubber composition containing the silane coupling agent composition. The present invention also relates to a crosslinking substance of the rubber composition and a tire using the rubber composition.

### Background Art

Conventionally, a silane compound including a reactive functional group and a hydrolyzable group has been used as a component of a silane coupling agent in order to improve the dispersibility of an organic polymer material such as rubber and an inorganic material such as silica in a rubber composition.

Commonly, such a silane compound includes: a substituent, such as a mercapto group, a polysulfide group, an amino group, or an epoxy group, as a reactive functional group having high reactivity with an organic polymer material such as rubber; and a substituent, such as an alkoxysilyl group, as a hydrolyzable group having high reactivity with an inorganic material such as silica. For example, Patent Literature 1 discloses a rubber composition containing a polysulfide-based silane coupling agent. Patent Literature 2 proposes a silane compound including: an amino group as a reactive functional group; and a methoxy group as a hydrolyzable group.

Patent Literature 3 proposes a rubber composition that is blended with an organosilane compound having a monosulfide bond in order to improve the scorch resistance of the rubber composition and the exothermic characteristic (viscoelastic characteristic) of a crosslinking substance of the rubber composition.

### Citation List

### Patent Literature

[Patent Literature 1] Japanese Patent Laid-Open No. H8-259736
[Patent Literature 2] Japanese Patent Laid-Open No. H11-335381
[Patent Literature 3] Japanese Patent Laid-Open No. 2014-177432

### SUMMARY OF THE INVENTION

### Technical Problem

However, the reactive functional group included in the silane compound proposed in Patent Literature 1 or 2 has had high polarity, and the low polarity of an organic polymer material to be mixed has tended to result in a low affinity between the silane compound and the organic polymer material, and to cause poor dispersion and poor mixture. Therefore, containment of a silane coupling agent composition including such a silane compound in a rubber composition has tended to be unable to result in sufficient improvement in the hardness and viscoelastic characteristic of a crosslinking substance of the rubber composition, obtained by molding the rubber composition. On the other hand, addition of a conventional silane compound including a reactive functional group having low polarity to enhance the affinity with the organic polymer material having the low polarity has resulted in low reactivity with the organic polymer material and in insufficient performance for a silane coupling agent.

The silane compound described in Patent Literature 3 has had no appropriate reactivity with an organic polymer material.

Accordingly, an objective of the present invention is to provide a silane coupling agent composition that has appropriate reactivity with an organic polymer material such as rubber and can result in improvement in the various characteristics of a rubber composition and/or a crosslinking substance thereof. Moreover, an objective of the present invention is to provide a tire that uses the crosslinking substance and is excellent in various characteristics.

### Solution to Problem

As a result of intensive examination, the present inventors found that use of a silane coupling agent composition including a silane compound and a silanization reaction accelerator promotes a coupling reaction and thus results in improvement in various characteristics in a case in which a blend is a rubber composition, and in improvement in the various characteristics of a crosslinking substance (rubber product) obtained from the rubber composition or the like. The present invention is based on the findings.

The present invention includes the following inventions.
[1] A silane coupling agent composition including a silane compound and a silanization reaction accelerator.
[2] The silane coupling agent composition according to [1], wherein the silanization reaction accelerator is at least one selected from a group consisting of a carbamide compound, a guanidine compound, another nitrogen-containing compound (excluding carbamide compounds and guanidine compounds), and paraformaldehyde.
[3] The silane coupling agent composition according to [2], wherein the carbamide compound is a urea derivative.
[4] The silane coupling agent composition according to [3], wherein the urea derivative is at least one of urea and ethylene urea.
[5] The silane coupling agent composition according to any of [2] to [4], wherein the guanidine compound is at least one of guanidine hydrochloride and diphenyl guanidine.
[6] The silane coupling agent composition according to any of [2] to [5], wherein the other nitrogen-containing compound is at least one selected from a group consisting of hexamethylenetetramine, ammonia, hydantoin, cyanuric acid, and melamine.
[7] The silane coupling agent composition according to any of [1] to [6], further including carbon black.
[8] The silane coupling agent composition according to any of [1] to [7], wherein the silane coupling agent composition is used in natural rubber and/or synthetic isoprene rubber.
[9] A rubber composition including the silane coupling agent composition according to any of [1] to [8], a diene rubber, and silica, wherein
   the diene rubber includes at least natural rubber and/or synthetic isoprene rubber, and
   a content of the silane compound is 0.5 to 30 parts by mass with respect to 100 parts by mass of the silica.
[10] The rubber composition according to [9], wherein the content of the silica is 0.5 to 300 parts by mass with respect to 100 parts by mass of the diene rubber.
[11] The rubber composition according to [9] or [10], wherein the rubber composition is used in a tire.
[12] A crosslinking substance of the rubber composition according to any of [9] to [11].
[13] A tire including the crosslinking substance according to [12].

### Advantageous Effects of Invention

In accordance with the present invention, there can be provided a silane coupling agent composition that can result in improvement in the various characteristics of a rubber composition and/or a crosslinking substance thereof. Moreover, in accordance with the present invention, there can be provided a tire that uses the crosslinking substance and is excellent in various characteristics.

### BRIEF DESCRIPTION OF THE DRAWINGS

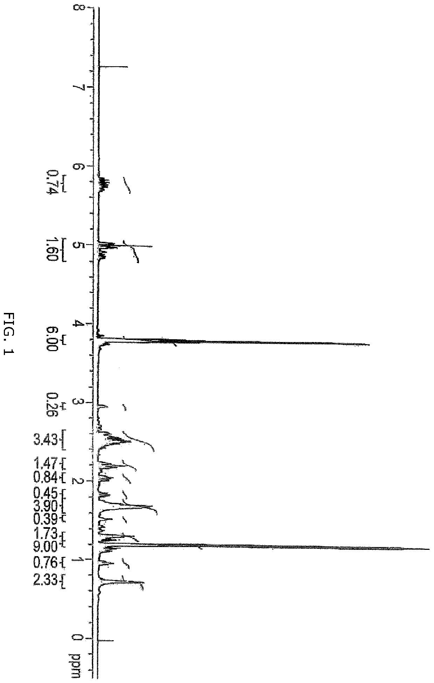

FIG. 1 illustrates a ¹H-NMR chart of a silane compound 1 (VNB-SSi) synthesized in Preparation Example 1.

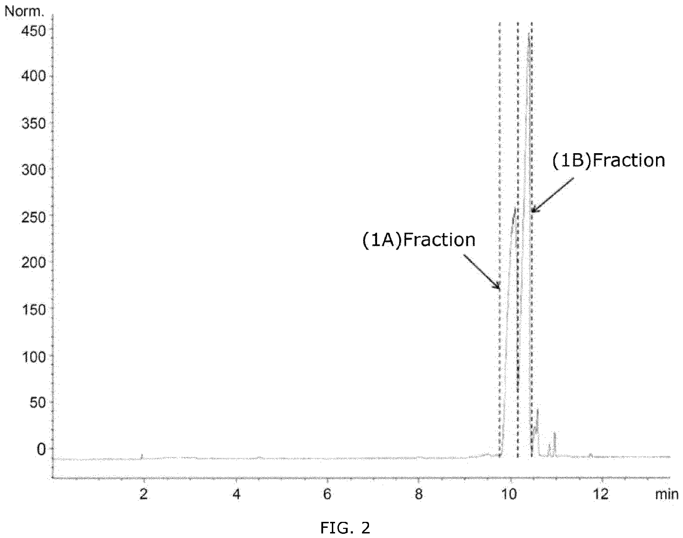

FIG.2 is a chromatogram representing that the silane compound 1 (VNB-SSi) synthesized in Preparation Example 1 is fractionated into a fraction (1A) and a fraction (1B) to perform preparative isolation of each fraction by gas chromatography.

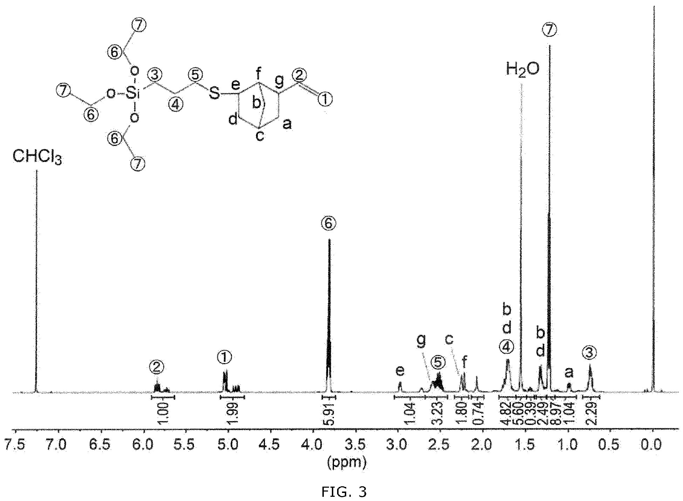

FIG. 3 illustrates a ¹H-NMR chart of the fraction (1A) of the silane compound 1 (VNB-SSi) synthesized in Preparation Example 1. The peaks indicated by a to g and circled integers from 1 to 7 indicate the peaks of protons bound to the respective carbon atoms (illustrated in Figure 3) of the compound represented by Formula (1A).

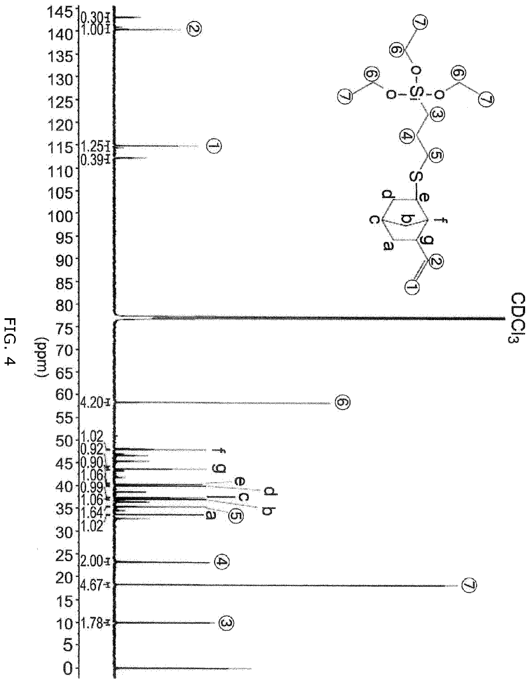

FIG. 4 illustrates a ¹³C-NMR chart of the fraction (1A) of the silane compound 1 (VNB-SSi) synthesized in Preparation Example 1. The peaks indicated by a to g and circled integers from 1 to 7 indicate the peaks of the respective carbon atoms (illustrated in FIG. 4) of the compound represented by Formula (1A).

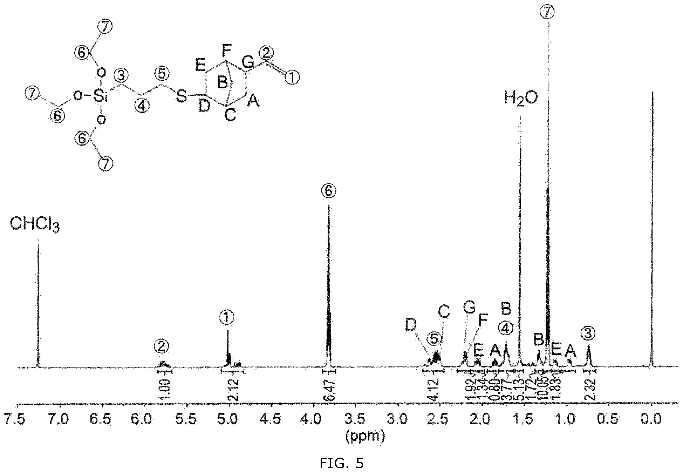

FIG. 5 illustrates a ¹H-NMR chart of the fraction (1B) of the silane compound 1 (VNB-SSi) synthesized in Preparation Example 1. The peaks indicated by A to G and circled integers from 1 to 7 indicate the peaks of protons bound to the respective carbon atoms (illustrated in FIG. 5) of the compound represented by Formula (1B).

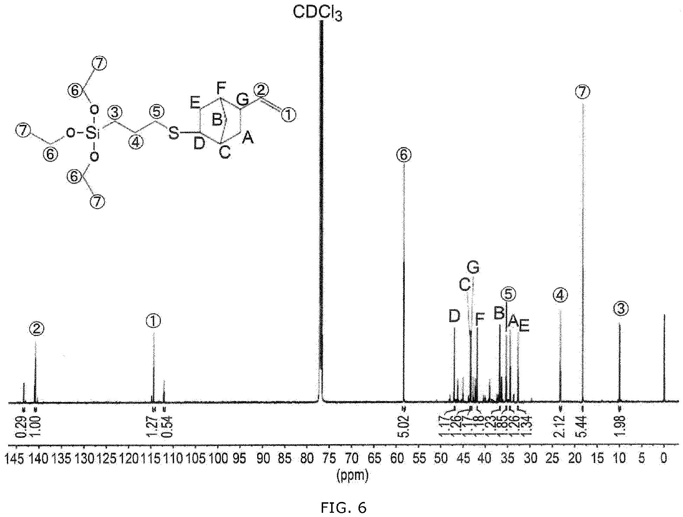

FIG. 6 illustrates a ¹³C-NMR chart of the fraction (1B) of the silane compound 1 (VNB-SSi) synthesized in Preparation Example 1. The peaks indicated by A to G and circled integers from 1 to 7 indicate the peaks of protons bound to the respective carbon atoms (illustrated in FIG. 6) of the compound represented by Formula (1B).

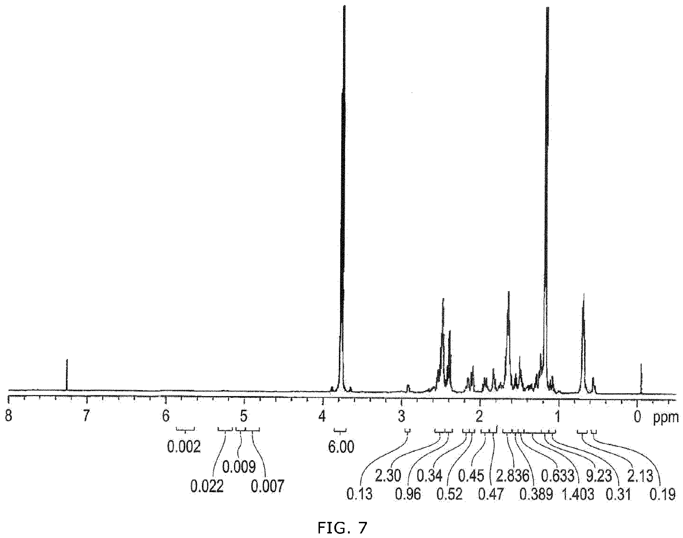

FIG. 7 illustrates a ¹H-NMR chart of a silane compound 2 (VNB-2SSi) synthesized in Preparation Example 2.

### DETAILED DESCRIPTION OF THE INVENTION

### [Definitions]

The terms "part(s)", "%", and the like indicating blending proportions used herein are based on mass.

### [Silane Coupling Agent Composition]

A silane coupling agent composition of the present invention is characterized by including a silane compound and a silanization reaction accelerator. Addition of the silane coupling agent composition of the present invention to a diene rubber allows appropriate reactivity and can result in improvement in the various characteristics of a rubber composition and/or a crosslinking substance thereof.

The content of the silane compound in the silane coupling agent composition is preferably 20 to 99% by mass, more preferably 50 to 95% by mass, and still more preferably 60 to 90% by mass with respect to the total mass of the silane coupling agent composition. When two or more silane compounds are used in combination, the total content thereof is preferably within the numerical range described above. The content of the silanization reaction accelerator in the silane coupling agent composition is preferably 0.1 to 50% by mass, more preferably 1 to 45% by mass, and still more preferably 5 to 40% by mass with respect to the total mass of the silane coupling agent composition. When two or more silanization reaction accelerators are used in combination, the total content thereof is preferably within the numerical range described above. When the contents of the silane compound and the silanization reaction accelerator in the silane coupling agent composition are within the numerical ranges described above, addition of the silane coupling agent composition to a diene rubber allows appropriate reactivity and can result in improvement in the various characteristics of a rubber composition and/or a crosslinking substance thereof.

The silane coupling agent composition may further include carbon black. As the carbon black, carbon black described in inorganic materials described below can be used. Each component of the silane coupling agent composition will be described in detail below.

### (Silane Compound)

The silane compound is not particularly limited, and conventionally known silane compounds used in silane coupling agents can be used. Preferred examples of the silane compound include first to third silane compounds described below.

### (First Silane Compound)

The first silane compound is a compound represented by the following Formula (1): 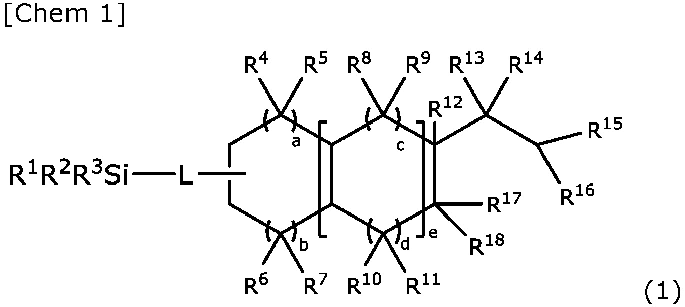 [wherein
R¹, R², and R³ each independently represent a hydrocarbon group that may include an oxygen atom or a nitrogen atom, or a hydrogen atom,
L is a hydrocarbon group that may include at least one hetero atom selected from the group consisting of nitrogen, oxygen, and sulfur,
a is an integer 0 or 1,
b is an integer 0 or 1,
c is each independently an integer 0 or 1,
d is each independently an integer 0 or 1,
e is an integer from 0 to 5,
R⁴, R⁵, R⁶, and R⁷ represent a hydrogen atom, a methyl group, or an alkyl group having 2 to 10 carbon atoms, or one of R⁴ or R⁵ and R⁶ or R⁷ may form a crosslinked structure represented by -(CH₂)_{f}-,
f is an integer from 1 to 5,
R⁸, R⁹, R¹⁰, and R¹¹ represent a hydrogen atom, a methyl group, or an alkyl group having 2 to 10 carbon atoms, or one of R⁸ or R⁹ and R¹⁰ or R¹¹ may form a crosslinked structure represented by -(CH₂)_{g}-,
g is an integer from 1 to 5,
R¹⁶ is a hydrogen atom, a methyl group, or an alkyl group having 2 to 8 carbon atoms, and R¹⁷ is a hydrogen atom, a methyl group, or an alkyl group having 2 to 10 carbon atoms, wherein R¹² and R¹³ are bonded to each other to form a double bond, and R¹⁴, R¹⁵, and R¹⁸ are a hydrogen atom, a methyl group, or an alkyl group having 2 to 10 carbon atoms, or R¹⁴ and R¹⁵ are bonded to each other to form a double bond, and R¹², R¹³, and R¹⁸ are a hydrogen atom, a methyl group, or an alkyl group having 2 to 10 carbon atoms, or
R¹⁶ and R¹⁷ may be bonded to each other to form a 4- to 9-membered alicyclic hydrocarbon, wherein R¹⁴ and R¹⁵ are bonded to each other to form a double bond, and R¹², R¹³, and R¹⁸ are a hydrogen atom, a methyl group, or an alkyl group having 2 to 10 carbon atoms].

In Formula (1), a is an integer 0 or 1, preferably 1.

Moreover, b is an integer 0 or 1, preferably 1.

Moreover, c is each independently an integer 0 or 1, preferably 1.

Moreover, d is each independently an integer 0 or 1, preferably 1.

Moreover, e is an integer from 0 to 5, preferably an integer from 0 to 3, more preferably an integer from 0 to 2, and still more preferably an integer 0 or 1.

Moreover, R⁴, R⁵, R⁶, and R⁷ represent a hydrogen atom, a methyl group, or an alkyl group having 2 to 10 carbon atoms, or one of R⁴ or R⁵ and R⁶ or R⁷ may form a crosslinked structure represented by -(CH₂)_{f}-.

Moreover, f is an integer from 1 to 5, preferably an integer from 1 to 4, more preferably an integer from 1 to 3, and still more preferably 1.

Moreover, R⁸, R⁹, R¹⁰, and R¹¹ represent a hydrogen atom, a methyl group, or an alkyl group having 2 to 10 carbon atoms, or one of R⁸ or R⁹ and R¹⁰ or R¹¹ may form a crosslinked structure represented by -(CH₂)₉-.

Moreover, g is an integer from 1 to 5, preferably an integer from 1 to 4, more preferably an integer from 1 to 3, and still more preferably 1.

Moreover, R¹⁶ is a hydrogen atom, a methyl group, or an alkyl group having 2 to 8 carbon atoms, preferably a hydrogen atom, a methyl group, or an alkyl group having 2 or 3 carbon atoms, more preferably a hydrogen atom or a methyl group, and still more preferably a hydrogen atom, and R¹⁷ is a hydrogen atom, a methyl group, or an alkyl group having 2 to 10 carbon atoms, preferably a hydrogen atom, a methyl group, or an alkyl group having 2 to 5 carbon atoms, more preferably a hydrogen atom or a methyl group, and still more preferably a hydrogen atom, wherein R¹² and R¹³ are bonded to each other to form a double bond, and R¹⁴, R¹⁵, and R¹⁸ are a hydrogen atom, a methyl group, or an alkyl group having 2 to 10 carbon atoms, or R¹⁴ and R¹⁵ are bonded to each other to form a double bond, and R¹², R¹³, and R¹⁸ are a hydrogen atom, a methyl group, or an alkyl group having 2 to 10 carbon atoms, or

R¹⁶ and R¹⁷ may be bonded to each other to form a 4- to 9-membered alicyclic hydrocarbon, preferably a 4- to 7-membered alicyclic hydrocarbon, more preferably a 5- or 6-membered alicyclic hydrocarbon, and still more preferably a 5-membered alicyclic hydrocarbon, wherein R¹⁴ and R¹⁵ are bonded to each other to form a double bond, and R¹², R¹³, and R¹⁸ are a hydrogen atom, a methyl group, or an alkyl group having 2 to 10 carbon atoms.

In Formula (1), R¹, R², and R³ each independently represent a hydrocarbon group that may include an oxygen atom or a nitrogen atom, or a hydrogen atom. Examples of hydrocarbon groups include alkyl groups, aralkyl groups, and aryl groups.

Examples of the alkyl groups include methyl group, ethyl group, propyl group, butyl group, isopropyl group, tert-butyl group, 2-ethylhexyl group, cyclopentyl group, and cyclohexyl group, the number of carbon atoms in such an alkyl group is preferably 1 to 60, more preferably 1 to 30, and a methyl group or an ethyl group is especially preferred.

Examples of the aralkyl groups include a benzyl group, a phenethyl group, naphthylmethyl group, and a biphenylmethyl group. The number of carbon atoms in such an aralkyl group is preferably 7 to 60, more preferably 7 to 20, still more preferably 7 to 14.

Examples of the aryl groups include phenyl, biphenyl, naphthyl, tolyl, and xylyl groups. The number of carbon atoms in such an aryl group is preferably 6 to 60, more preferably 6 to 24, still more preferably 6 to 12.

The hydrocarbon group including an oxygen atom or a nitrogen atom is a group having a structure in which a carbon atom in the hydrocarbon group is replaced with an oxygen atom or a nitrogen atom.

In a still more preferred embodiment of the present invention, the hydrocarbon group that may include an oxygen atom or a nitrogen atom in R¹, R², and R³ is an alkoxy group, an amino group substituted with one or more alkyl groups, or an alkyl group. The hydrocarbon group is more preferably an alkoxy group having 1 to 30 carbon atoms, still more preferably an alkoxy group having 1 to 20 carbon atoms, more preferably an amino group substituted with one or more alkyl groups having 1 to 30 carbon atoms, still more preferably an amino group substituted with one or more alkyl groups having 1 to 20 carbon atoms, or more preferably an alkyl group having 1 to 30 carbon atoms, still more preferably an alkyl group having 1 to 20 carbon atoms. Examples of such alkoxy groups include methoxy, ethoxy, propoxy, isopropoxy, butoxy, and isobutoxy groups, and methoxy or ethoxy is especially preferred. Examples of the amino group substituted with one or more alkyl groups include an N-methylamino group, an N,N-dimethylamino group, an N-ethylamino group, an N,N-diethylamino group, and an N-isopropylamino group, among which an N-methylamino group or an N-ethylamino group is preferred. Examples of such alkyl groups include methyl, ethyl, propyl, isopropyl, butyl, isobutyl, tert-butyl, pentyl, cyclopentyl, hexyl, and cyclohexyl groups, and methyl and ethyl are especially preferred.

In Formula (1), L is a hydrocarbon group that may include at least one hetero atom selected from the group consisting of nitrogen, oxygen, and sulfur, preferably a hydrocarbon group with 1 to 30 carbon atoms, optionally including at least one hetero atom selected from the group consisting of nitrogen, oxygen, and sulfur, more preferably a hydrocarbon group with 1 to 20 carbon atoms, optionally including at least one hetero atom selected from the group consisting of nitrogen, oxygen, and sulfur, and still more preferably a hydrocarbon group with 1 to 10 carbon atoms, optionally including at least one hetero atom selected from the group consisting of nitrogen, oxygen, and sulfur. Especially, L is particularly preferably a hydrocarbon group including sulfur. As the total number of atoms of carbon, nitrogen, oxygen, or sulfur, the length of a straight-chain moiety joining the silyl group and the alicyclic hydrocarbon moiety in such a hydrocarbon group is preferably set at 3 to 8, more preferably at 4 to 7, and still more preferably at 4 to 6.

The first silane compound is preferably a compound represented by Formula (2): 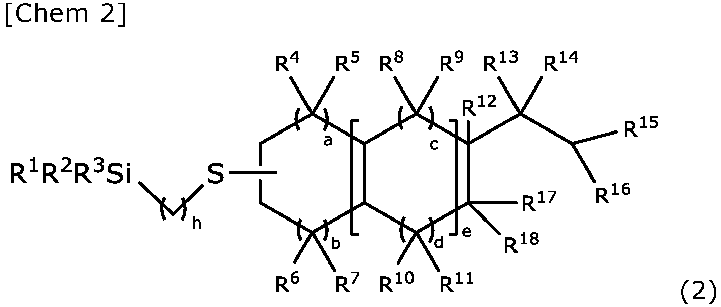 [wherein
R¹, R², and R³ each independently represent a hydrocarbon group that may include an oxygen atom or a nitrogen atom, or a hydrogen atom,
h is an integer from 1 to 10,
a is an integer 0 or 1,
b is an integer 0 or 1,
c is each independently an integer 0 or 1,
d is each independently an integer 0 or 1,
e is an integer from 0 to 5,
R⁴, R⁵, R⁶, and R⁷ represent a hydrogen atom, a methyl group, or an alkyl group having 2 to 10 carbon atoms, or one of R⁴ or R⁵ and R⁶ or R⁷ may form a crosslinked structure represented by -(CH₂)_{f}-,
f is an integer from 1 to 5,
R⁸, R⁹, R¹⁰, and R¹¹ represent a hydrogen atom, a methyl group, or an alkyl group having 2 to 10 carbon atoms, or one of R⁸ or R⁹ and R¹⁰ or R¹¹ may form a crosslinked structure represented by -(CH₂)_{g}-,
g is an integer from 1 to 5,
R¹⁶ is a hydrogen atom, a methyl group, or an alkyl group having 2 to 8 carbon atoms, and R¹⁷ is a hydrogen atom, a methyl group, or an alkyl group having 2 to 10 carbon atoms, wherein R¹² and R¹³ are bonded to each other to form a double bond, and R¹⁴, R¹⁵, and R¹⁸ are a hydrogen atom, a methyl group, or an alkyl group having 2 to 10 carbon atoms, or R¹⁴ and R¹⁵ are bonded to each other to form a double bond, and R¹², R¹³, and R¹⁸ are a hydrogen atom, a methyl group, or an alkyl group having 2 to 10 carbon atoms, or
R¹⁶ and R¹⁷ may be bonded to each other to form a 4- to 9-membered alicyclic hydrocarbon, wherein R¹⁴ and R¹⁵ are bonded to each other to form a double bond, and R¹², R¹³, and R¹⁸ are a hydrogen atom, a methyl group, or an alkyl group having 2 to 10 carbon atoms].

In the compound represented by Formula (2), h is an integer from 1 to 10, preferably an integer from 1 to 8, more preferably from 2 to 7, still more preferably from 3 to 6, and even more preferably from 3 to 5, and particularly preferably 3. Moreover, a to g, and R¹ to R¹⁸ are as described with regard to Formula (1).

The first silane compound is more preferably a compound represented by Formula (3): 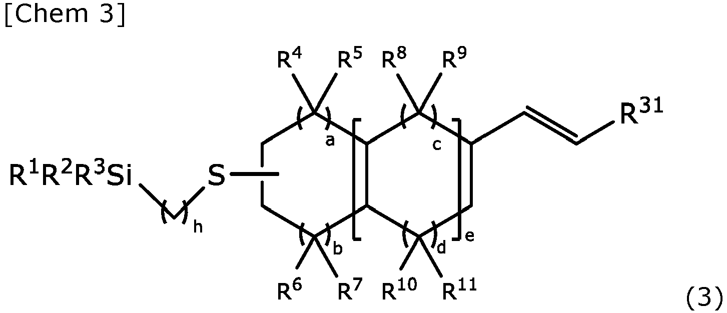 [wherein
R¹, R², and R³ each independently represent a hydrocarbon group that may include an oxygen atom or a nitrogen atom, or a hydrogen atom,
h is an integer from 1 to 10,
a is an integer 0 or 1,
b is an integer 0 or 1,
c is each independently an integer 0 or 1,
d is each independently an integer 0 or 1,
e is an integer from 0 to 5,
R⁴, R⁵, R⁶, and R⁷ represent a hydrogen atom, a methyl group, or an alkyl group having 2 to 10 carbon atoms, or one of R⁴ or R⁵ and R⁶ or R⁷ may form a crosslinked structure represented by -(CH₂)_{f}-,
f is an integer from 1 to 5,
R⁸, R⁹, R¹⁰, and R¹¹ represent a hydrogen atom, a methyl group, or an alkyl group having 2 to 10 carbon atoms, or one of R⁸ or R⁹ and R¹⁰ or R¹¹ may form a crosslinked structure represented by -(CH₂)_{g}-,
g is an integer from 1 to 5, and
R³¹ is a hydrogen atom, a methyl group, or an alkyl group having 2 to 8 carbon atoms].

In the compound represented by Formula (3), a to g, and R¹ to R¹¹ are as described with regard to Formula (1), and h is as described with regard to Formula (2).

R³¹ in Formula (3) is a hydrogen atom, a methyl group, or an alkyl group having 2 to 8 carbon atoms, preferably a hydrogen atom, a methyl group, or an alkyl group having 2 to 5 carbon atoms, more preferably a hydrogen atom, a methyl group, or an alkyl group having 1 or 2 carbon atoms, and still more preferably a hydrogen atom.

The first silane compound is more preferably a compound represented by Formula (4): 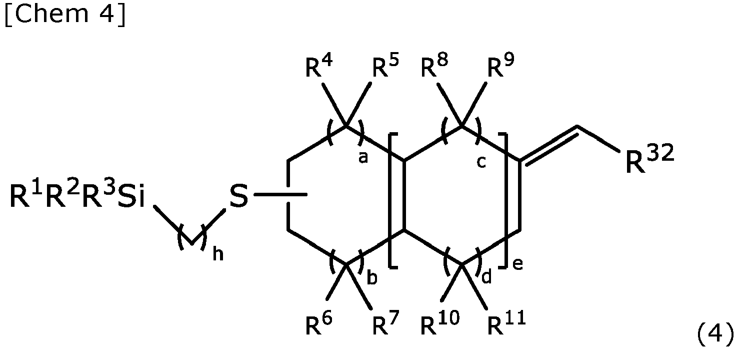 [wherein
R¹, R², and R³ each independently represent a hydrocarbon group that may include an oxygen atom or a nitrogen atom, or a hydrogen atom,
h is an integer from 1 to 10,
a is an integer 0 or 1,
b is an integer 0 or 1,
c is each independently an integer 0 or 1,
d is each independently an integer 0 or 1,
e is an integer from 0 to 5,
R⁴, R⁵, R⁶, and R⁷ represent a hydrogen atom, a methyl group, or an alkyl group having 2 to 10 carbon atoms, or one of R⁴ or R⁵ and R⁶ or R⁷ may form a crosslinked structure represented by -(CH₂)_{f}-,
f is an integer from 1 to 5,
R⁸, R⁹, R¹⁰, and R¹¹ represent a hydrogen atom, a methyl group, or an alkyl group having 2 to 10 carbon atoms, or one of R⁸ or R⁹ and R¹⁰ or R¹¹ may form a crosslinked structure represented by -(CH₂)_{g}-,
g is an integer from 1 to 5, and
R³² is a hydrogen atom, a methyl group, or an alkyl group having 2 to 9 carbon atoms].

In the compound represented by Formula (4), a to g, and R¹ to R¹¹ are as described with regard to Formula (1), and h is as described with regard to Formula (2).

R³² in Formula (4) is a hydrogen atom, a methyl group, or an alkyl group having 2 to 9 carbon atoms, preferably a methyl group or an alkyl group having 2 to 5 carbon atoms, more preferably a methyl group or an alkyl group having 1 or 2 carbon atoms, and still more preferably a methyl group.

The first silane compound is more preferably a compound represented by Formula (5): 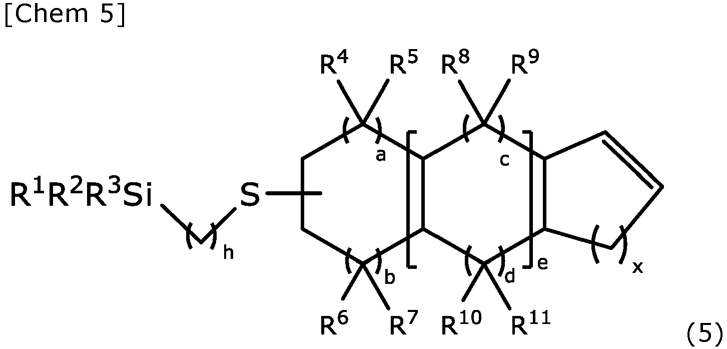 [wherein
R¹, R², and R³ each independently represent a hydrocarbon group that may include an oxygen atom or a nitrogen atom, or a hydrogen atom,
h is an integer from 1 to 10,
a is an integer 0 or 1,
b is an integer 0 or 1,
c is each independently an integer 0 or 1,
d is each independently an integer 0 or 1,
e is an integer from 0 to 5,
R⁴, R⁵, R⁶, and R⁷ represent a hydrogen atom, a methyl group, or an alkyl group having 2 to 10 carbon atoms, or one of R⁴ or R⁵ and R⁶ or R⁷ may form a crosslinked structure represented by -(CH₂)_{f}-,
f is an integer from 1 to 5,
R⁸, R⁹, R¹⁰, and R¹¹ represent a hydrogen atom, a methyl group, or an alkyl group having 2 to 10 carbon atoms, or one of R⁸ or R⁹ and R¹⁰ or R¹¹ may form a crosslinked structure represented by -(CH₂)_{g}-,
g is an integer from 1 to 5, and
x is an integer from 0 to 5].

In the compound represented by Formula (5), a to g, and R¹ to R¹¹ are as described with regard to Formula (1), and h is as described with regard to Formula (2).

In Formula (5), x is an integer from 0 to 5, preferably an integer from 0 to 3, more preferably 1 or 2, and still more preferably 1.

The first silane compound is still more preferably a compound represented by Formula (6): 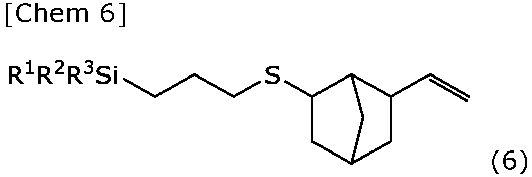 [wherein R¹, R², and R³ each independently represent a hydrocarbon group that may include an oxygen atom or a nitrogen atom, or a hydrogen atom], or
Formula (7): 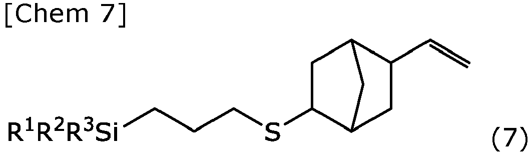 [wherein R¹, R², and R³ each independently represent a hydrocarbon group that may include an oxygen atom or a nitrogen atom, or a hydrogen atom], or
Formula (8): 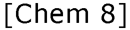 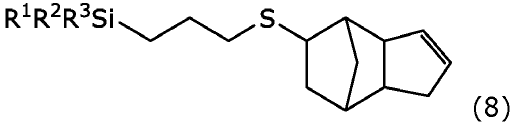 [wherein R¹, R², and R³ each independently represent a hydrocarbon group that may include an oxygen atom or a nitrogen atom, or a hydrogen atom], or
Formula (9): 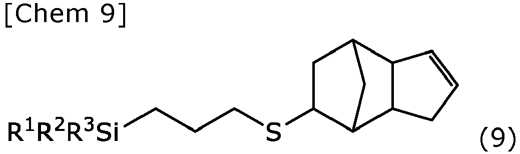 [wherein R¹, R², and R³ each independently represent a hydrocarbon group that may include an oxygen atom or a nitrogen atom, or a hydrogen atom].

In the compounds represented by Formulae (6) to (9), R¹ to R³ are as described with regard to Formula (1).

Other still more preferred aspects of the first silane compound include compounds represented by the following formulae. In the compounds represented by the following formulae, R¹ to R³ are as described with regard to Formula (1). 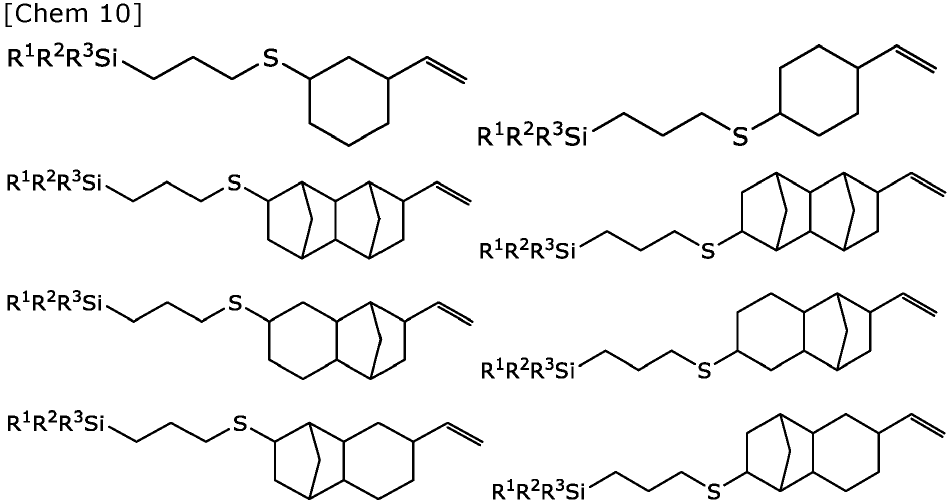 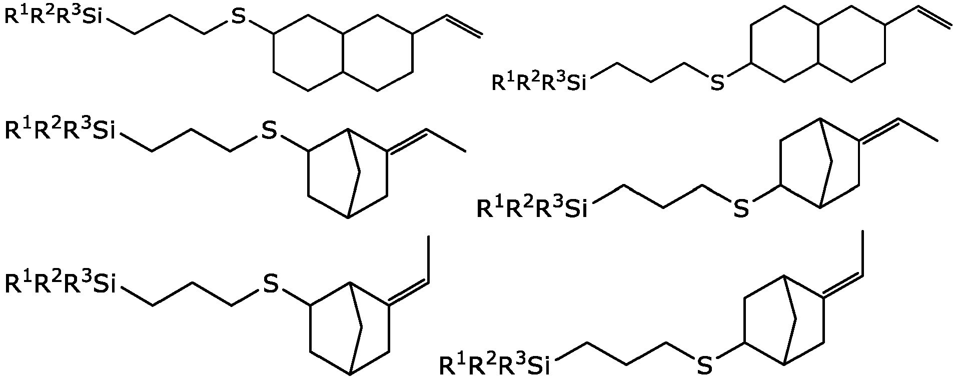 [in each formula, R¹, R², and R³ each independently represent a hydrocarbon group that may include an oxygen atom or a nitrogen atom, or a hydrogen atom].

Even more preferred aspects of the first silane compound include a silane compound in which the R¹R²R³Si group in Formulae (1) to (9) has a chemical structure of Formula (10): 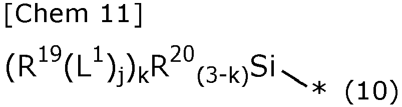 [wherein
R¹⁹ is each independently an alkoxy group or an amino group substituted with one or more alkyl groups,
R²⁰ each independently a hydrogen atom or an alkyl group,
L¹ is each independently a hydrocarbon group that may include at least one hetero atom selected from the group consisting of nitrogen, oxygen, and sulfur,
j is each independently an integer 0 or 1,
k is an integer from 1 to 3, and
an asterisk (*) indicates a site bound to a moiety other than the silyl group of the silane compound].

In Formula (10), R¹⁹ is each independently an alkoxy group or an amino group substituted with one or more alkyl groups. In one preferred embodiment, R¹⁹ is each independently a hydrolyzable group, which is an alkoxy group, more preferably an alkoxy group having 1 to 30 carbon atoms, still more preferably an alkoxy group having 1 to 20 carbon atoms, or an amino group substituted with one or more alkyl groups, more preferably an amino group substituted with one or more alkyl groups having 1 to 30 carbon atoms, and still more preferably an amino group substituted with one or more alkyl groups having 1 to 20 carbon atoms. Specific examples of the alkoxy group include a methoxy group, an ethoxy group, a propoxy group, an isopropoxy group, a butoxy group, and an isobutoxy group, among which a methoxy group or an ethoxy group is preferred. Examples of the amino group substituted with one or more alkyl groups include an N-methylamino group, an N,N-dimethylamino group, an N-ethylamino group, an N,N-diethylamino group, and an N-isopropylamino group, among which an N-methylamino group or an N-ethylamino group is preferred. An alkoxy group and an amino group may be bound to silicon (Si) through a linking group including a hydrocarbon group that may include at least one hetero atom selected from the group consisting of nitrogen, oxygen, and sulfur.

R²⁰ is each independently a hydrogen atom or an alkyl group, more preferably an alkyl group having 1 to 30 carbon atoms, and still more preferably an alkyl group having 1 to 20 carbon atoms. Specific examples thereof include a methyl group, an ethyl group, a propyl group, an isopropyl group, a butyl group, an isobutyl group, a tert-butyl group, a pentyl group, a cyclopentyl group, a hexyl group, and a cyclohexyl group, among which a methyl group and an ethyl group are preferred.

In Formula (10), L¹ is each independently a hydrocarbon group optionally including at least one hetero atom selected from the group consisting of nitrogen, oxygen, and sulfur, preferably a hydrocarbon group with 1 to 30 carbon atoms, optionally including at least one hetero atom selected from the group consisting of nitrogen, oxygen, and sulfur, more preferably a hydrocarbon group with 1 to 20 carbon atoms, optionally including at least one hetero atom selected from the group consisting of nitrogen, oxygen, and sulfur, and still more preferably a hydrocarbon group with 1 to 10 carbon atoms, optionally including at least one hetero atom selected from the group consisting of nitrogen, oxygen, and sulfur.

In Formula (10), k is an integer from 1 to 3, preferably an integer from 2 to 3, and more preferably 3.

Moreover, j is each independently an integer 0 or 1, preferably 0.

The first silane compound is further preferably a silane compound in which the R¹R²R³Si group is a triethoxysilyl group or a trimethoxysilyl group in Formulae (1) to (9), and still further preferably a silane compound in which the R¹R²R³Si group is a triethoxysilyl group in Formulae (1) to (9).

Particularly preferred embodiments of the first silane compound include compounds represented by the following formulae:

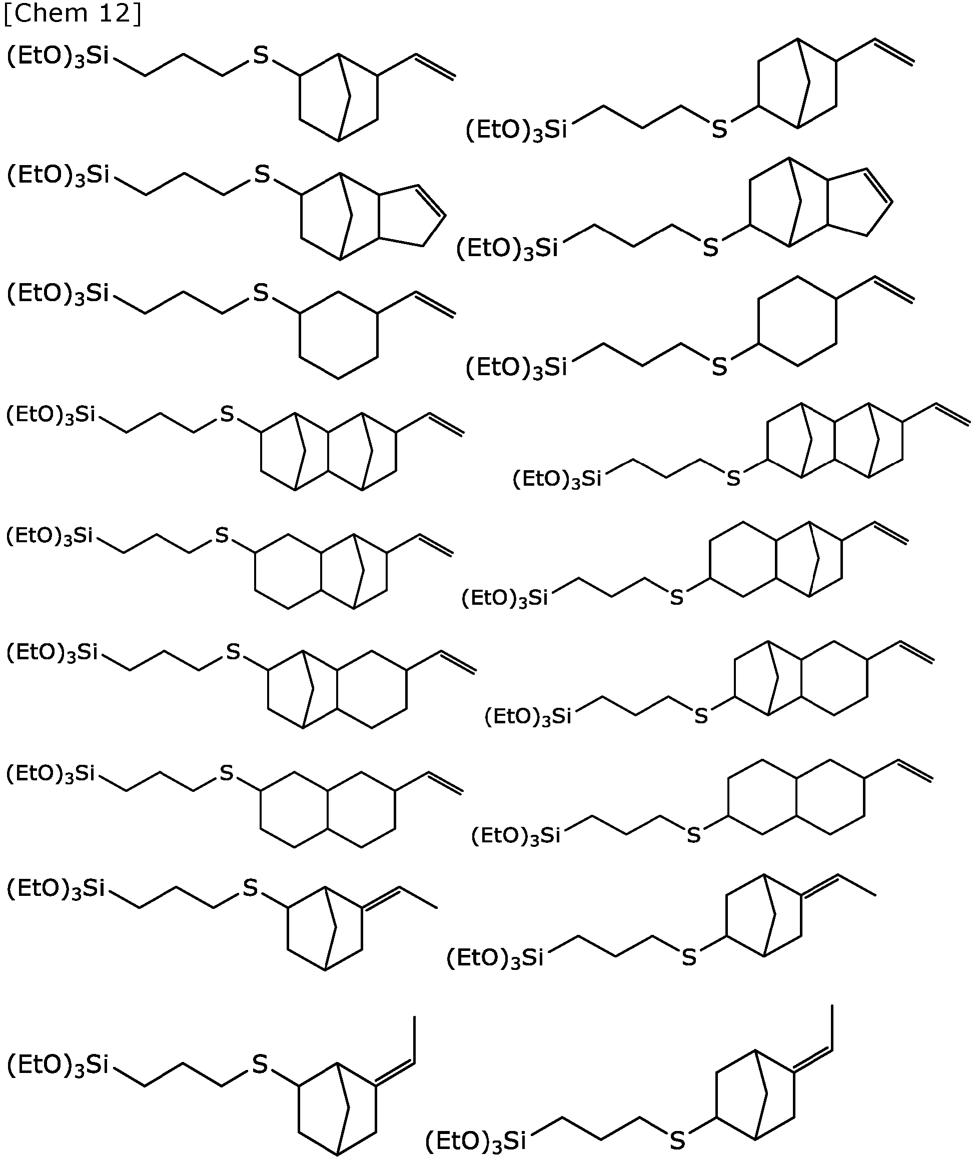

The first silane compound is preferably a stereoisomer thereof, or any mixture of such stereoisomers.

### (Method of Producing First Silane Compound)

One embodiment of a method of producing the first silane compound represented by Formula (1), included in the silane coupling agent composition of the present invention, is described but is not limited to the following production method. For example, the first silane compound can be produced by performing a reaction of a compound represented by Formula (14): 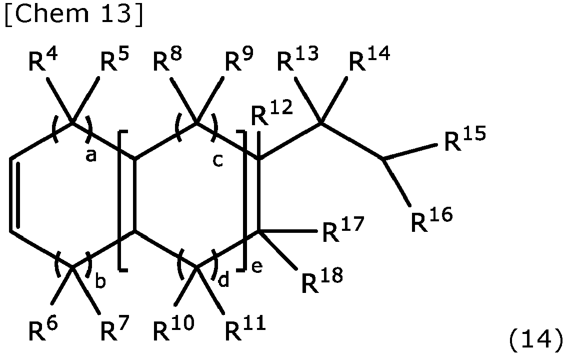 [wherein
a is an integer 0 or 1,
b is an integer 0 or 1,
c is each independently an integer 0 or 1,
d is each independently an integer 0 or 1,
e is an integer from 0 to 5,
R⁴, R⁵, R⁶, and R⁷ represent a hydrogen atom, a methyl group, or an alkyl group having 2 to 10 carbon atoms, or one of R⁴ or R⁵ and R⁶ or R⁷ may form a crosslinked structure represented by -(CH₂)_{f}-,
f is an integer from 1 to 5,
R⁸, R⁹, R¹⁰, and R¹¹ represent a hydrogen atom, a methyl group, or an alkyl group having 2 to 10 carbon atoms, or one of R⁸ or R⁹ and R¹⁰ or R¹¹ may form a crosslinked structure represented by -(CH₂)_{g}-,
g is an integer from 1 to 5, and
R¹⁶ is a hydrogen atom, a methyl group, or an alkyl group having 2 to 8 carbon atoms, and R¹⁷ is a hydrogen atom, a methyl group, or an alkyl group having 2 to 10 carbon atoms, wherein R¹² and R¹³ are bonded to each other to form a double bond, and R¹⁴, R¹⁵, and R¹⁸ are a hydrogen atom, a methyl group, or an alkyl group having 2 to 10 carbon atoms, or R¹⁴ and R¹⁵ are bonded to each other to form a double bond, and R¹², R¹³, and R¹⁸ are a hydrogen atom, a methyl group, or an alkyl group having 2 to 10 carbon atoms, or
R¹⁶ and R¹⁷ may be bonded to each other to form a 4- to 9-membered alicyclic hydrocarbon, wherein R¹⁴ and R¹⁵ are bonded to each other to form a double bond, and R¹², R¹³, and R¹⁸ are a hydrogen atom, a methyl group, or an alkyl group having 2 to 10 carbon atoms], and
a compound represented by Formula (15):
   [Chem 14]

   R¹R²R³Si-Y (15)

   [wherein
   R¹, R², and R³ each independently represent a hydrocarbon group that may include an oxygen atom or a nitrogen atom, or a hydrogen atom, and
   Y is a hydrocarbon group that may include at least one hetero atom selected from the group consisting of nitrogen, oxygen, and sulfur].

In Formula (14) and Formula (15), R¹ to R¹⁸, and a to g are as described with regard to the first silane compound represented by Formula (1).

In Formula (15), Y is a hydrocarbon group that may include at least one hetero atom selected from the group consisting of nitrogen, oxygen, and sulfur, preferably a hydrocarbon group with 1 to 30 carbon atoms, optionally including at least one hetero atom selected from the group consisting of nitrogen, oxygen, and sulfur, more preferably a hydrocarbon group with 1 to 20 carbon atoms, optionally including at least one hetero atom selected from the group consisting of nitrogen, oxygen, and sulfur, and still more preferably a hydrocarbon group with 1 to 10 carbon atoms, optionally including at least one hetero atom selected from the group consisting of nitrogen, oxygen, and sulfur. Especially, Y is particularly preferably a hydrocarbon group including sulfur. As the total number of atoms of carbon, nitrogen, oxygen or sulfur, the length of a straight-chain moiety joining the silyl group and the site bound to the alicyclic hydrocarbon moiety in such a hydrocarbon group is preferably set at 3 to 8, more preferably at 4 to 7, and still more preferably at 4 to 6.

In the production of the first silane compound represented by Formula (1), the first silane compound can be synthesized by subjecting the compound represented by Formula (14) and the compound represented by Formula (15) to an addition reaction or condensation reaction. As the addition reaction used herein, a radical addition reaction, a conjugate addition reaction, a nucleophilic addition reaction, an electrophilic addition reaction, and the like can be used, and, for example, a reaction similar to a pericyclic reaction, a hydrosilylation reaction, a hydroamination reaction, and the like can be used. For example, an esterification reaction, an amidation reaction, a thioesterification reaction, a thioamidation reaction, a Friedel-Crafts reaction, and the like can be used as the condensation reaction.

The compound represented by Formula (14) can be synthesized by a Diels-Alder reaction between identical or different conjugated diene compounds or a Diels-Alder reaction of a conjugated diene compound and an alkene compound on the basis of the knowledge already known to those skilled in the art. The compound represented by Formula (14) can be prepared by thermally denaturing and/or purifying the compound synthesized by the Diels-Alder reaction, as necessary.

The first silane compound represented by Formula (2), included in the silane coupling agent composition of the present invention, can be produced by performing a reaction of the compound represented by Formula (14) and a compound represented by Formula (16): 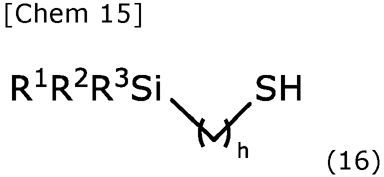 [wherein
R¹, R², and R³ each independently represent a hydrocarbon group that may include an oxygen atom or a nitrogen atom, or a hydrogen atom, and
h is an integer from 1 to 10].

In Formula (14) and Formula (16), R¹ to R¹⁸, and a to g are as described with regard to the first silane compound represented by Formula (1). In addition, h is as described with regard to the compound represented by Formula (2).

Examples of the compound represented by Formula (16) include an alkoxysilane compound having a mercapto group. Examples of the alkoxysilane compound having a mercapto group include mercaptotrimethoxysilane, mercaptotriethoxysilane, mercaptomethyltrimethoxysilane, mercaptomethyltriethoxysilane, mercaptomethyltripropoxysilane, 2-mercaptoethyltrimethoxysilane, 2-mercaptoethyltriethoxysilane, 3-mercaptopropyltrimethoxysilane, 4-mercaptobutyltrimethoxysilane, 3-mercaptopropyltriethoxysilane, 4-mercaptobutyltriethoxysilane, 2-mercaptoethyltripropoxysilane, 3-mercaptopropyltripropoxysilane, 4-mercaptobutyltripropoxysilane, 2-mercaptoethylmethyldimethoxysilane, 3-mercaptopropylmethyldimethoxysilane, 4-mercaptobutylmethyldimethoxysilane, 2-mercaptoethylmethyldiethoxysilane, 3-mercaptopropylmethyldiethoxysilane, and 4-mercaptobutylmethyldiethoxysilane.

### (Second Silane Compound)

A second silane compound is a compound represented by the following Formula (11): 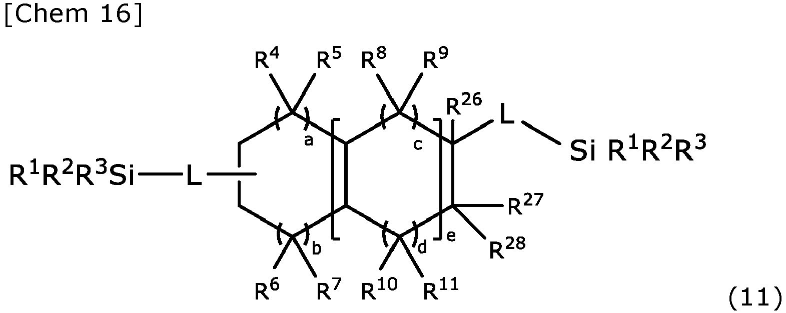 [wherein
R¹, R², and R³ each independently represent a hydrocarbon group that may include an oxygen atom or a nitrogen atom, or a hydrogen atom,
L is each independently a hydrocarbon group that may include at least one hetero atom selected from the group consisting of nitrogen, oxygen, and sulfur,
a is an integer 0 or 1,
b is an integer 0 or 1,
c is each independently an integer 0 or 1,
d is each independently an integer 0 or 1,
e is an integer from 0 to 5,
R⁴, R⁵, R⁶, and R⁷ represent a hydrogen atom, a methyl group, or an alkyl group having 2 to 10 carbon atoms, or one of R⁴ or R⁵ and R⁶ or R⁷ may form a crosslinked structure represented by -(CH₂)_{f}-,
f is an integer from 1 to 5,
R⁸, R⁹, R¹⁰, and R¹¹ represent a hydrogen atom, a methyl group, or an alkyl group having 2 to 10 carbon atoms, or one of R⁸ or R⁹ and R¹⁰ or R¹¹ may form a crosslinked structure represented by -(CH₂)_{g}-,
g is an integer from 1 to 5, and
R²⁶, R²⁷, and R²⁸ each independently represent a hydrogen atom, a methyl group, or an alkyl group having 2 to 10 carbon atoms].

In Formula (11), each preferred embodiment of R¹, R², R³, R⁴, R⁵, R⁶, R⁷, R⁸, R⁹, R¹⁰, and R¹¹ is as described with regard to Formula (1).

Each preferred embodiment of L is as described with regard to Formula (1).

Preferred aspects of a, b, c, d, and e are as described with regard to Formula (1).

R²⁶, R²⁷, and R²⁸ each independently represent a hydrogen atom, a methyl group, or an alkyl group having 2 to 10 carbon atoms, preferably a hydrogen atom.

The second silane compound in the silane coupling agent composition of the present invention is preferably a sulfur-containing silane compound.

The second silane compound represented by Formula (11), included in the silane coupling agent composition of the present invention, is preferably a compound represented by Formula (12): 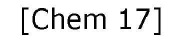 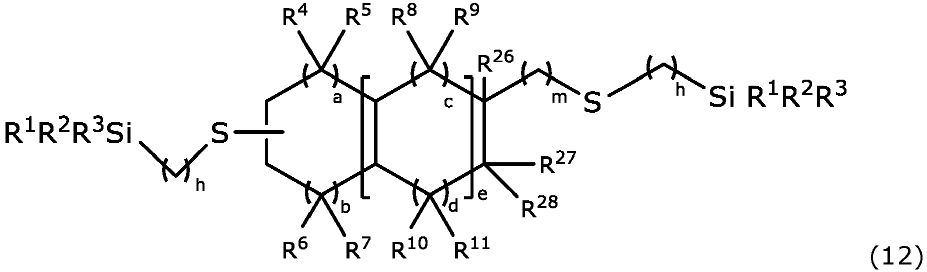 [wherein
R¹, R², and R³ each independently represent a hydrocarbon group that may include an oxygen atom or a nitrogen atom, or a hydrogen atom,
h is an integer from 1 to 10,
m is an integer from 1 to 10,
a is an integer 0 or 1,
b is an integer 0 or 1,
c is each independently an integer 0 or 1,
d is each independently an integer 0 or 1,
e is an integer from 0 to 5,
R⁴, R⁵, R⁶, and R⁷ represent a hydrogen atom, a methyl group, or an alkyl group having 2 to 10 carbon atoms, or one of R⁴ or R⁵ and R⁶ or R⁷ may form a crosslinked structure represented by -(CH₂)_{f}-,
f is an integer from 1 to 5,
R⁸, R⁹, R¹⁰, and R¹¹ represent a hydrogen atom, a methyl group, or an alkyl group having 2 to 10 carbon atoms, or one of R⁸ or R⁹ and R¹⁰ or R¹¹ may form a crosslinked structure represented by -(CH₂)_{g}-,
g is an integer from 1 to 5, and
R²⁶, R²⁷, and R²⁸ each independently represent a hydrogen atom, a methyl group, or an alkyl group having 2 to 10 carbon atoms].

In Formula (12), each preferred embodiment of R¹, R², R³, R⁴, R⁵, R⁶, R⁷, R⁸, R⁹, R¹⁰, R¹¹, R²⁶, R²⁷, and R²⁸ is as described with regard to Formula (11).

Each preferred embodiment of L is as described with regard to Formula (11).

Preferred aspects of a, b, c, d, and e are as described with regard to Formula (11).

A preferred embodiment of h is as described with regard to Formula (2).

In Formula (12), m is an integer from 1 to 10, and preferably an integer from 1 to 8, more preferably from 1 to 6, still more preferably from 1 to 4, and even more preferably from 1 to 3.

The second silane compound is still more preferably a compound represented by Formula (17): 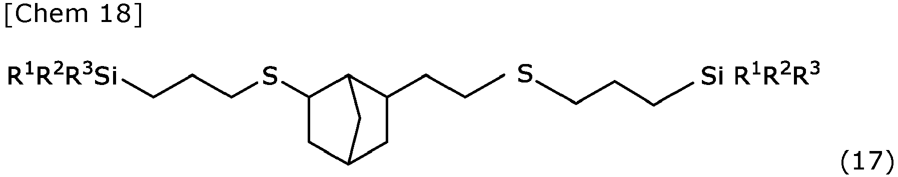 [wherein R¹, R², and R³ each independently represent a hydrocarbon group that may include an oxygen atom or a nitrogen atom, or a hydrogen atom], or
Formula (18): 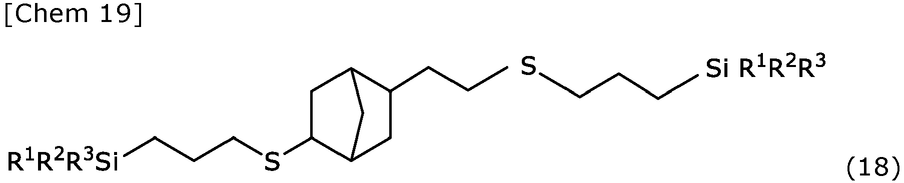 [wherein R¹, R², and R³ each independently represent a hydrocarbon group that may include an oxygen atom or a nitrogen atom, or a hydrogen atom].

In the compounds represented by Formulae (17) and (18), each of R¹, R², and R³ is as described with regard to Formula (11).

Other still more preferred aspects of the second silane compound include compounds represented by the following formulae. In the compounds represented by the following formulae, R¹ to R³ are as described with regard to Formula (1).

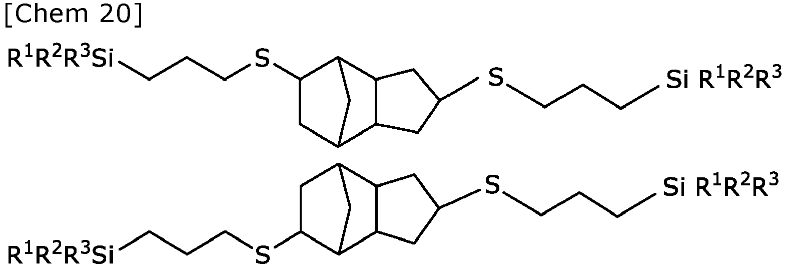

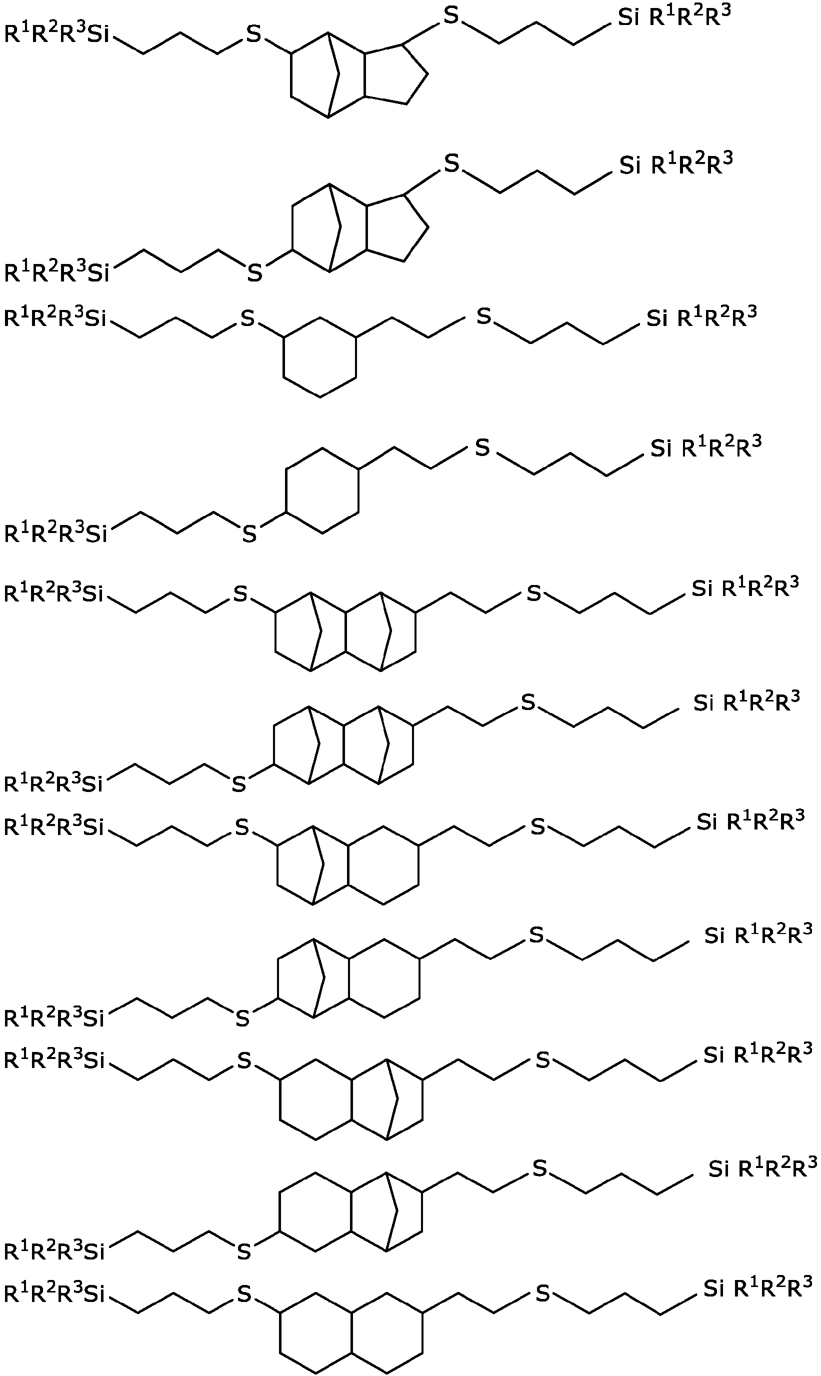

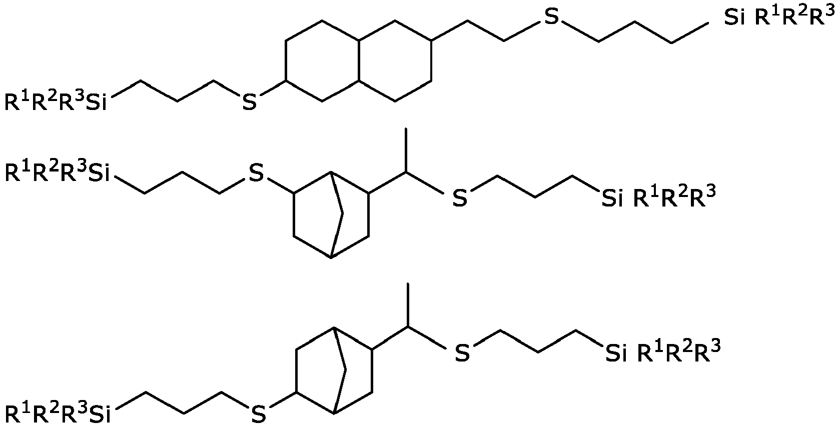

Even more preferred aspects of the second silane compound represent ed by Formula (11) include a silane compound in which the R¹R²R³Si group has the chemical structure of Formula (10). In particular, the second silane compound is further preferably a silane compound in which the R¹R² R³Si group is a triethoxysilyl group or a trimethoxysilyl group, and stil I further preferably a silane compound in which the R¹R²R³Si group is a triethoxysilyl group.

Particularly preferred embodiments of the second silane compound include compounds represented by the following formulae:

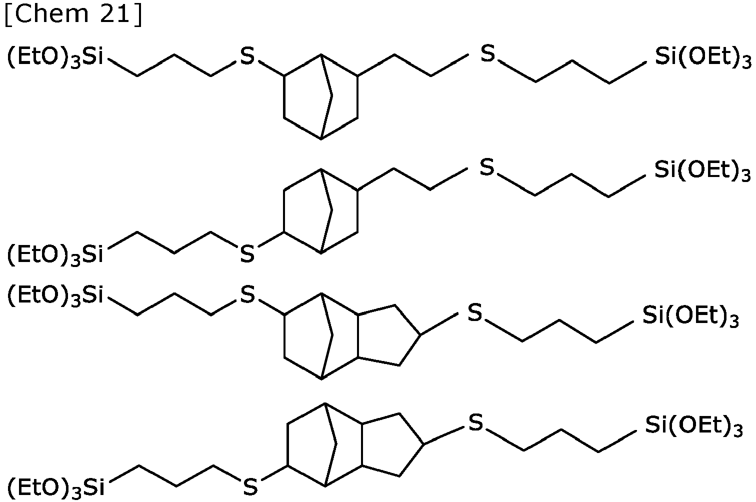

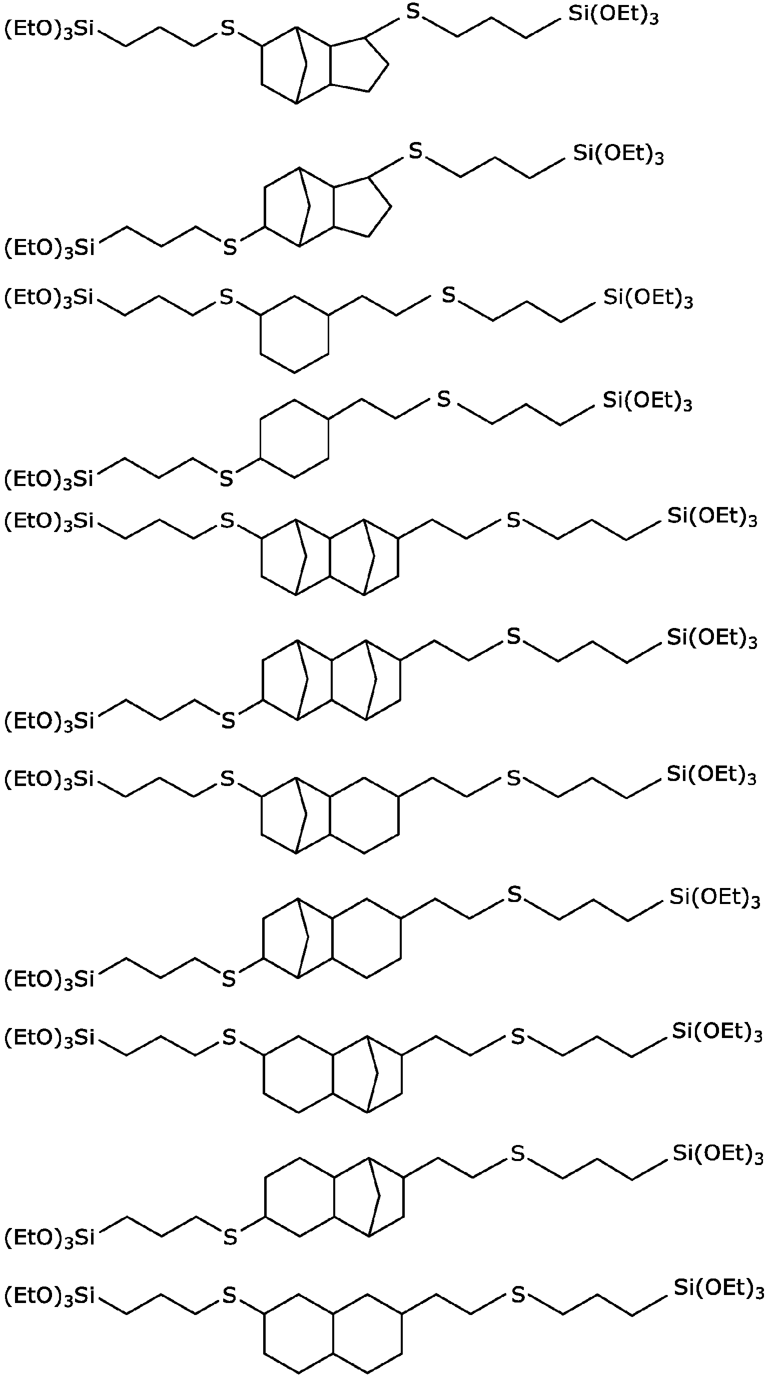

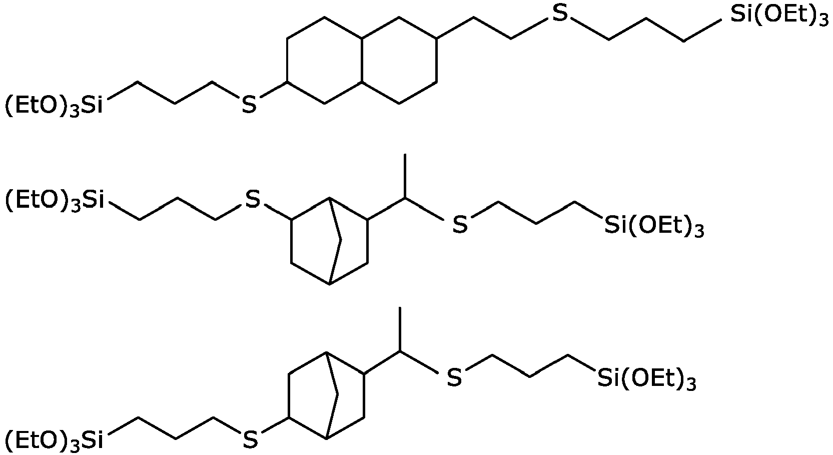

The second silane compound is preferably a stereoisomer thereof, or any mixture of such stereoisomers.

### (Method of Producing Second Silane Compound)

One embodiment of a method of producing the second silane compound represented by Formula (11) is described but is not limited to the following production method. For example, the second silane compound can be produced by performing a reaction of a compound represented by the following Formula (14): 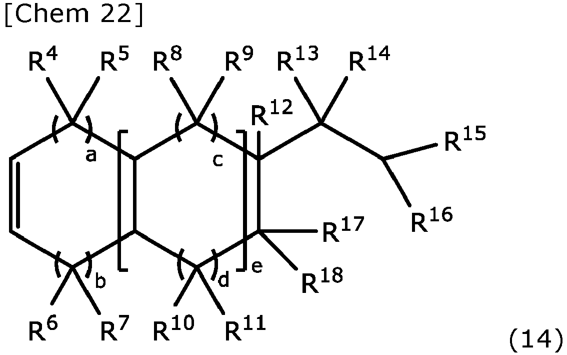 [wherein
a is an integer 0 or 1,
b is an integer 0 or 1,
c is each independently an integer 0 or 1,
d is each independently an integer 0 or 1,
e is an integer from 0 to 5,
R⁴, R⁵, R⁶, and R⁷ represent a hydrogen atom, a methyl group, or an alkyl group having 2 to 10 carbon atoms, or one of R⁴ or R⁵ and R⁶ or R⁷ may form a crosslinked structure represented by -(CH₂)_{f}-,
f is an integer from 1 to 5,
R⁸, R⁹, R¹⁰, and R¹¹ represent a hydrogen atom, a methyl group, or an alkyl group having 2 to 10 carbon atoms, or one of R⁸ or R⁹ and R¹⁰ or R¹¹ may form a crosslinked structure represented by -(CH₂)_{g}-,
g is an integer from 1 to 5, and
R¹², R¹³, R¹⁴, R¹⁵, R¹⁶, R¹⁷, and R¹⁸ each independently represent a hydrogen atom, a methyl group, or an alkyl group having 2 to 10 carbon atoms, wherein R¹² and R¹³ are bonded to each other to form a double bond, or R¹⁴ and R¹⁵ are bonded to each other to form a double bond, and R¹⁶ and R¹⁷ may be bonded to each other to form a 4- to 9-membered alicyclic hydrocarbon], and
the compound represented by Formula (15). Preferred embodiments of Formulae (14) and (15) are as described with regard to the first silane compound.

In the production of the second silane compound, the second silane compound can be synthesized by subjecting the compound represented by Formula (14) and the compound represented by Formula (15) to an addition reaction or condensation reaction. As the addition reaction used herein, a radical addition reaction, a conjugate addition reaction, a nucleophilic addition reaction, an electrophilic addition reaction, and the like can be used, and, for example, a reaction similar to a pericyclic reaction, a hydrosilylation reaction, a hydroamination reaction, and the like can be used. For example, an esterification reaction, an amidation reaction, a thioesterification reaction, a thioamidation reaction, a Friedel-Crafts reaction, and the like can be used as the condensation reaction.

The compound represented by Formula (14) can be synthesized by a Diels-Alder reaction between identical or different conjugated diene compounds or a Diels-Alder reaction of a conjugated diene compound and an alkene compound on the basis of the knowledge already known to those skilled in the art. The compound represented by Formula (14) can be prepared by thermally denaturing and/or purifying the compound synthesized by the Diels-Alder reaction, as necessary.

The second silane compound can be producing by performing a reaction of the compound represented by Formula (14) and the compound represented by Formula (16). A preferred embodiment of Formula (16) is as described with regard to the first silane compound.

### (Third Silane Compound)

A third silane compound is represented by the following Formula (19): 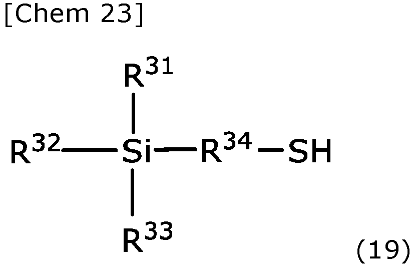 [wherein
at least one or all of R³¹, R³², and R³³ are -O-(R³⁵-O)ₘ-R³⁶ (R³⁵ is a divalent hydrocarbon group having 1 to 30 carbon atoms, R³⁶ is an alkyl group having 1 to 30 carbon atoms, an alkenyl group having 2 to 30 carbon atoms, an aryl group having 6 to 30 carbon atoms, or an aralkyl group having 7 to 30 carbon atoms, m is an integer from 1 to 30, and in a case in which R³⁵ is plural, the plurality of R³⁵ may the same or different),
in a case in which one or two of R³¹, R³², and R³³ are the -O-(R³⁵-O)ₘ-R³⁶, the remaining groups can be an alkyl group having 1 to 12 carbon atoms, -O-R³⁷ (R³⁷ is a hydrogen atom, an alkyl group having 1 to 30 carbon atoms, an alkenyl group having 2 to 30 carbon atoms, an aryl group having 6 to 30 carbon atoms, or an aralkyl group having 7 to 30 carbon atoms), a hydrogen atom, or an aryl group having 6 to 30 carbon atoms,
R³¹, R³², and R³³ may be the same or different, and
R³⁴ is a divalent hydrocarbon group having 1 to 30 carbon atoms].

In Formula (19), examples of the divalent hydrocarbon groups with 1 to 30 carbon atoms, represented by R³⁴ and R³⁵ include: an aliphatic hydrocarbon group such as an alkylene group (for example, methylene group, dimethylene group, or trimethylene group); an aromatic hydrocarbon group; and combinations thereof.

Examples of alkyl groups with 1 to 30 carbon atoms, alkenyl groups with 2 to 30 carbon atoms, aryl groups with 6 to 30 carbon atoms, and aralkyl groups with 7 to 30 carbon atoms, represented by R³⁶ and R³⁷, include: alkyl groups such as a methyl group and ethyl group; alkenyl groups such as vinyl group and allyl group; aryl groups such as phenyl group and tolyl group; and aralkyl groups such as benzyl group and phenethyl group.

It is preferable that m is an integer from 1 to 20, more preferably an integer from 2 to 15, and still more preferably from 3 to 10.

In a case in which one or two of R³¹, R³², and R³³ are the -O-(R³⁵-O)ₘ-R³⁶, examples of the alkyl group having 1 to 12 carbon atoms and the aryl group having 6 to 30 carbon atoms as the remaining groups include: alkyl groups such as methyl group and ethyl group; and aryl groups such as a phenyl group and tolyl group.

In a preferred aspect of Formula (19), two of R³¹, R³², and R³³ are -O-(C₂H₄-O)ₙ-C₁₃H₂₇, the remainder is -O-C₂H₅, the average number of n is 5, and R³⁴ is a trimethylene group. Examples of such compounds represented by Formula (19) include the trade name "Si 363" from Degussa AG.

### (Fourth Silane Compound)

A fourth silane compound is represented by the following Formula (24) : 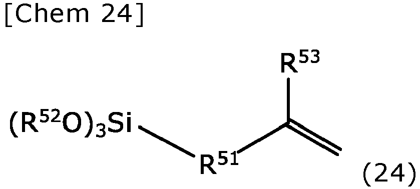
R⁵¹ is a divalent hydrocarbon group having 1 to 18 carbon atoms or -R⁵⁴-O-C(=O)- (wherein R⁵⁴ is a divalent hydrocarbon group having 1 to 18 carbon atoms),
R⁵² is an alkyl group having 1 to 6 carbon atoms, and
R⁵³ is an alkyl group having 1 to 6 carbon atoms].

In Formula (24), the divalent hydrocarbon group represented by R⁵¹ or R⁵⁴ has 1 to 18 carbon atoms, preferably 1 to 12 carbon atoms, preferably 1 to 10 carbon atoms, more preferably 1 to 8 carbon atoms. The divalent hydrocarbon group may have a substituent and may be linear, branched, or cyclic. Examples of such divalent hydrocarbon groups include: aliphatic hydrocarbon groups such as alkylene groups (for example, methylene group, dimethylene group, and trimethylene group); and aromatic hydrocarbon groups.

The alkyl group represented by R⁵² or R⁵³ has 1 to 6 carbon atoms, preferably 1 to 4 carbon atoms. Examples of such alkyl groups include methyl, ethyl, propyl, and butyl groups.

### (Other Silane Compound)

The silane coupling agent composition of the present invention may further includes an additional silane compound (which may also be referred to as "other silane compound" in the present specification) other than the first to third silane compounds described above. When a rubber composition including the silane coupling agent composition of the present invention is subjected to a vulcanization reaction, the other silane compound is also incorporated into the vulcanization reaction, and therefore, the first to third silane compounds functioning as silane coupling agents, and the other silane compound react with each other. This reaction is considered to result in a synergistic effect of increasing coupling efficiency. In the rubber composition of the present invention, the other silane compound is preferably a sulfur-containing silane compound other than the first to third silane compounds.

As the other silane compound, for example, a compound represented by Formula (13): 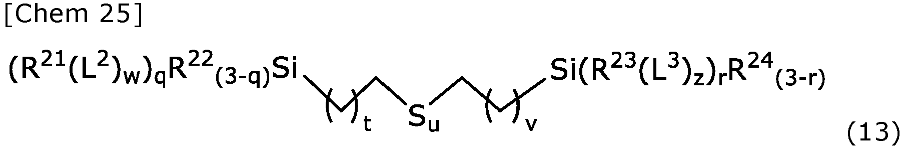 [wherein
t and v are each independently an integer from 0 to 10,
u is an integer from 2 to 10,
q and r are each independently an integer from 1 to 3,
w and z are each independently an integer 0 or 1,
L² and L³ are each independently a hydrocarbon group that may include at least one hetero atom selected from the group consisting of nitrogen, oxygen, and sulfur,
R²¹ and R²³ are each independently an alkoxy group or an amino group substituted with one or more alkyl groups, and
R²² and R²⁴ are each independently a hydrogen atom or an alkyl group]
can be used.

In Formula (13), t and v are each independently an integer from 0 to 10, preferably an integer from 0 to 5, more preferably an integer from 1 to 3, and still more preferably 2.

Moreover, u is an integer from 2 to 10, more preferably an integer from 2 to 8.

Moreover, q and r are each independently an integer from 1 to 3, preferably an integer from 2 to 3, and more preferably 3.

Moreover, w and z are each independently an integer 0 or 1, preferably 0.

L² and L³ are each independently a hydrocarbon group optionally including at least one hetero atom selected from the group consisting of nitrogen, oxygen, and sulfur, preferably a hydrocarbon group with 1 to 30 carbon atoms, optionally including at least one hetero atom selected from the group consisting of nitrogen, oxygen, and sulfur, more preferably a hydrocarbon group with 1 to 20 carbon atoms, optionally including at least one hetero atom selected from the group consisting of nitrogen, oxygen, and sulfur, and still more preferably a hydrocarbon group with 1 to 10 carbon atoms, optionally including at least one hetero atom selected from the group consisting of nitrogen, oxygen, and sulfur.

R²¹ and R²³ are each independently a hydrolyzable group, which is an alkoxy group, more preferably an alkoxy group having 1 to 30 carbon atoms, still more preferably an alkoxy group having 1 to 20 carbon atoms, or an amino group substituted with one or more alkyl groups, more preferably an amino group substituted with one or more alkyl groups having 1 to 30 carbon atoms, and more preferably an amino group substituted with one or more alkyl groups having 1 to 20 carbon atoms. Specific examples of the alkoxy group include a methoxy group, an ethoxy group, a propoxy group, an isopropoxy group, a butoxy group, and an isobutoxy group, among which a methoxy group or an ethoxy group is preferred. Examples of the amino group substituted with one or more alkyl groups include an N-methylamino group, an N,N-dimethylamino group, an N-ethylamino group, an N,N-diethylamino group, and an N-isopropylamino group, among which an N-methylamino group or an N-ethylamino group is preferred. An alkoxy group and an amino group may be bound to silicon (Si) through a linking group including a hydrocarbon group that may include at least one hetero atom selected from the group consisting of nitrogen, oxygen, and sulfur.

R²² and R²⁴ are each independently a hydrogen atom or an alkyl group, more preferably an alkyl group having 1 to 30 carbon atoms, and still more preferably an alkyl group having 1 to 20 carbon atoms. Specific examples thereof include a methyl group, an ethyl group, a propyl group, an isopropyl group, a butyl group, an isobutyl group, a tert-butyl group, a pentyl group, a cyclopentyl group, a hexyl group, and a cyclohexyl group, among which a methyl group and an ethyl group are preferred.

Of such compounds represented by Formula (13), commercially available bis[3-(triethoxysilyl)propyl]tetrasulfide may be used. Examples thereof include Si-69 manufactured by Evonik Industries AG. Also, commercially available bis[3-(triethoxysilyl)propyl]disulfide may be used. Examples thereof include Si-75 manufactured by Evonik Industries AG.

In addition to the compounds represented by Formula (13), such compounds represented by Formula (16), particularly silane compounds having such structures as described below can be used as such other silane compounds.

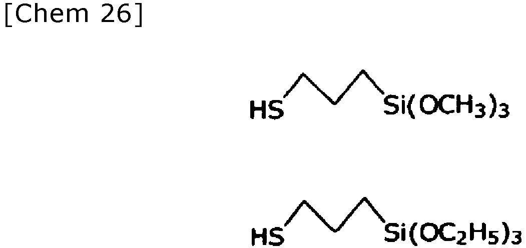

As the other silane compound, for example, a compound represented by the following Formula (20): 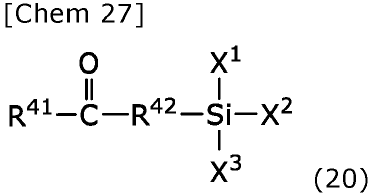 [wherein
R⁴¹ is a hydrogen atom or a monovalent hydrocarbon group including up to 18 carbon atoms,
R⁴² is a divalent hydrocarbon group including up to 12 carbon atoms,
X¹ is selected from the group consisting of R⁴³O- and R⁴³C(=O)O-(wherein R⁴³ is a hydrogen atom or a monovalent hydrocarbon group including up to 18 carbon atoms, or a monovalent hydrocarbon group including up to 18 carbon atoms at least one oxygen atom), and
each of X² and X³ is independently selected from the group consisting of the elements listed for R⁴⁴ and X¹ (wherein R⁴⁴ is a monovalent hydrocarbon group having up to 6 carbon atoms)]
can be used.

In Formula (20), typical, non-limiting examples of R⁴¹ include hydrogen, methyl, ethyl, propyl, isopropyl, butyl, hexyl, 2-ethylhexyl, octyl, decyl, octadecyl, cyclohexyl, phenyl, benzyl, and phenethyl.

In Formula (20), typical, non-limiting examples of R⁴² include methylene, ethylene, propylene, isopropylene, butylene, hexylene, octylene, decylene, cyclohexylene, and phenylene.

In Formula (20), typical, non-limiting examples of R⁴³ include hydrogen, methyl, ethyl, propyl, isopropyl, butyl, hexyl, 2-ethylhexyl, octyl, decyl, octadecyl, cyclohexyl, phenyl, benzyl, phenethyl, 3-oxabutyl, and 4,7-dioxaoctyl.

In Formula (20), typical, non-limiting examples of R⁴⁴ include hydrogen, methyl, ethyl, propyl, isopropyl, butyl, and phenyl.

In Formula (20), typical, non-limiting examples of X¹ include methoxy, ethoxy, propoxy, isopropoxy, butoxy, phenoxy, benzyloxy, hydroxy, and acetoxy. Typical examples of X² and X³ include the typical examples of X¹, described above, as well as methyl, ethyl, propyl, isopropyl, sec-butyl, phenyl, vinyl, and cyclohexyl.

In yet another embodiment of the present invention, R⁴¹ is an alkyl group including 5 to 9 carbon atoms and is bound to a carbonyl group through a primary carbon atom, R⁴² is methylene, ethylene, or propylene, X¹ is methoxy, ethoxy, or propoxy, and X² and X³ individually include the typical examples of X¹ and methyl.

Examples of the silane compound represented by Formula (20) include triethoxysilylmethylthioformate, 2-triethoxysilylethylthioacetate, 3-triethoxysilylpropylthiopropanoate, 3-triethoxysilylpropylthiohexanoate, 3-octanoylthio-1-propyltriethoxysilane(3-triethoxysilylpropylthiooctanoate), 3-diethoxymethylsilylpropylthiooctanoate, 3-ethoxydimethylsilylpropylthiooctanoate, 3-triethoxysilylpropylthiododecanoate, 3-triethoxysilylpropylthiooctadodecanoate, 3-trimethoxysilylpropylthiooctanoate, 3-triacetoxysilylpropylthioacetate, 3-dipropoxymethylsilylpropylthiopropanoate, and 4-oxa-hexyloxydimethylsilylpropylthiooctanoate. Of these, 3-octanoylthio-1-propyltriethoxysilane(3-triethoxysilylpropylthiooctanoate), 3-diethoxymethylsilylpropylthiooctanoate, and 3-ethoxydimethylsilylpropylthiooctanoate are preferred, and 3-octanoylthio-1-propyltriethoxysilane(3-triethoxysilylpropylthiooctanoate) is more preferred.

Commercially available compounds may be used as the compound represented by Formula (20). Examples of (3-octanoylthio-1-propyltriethoxysilane(3-triethoxysilylpropylthiooctanoate)) which is a compound represented by the following Formula (21): 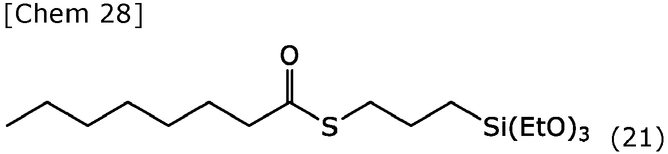 include NXT Silanes (trade name) manufactured by Momentive Performance Materials Inc.

As the other silane compound, a condensate of the silane compound represented by Formula (20) can be used instead of the silane compound represented by Formula (20) or together with the silane compound represented by Formula (20). The condensate of the silane compound represented by Formula (20) can be prepared as a single condensate or a co-condensate by partially hydrolyzing a silyl group and then polycondensing the silyl group with the silyl group of another molecule with ethanol removal or dehydration, in the presence of the silane compound represented by Formula (20) alone or together with a compound represented by Formula (22): 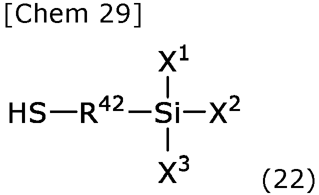 [wherein R⁴², X¹, X², and X³ are as defined with regard to Formula (20)]. However, occurrence of polycondensation requires that at least two or more of X¹, X², and X³ are R⁴³O- or R⁴³C(=O)O-. R⁴³ is as defined with regard to Formula (20).

The condensate of the silane compound described above is, for example, a condensate represented by the following Formula (23): 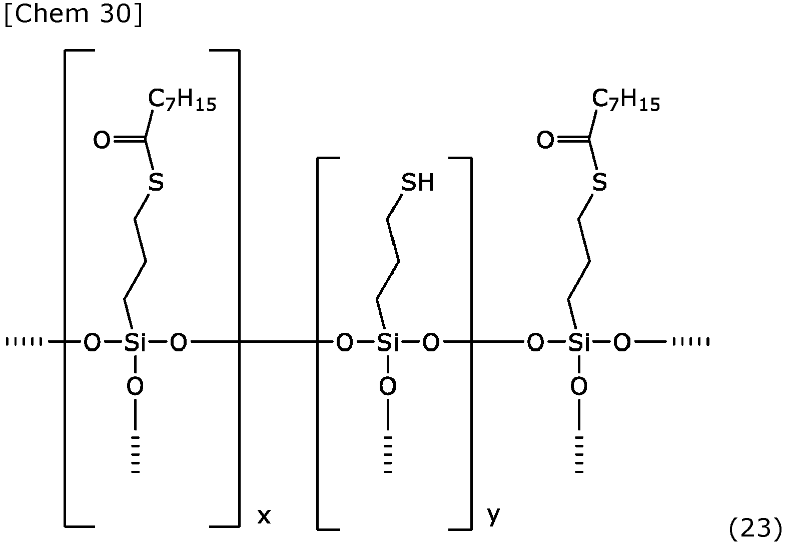 [wherein x: y is 1:99 to 99:1]. Commercially available condensates may be used as such condensates. Examples thereof include NXT Z45 Silanes (trade name) manufactured by Momentive Performance Materials Inc.

The content of the other silane compound in the silane coupling agent composition of the present invention is preferably 0.1 to 0.9, still more preferably 0.2 to 0.8, by mass ratio with respect to the total content of the first to third silane compounds and the other silane compound.

### (Silanization Reaction Accelerator)

A silanization reaction accelerator can be used in the silane coupling agent composition of the present invention. Any silanization reaction accelerator may be used as long as the silanization reaction accelerator accelerates the silanization reaction between silica and the silane coupling agent (the silane compound described above). Examples of such silanization reaction accelerators include: carbamide compounds such as urea derivatives and thiourea; guanidine compounds such as guanidine hydrochloride, guanidinium thiocyanate, guanidine, and diphenyl guanidine; other nitrogen-containing compounds (excluding carbamide compounds and guanidine compounds such as hexamethylenetetramine, ammonia, hydantoin, cyanuric acid, melamine, quinuclidine, ethylene diamine, and 1,4-diazabicyclo[2.2.2]octane; and paraformaldehyde. Any one kind of these silanization reaction accelerators may be used, or two or more kinds thereof may be used in combination. Examples of the urea derivatives include urea, methylurea, ectylurea, propylurea, butylurea, pentylurea, hexylurea, cyclohexylurea, N,N'-dimethylurea, N,N'-diethylurea, N,N,N',N'-tetramethylurea, N,N-dimethyl-N',N'-diphenylurea, diethylurea, dipropylurea, dibutylurea, dipentylurea, dihexylurea, ethylene urea, and salts thereof. Of these, urea, guanidine hydrochloride, diphenyl guanidine, hexamethylenetetramine, ammonia, ethylene urea, hydantoin, cyanuric acid, melamine, paraformaldehyde, and the like are excellent.

The first-stage reaction of the silanization reaction between silica and a silane coupling agent includes two reaction processes: in which the alkoxy groups of the silane coupling agent and the silanol groups on the silica surface react directly (dealcoholization condensation); and in which the alkoxy groups of the silane coupling agent are hydrolyzed and then undergo dehydration condensation with the silanol groups on the silica surface. Subsequently, in the second-stage reaction of the silanization reaction, a condensation reaction occurs between adjacent silane coupling agents chemically bonded to the silica surface. It is considered that the hydrolysis of the silane coupling agent in the first-stage reaction is reaction-controlled, but the presence of a silanization reaction accelerator such as a urea derivative results in an increase in hydrolysis reaction rate to accelerate the silanization reaction.

### [Rubber Composition]

The rubber composition of the present invention is characterized by including the silane coupling agent composition of the present invention, a diene rubber, and silica. The rubber composition of the present invention is excellent in characteristics such as scorch resistance, and the like, and therefore has favorable processability. In addition, a crosslinking substance excellent in various characteristics such as viscoelastic characteristics can be obtained by using the rubber composition of the present invention. Such a rubber composition can be preferably used for tires. Each component of the rubber compositions is described in detail below. The silane coupling agent composition is as described in detail above.

The content of the silane compound in the rubber composition is preferably 0.5 to 30 parts by mass, more preferably 1 to 20 parts by mass, and still more preferably 2 to 15 parts by mass with respect to 100 parts by mass of silica. When the total content of the silane compounds is within the numerical range described above, it is possible to improve the viscoelastic characteristics of the crosslinking substance of the rubber compositions and to obtain a tire having an excellent balance between wet grip properties and fuel economy. In particular, the total content of the first to third silane compounds in the rubber composition is preferably within the numerical range described above. The content of the other silane compound in the rubber composition is preferably 0.01 to 20 parts by mass, more preferably 0.05 to 10 parts by mass, with respect to 100 parts by mass of silica.

The content of the silanization reaction accelerator in the rubber compositions varies depending on the kind of the silanization reaction accelerator, but may be any amount as long as the content results in acceleration of the silanization reaction. The content of the silanization reaction accelerator in the rubber composition is preferably 0.01 to 10 parts by mass, more preferably 0.1 to 5 parts by mass, and still more preferably 0.2 to 3.0 parts by mass with respect to 100 parts by mass of the diene rubber. When two or more silanization reaction accelerators are included, the total content thereof is preferably within the numerical range described above. If the content of the silanization reaction accelerator is within the numerical range described above, the various characteristics of the rubber composition and/or a crosslinking substance thereof can be improved. For example, when a carbamide compound such as urea is used as the silanization reaction accelerator, the content thereof may be preferably 0.01 to 10 parts by mass, more preferably 0.05 to 5 parts by mass, and still more preferably 0.1 to 3 parts by mass with respect to 100 parts by mass of the diene rubber. For example, when a guanidine compound such as guanidine hydrochloride is used as the silanization reaction accelerator, the content thereof may be preferably 0.01 to 10 parts by mass, more preferably 0.05 to 5 parts by mass, and still more preferably 0.1 to 3 parts by mass with respect to 100 parts by mass of the diene rubber. In particular, use of a guanidine compound in combination with a carbamide compound results in a remarkable effect. In this case, the ratio of the content of the guanidine compound to the content of the carbamide compound (guanidine compound/carbamide compound) is preferably 0.01 to 3, more preferably 0.05 to 2, and still more preferably 0.1 to 1.

### (Diene Rubber)

The diene rubber included in the rubber composition of the present invention includes an isoprene rubber and other diene rubbers. Examples of such isoprene rubbers include natural rubber (NR), deproteinized natural rubber, and synthetic isoprene rubber. The deproteinized natural rubber is natural rubber subjected to deproteinization treatment, and includes protein that is not completely removed although the protein content thereof is lower than that of usual natural rubber. Natural rubber or deproteinized natural rubber includes impurities (proteins, phospholipids, and/or the like) derived from the natural rubber. There has been a problem in that such impurities inhibit a coupling reaction of a silane coupling agent, and an inorganic material such as blended silica is insufficiently dispersed in a rubber composition. In the present invention, a silane coupling agent composition is blended with a silanization reaction accelerator when natural rubber and/or synthetic isoprene rubber are used as diene rubbers in order to solve such a problem. Examples of natural rubbers include natural rubber latex, technical grade rubber (TSR), smoked sheet (RSS), gutta-percha, *Eucommia eucommia-derived* natural rubber, guayule-derived natural rubber, Russian dandelion-derived natural rubber, and plant component fermented rubber. Examples of natural rubbers also include modified natural rubbers, such as epoxidized natural rubber, methacrylic acid-modified natural rubber, styrene-modified natural rubber, sulfonic acid-modified natural rubber, and zinc sulfonate-modified natural rubber, obtained by modifying these natural rubbers. The ratio of cis/trans/vinyl in the double bond of natural rubber is not particularly limited, and any ratio can be preferably used. Examples of synthetic isoprene rubbers include copolymers of cis-1,4 isoprene, trans-1,4-isoprene, and 3,4-isoprene (so-called isoprene rubber (IR)). In addition, examples of those having a part of the structure of the synthetic isoprene rubber include isoprene-butadiene rubber and halogenated isoprene rubber. In the present invention, isoprene rubber (IR) is preferably used as the diene rubber, and synthetic isoprene rubber including 75% or more of the cis-1,4 isoprene structure is still more preferably used as the diene rubber. The number average molecular weight and molecular weight distribution of the diene rubber are not the particularly limited, but it is preferable that the number average molecular weight is 500 to 3000000, and the molecular weight distribution is 1.5 to 15.

Examples of other diene rubbers include butadiene rubber, styrene-butadiene rubber, styrene-isoprene-butadiene rubber, styrene-isoprene rubber, partially hydrogenated styrene-butadiene rubber, styrene-α-methylstyrene-butadiene rubber, and ethylene-propylene-diene rubber.

A method of producing diene rubber is not particularly limited, and examples thereof include emulsion polymerization, solution polymerization, radical polymerization, anionic polymerization, and cationic polymerization. In addition, a glass transition point is not particularly limited.

The content of the diene rubber is preferably 20 to 80% by mass, more preferably 25 to 75% by mass, and still more preferably 30 to 70% by mass with respect to the total solid mass of the rubber composition.

### (Inorganic Material)

Examples of an inorganic material included in the rubber composition of the present invention include silica, carbon black, calcium carbonate, titanium oxide, clay, and talc, which can be used singly or in combination. Of these, at least silica is used in the present invention because mechanical characteristics and heat resistance can be further improved. The amount of the added inorganic material is preferably 0.1 to 500 parts by mass, more preferably 1 to 300 parts by mass, with respect to 100 parts by mass of the diene rubber.

Silica is not particularly limited, and examples thereof include dry-process silica, wet-process silica, colloidal silica, and precipitated silica. Of these, wet-process silica containing hydrous silicate as the main component is preferred. These silicas may be used singly, or in combination of two or more kinds thereof. The specific surface area of each of these silicas is not particularly limited; however, improvements in reinforcing properties, abrasion resistance, and heat generation properties, and the like are sufficiently achieved when the nitrogen adsorption-specific surface area (the BET method) is in a range of usually 10 to 400 m²/g, preferably 20 to 300 m²/g, and still more preferably 120 to 190 m²/g, which is preferred. The nitrogen adsorption-specific surface area is a value measured by the BET method according to ASTM D3037-81. The amount of the added silica is preferably 1 to 300 parts by mass, more preferably 5 to 200 parts by mass, and still more preferably 10 to 150 parts by mass with respect to 100 parts by mass of the diene rubber.

Carbon black is appropriately selected and used depending on the application. Commonly, carbon black is classified into hard carbon and soft carbon on the basis of the particle diameter. Soft carbon has low reinforcing properties for rubber, while hard carbon has high reinforcing properties for rubber. In particular, hard carbon having high reinforcing properties is preferably used in the rubber composition of the present invention. The amount of the added carbon black is preferably 1 to 300 parts by mass, more preferably 5 to 200 parts by mass, and still more preferably 10 to 150 parts by mass with respect to 100 parts by mass of the diene rubber. The carbon black may be added to the rubber composition or the silane coupling agent composition.

### (Other Processing Aid)

The rubber composition of the present invention may include another processing aid such as a vulcanizing agent such as sulfur, a vulcanization accelerator, a vulcanization acceleration aid, an anti-aging agent, a coloring agent, a softener, various oils, an antioxidant, a filler, or a plastic material without departing from the gist of the present invention.

Examples of the vulcanizing agent include: sulfur-based vulcanizing agents such as powdered sulfur, precipitated sulfur, highly dispersible sulfur, surface-treated sulfur, insoluble sulfur, dimorpholine disulfide, and alkyl phenol disulfide; zinc oxide, magnesium oxide, litharge, p-quinonedioxam, p-dibenzoylquinonedioxime, tetrachloro-p-benzoquinone, poly-p-dinitrobenzene, methylenedianiline, phenol resin, brominated alkylphenol resin, and chlorinated alkylphenol resin. The amount of the added vulcanizing agent is preferably 0.1 to 10 parts by mass, more preferably 0.5 to 5 parts by mass, with respect to 100 parts by mass of the diene rubber.

Examples of the vulcanization accelerator include: thiuram-based vulcanization accelerators such as tetramethylthiuram disulfide (TMTD), tetraethylthiuram disulfide (TETD), and tetramethylthiuram monosulfide (TMTM); aldehyde ammonia-based vulcanization accelerators such as hexamethylenetetramine; guanidine-based vulcanization accelerators such as diphenylguanidine; thiazole-based vulcanization accelerators such as 2-mercaptobenzothiazole (MBT) and dibenzothiazyl disulfide (DM); sulfenamide-based vulcanization accelerators such as N-cyclohexyl-2-benzothiazylsulfenamide (CBS) and N-t-butyl-2-benzothiazylsulfenamide (BBS); and dithiocarbamate-based vulcanization accelerators such as zinc dimethyldithiocarbamate (ZnPDC). The amount of the added vulcanization accelerator is preferably 0.01 to 10 parts by mass, more preferably 0.1 to 5 parts by mass, with respect to 100 parts by mass of the diene rubber.

Examples of the vulcanization acceleration aid include: fatty acids such as acetylic acid, propionic acid, butanoic acid, stearic acid, acrylic acid, and maleic acid; fatty acid zincs such as zinc acetylate, zinc propionate, zinc butanoate, zinc stearate, zinc acrylate, and zinc maleate; and zinc oxides. The amount of the added vulcanization acceleration aid is preferably 0.01 to 10 parts by mass, more preferably 0.1 to 5 parts by mass, with respect to 100 parts by mass of the diene rubber.

Examples of the anti-aging agent include hindered phenol-based compounds and aliphatic and aromatic hindered amine-based compounds. The amount of the added anti-aging agent is preferably 0.01 to 10 parts by mass, more preferably 0.1 to 5 parts by mass, with respect to 100 parts by mass of the diene rubber.

Examples of the antioxidant include butylated hydroxytoluene (BHT) and butylated hydroxyanisole (BHA). The amount of the added antioxidant is preferably 0.1 to 10 parts by mass, more preferably 0.5 to 5 parts by mass, with respect to 100 parts by mass of the diene rubber.

Examples of the coloring agent include: inorganic pigments such as titanium dioxide, zinc oxide, ultramarine blue, iron red, lithopone, lead, cadmium, iron, cobalt, aluminum, hydrochloride, and sulfate; azo pigments; and copper phthalocyanine pigments. The amount of the added coloring agent is preferably 0.1 to 10 parts by mass, more preferably 0.5 to 5 parts by mass, with respect to 100 parts by mass of the diene rubber.

In the present invention, the other processing aid can be used as a rubber composition by kneading the other processing aid with a known kneading machine for rubber, for example, a roll, a Banbury mixer, a kneader, or the like, and vulcanizing the resultant under optional conditions. The amount of the other added processing aid can be set at a conventional common additive amount without departing from the gist of the present invention.

### [Method of Producing Rubber Composition]

A method of producing the rubber composition of the present invention includes a step of kneading the silane coupling agent, the diene rubber, and the inorganic material described above. The method of producing the rubber composition of the present invention preferably includes a step of kneading the silane coupling agent, the diene rubber, the inorganic material, and the vulcanization acceleration aid described above.

The method of producing the rubber composition of the present invention preferably further includes a step of kneading the vulcanizing agent described above. More preferably, the method may further include a step of kneading the vulcanizing agent and the vulcanization accelerator described above.

In each of the steps described above, the rubber composition can be appropriately blended with the above-described additional processing aid without departing from the gist of the present invention.

In the production of the rubber compositions, a conventionally known kneading apparatus can be used, and a kneading temperature, time, order of blending, and the like can be appropriately selected.

### [Crosslinking Substance of Rubber Composition]

A crosslinking substance of the rubber composition can be produced using the rubber composition of the present invention according to a conventionally known method and common general technical knowledge widely known to those skilled in the art. For example, crosslinks can be formed to produce the crosslinking substance by extruding the rubber composition, then molding the extruded rubber composition using a molding machine, and then heating and pressurizing the resultant using a vulcanizer.

### [Tire]

The tire of the present invention includes a crosslinking substance of the rubber composition of the present invention. The tire of the present invention can be produced using the rubber composition described above according to a conventionally known method and common general technical knowledge widely known to those skilled in the art. For example, a crosslink can be formed to produce the tire by extruding the rubber composition, then molding the extruded rubber composition using a tire molding machine, and then heating and pressurizing the resultant using a vulcanizer. Wet grip properties and fuel economy in tire performance can be improved in a well-balanced manner by producing the tires using the rubber composition of the present invention.

Applications of the tire are not particularly limited, and examples thereof include passenger tires, high-load tires, motorcycle (motorbike) tires, and studless tires.

The shape, structure, size, and material of the tire are not particularly limited, and can be appropriately selected according to the purpose. In addition, the rubber composition can be applied to each part of the tire. The part of the tire, to which the composition is applied, is not particularly limited. The tread, carcass, side wall, inner liner, undertread, belt portion, and the like of the tire can be appropriately selected according to the purpose. In the present invention, a pneumatic tire using the rubber composition in tire tread is preferred.

### EXAMPLES

The present invention will be described in more detail below with reference to Examples. However, the present invention is not limited to these Examples.

### [Preparation Example 1: Synthesis of First Silane Compound 1 (VNB-SSi)]

A 100-mL three-necked flask was equipped with a ballcock, a three-way cock connected to vacuum/dry nitrogen lines, and a septum. Then, a stirrer bar was put in the flask, and degassing and nitrogen substitution in the system were repeated 10 times to allow the system to be under ordinary-pressure nitrogen atmosphere while heating with a dryer. A syringe was used to inject 27.5 g (0.225 mol) of 2-vinylnorbornene (VNB) into the flask, and 0.074 g (0.45 mmol) of azobisisobutyronitrile was added under nitrogen atmosphere, followed by performing nitrogen bubbling for 20 minutes. Subsequently, 10.7 g (0.045 mol) of 3-mercaptopropyltriethoxysilane was aspirated with a gas-tight syringe, the syringe was attached to a metering pump, and the pump was set to dropwise add the total amount in 3 hours. Finally, the connection was sealed with silicon grease. The needle point of the gas-tight syringe was introduced into the flask through the septum. The flask was immersed in an oil bath. The bath temperature was gradually increased. When the internal temperature reached 50°C, the metering pump was activated such that 3-mercaptopropyltriethoxysilane was dropwise added to react. The oil bath was removed from the flask 2 hours after the completion of the dropwise addition of the total amount, and the flask was left to stand to room temperature. Then, surplus VNB was distilled off under reduced pressure, followed by obtaining 37.4 g of colorless clear liquid of interest. FIG. 1 illustrates the ¹H-NMR measurement results of the obtained compound. ¹H-NMR and ¹³C-NMR measurements confirmed that the silane introduction rate was 100% and that the double bond of the norbornene ring had disappeared.

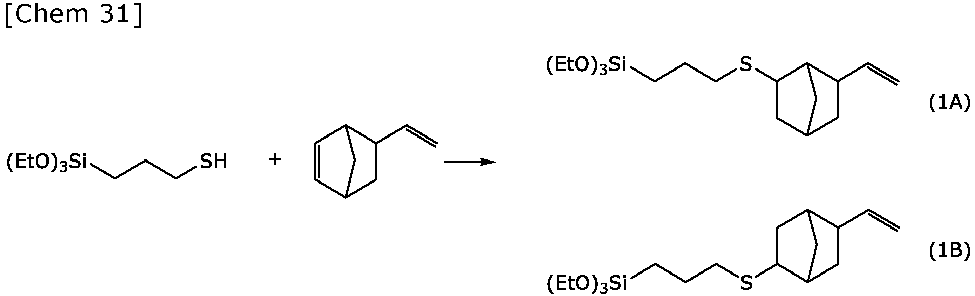

### [Detection of Stereoisomers of Silane Compound 1]

The obtained silane compound 1 was fractionated, by gas chromatography, into a fraction ("fraction (1A)") including a large amount of the compound represented by Formula (1A) and a fraction ("fraction (1B)") including a large amount of the compound represented by Formula (1B), which were preparatively isolated (FIG. 2). The ¹H-NMR measurement results of the fraction(1A) are illustrated in FIG. 3, and the ¹³C-NMR measurement results of the fraction(1A) are illustrated in FIG. 4. Moreover, the ¹H-NMR measurement results of the fraction (1B) are illustrated in FIG. 5, and the ¹³C-NMR measurement results of the fraction (1B) are illustrated in FIG. 6. It was observed that the peak of proton bound to the carbon atom directly bound to the norbornene ring of the double bond of the vinyl group in the chemical structures represented by Formulae (1A) and (1B) (the carbon atom denoted by the circled integer 2 in FIG. 3 or FIG. 5) was split. Based on the data, the presence of two stereoisomers, i.e., an isomer in which the vinyl group bound to the norbornene ring extends forward in the drawings in a manner similar to that of the crosslinked structure of the norbornene ring (syn-isomer) and an isomer in which the vinyl group bound to the norbornene ring extends backward in the drawings opposite to the crosslinked structure of the norbornene ring (anti-isomer), was presumed. Likewise, the presence of two stereoisomers, i.e., an isomer in which the sulfur atom bound to the norbornene ring extends forward in the drawings in a manner similar to that of the crosslinked structure of the norbornene ring (syn-isomer) and an isomer in which the sulfur atom bound to the norbornene ring extends backward in the drawings opposite to the crosslinked structure of the norbornene ring (anti-isomer), is presumed. Based on the above, it is presumed that the obtained silane compound 1 is a mixture of eight kinds of stereoisomers represented by the following Formulae.

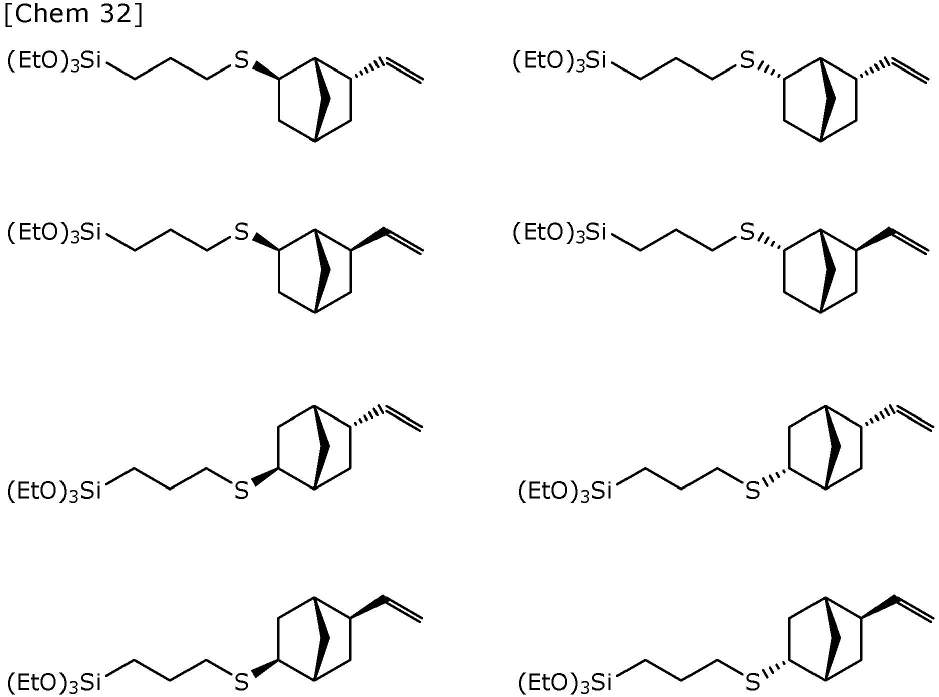

### [Preparation Example 2: Synthesis of Second Silane Compound 2 (VNB-2SSi)]

A 50-mL three-necked flask was equipped with a ballcock, a three-way cock connected to vacuum/dry nitrogen lines, and a septum. Then, a stirrer bar was put in the flask, and degassing and nitrogen substitution in the system were repeated 10 times to allow the system to be under ordinary-pressure nitrogen atmosphere while heating with a dryer. A syringe was used to inject 5.2 g (0.043 mol) of 2-vinylnorbornene (VNB) and 20.3 g (0.085 mol) of 3-mercaptopropyltriethoxysilane into the flask, and 0.14 g (0.85 mmol) of azobisisobutyronitrile was added under nitrogen atmosphere, followed by performing nitrogen bubbling for 20 minutes. The connection was sealed with silicon grease. Then, the flask was immersed in an oil bath. The bath temperature was gradually increased to 50°C such that the reaction was carried out for 13 hours, and then the temperature was further increased to 70°C such that the reaction was carried out for 5 hours. Subsequently, further addition of 3-mercaptopropyltriethoxysilane was performed twice in total (first time: 0.10 g (0.85 mmol); second time: 0.26 g (2.13 mmol)), and each 3-mercaptopropyltriethoxysilane was allowed to react at 70°C for 5 hours, and then spontaneously cooled to room temperature to obtain 25.0 g of colorless to pale yellow clear liquid of interest.

FIG. 7 illustrates the ¹H-NMR measurement results of the obtained compound. ¹H-NMR measurement confirmed that the silane introduction rate was 100% and that the double bonds of both the norbornene ring and the vinyl group had disappeared.

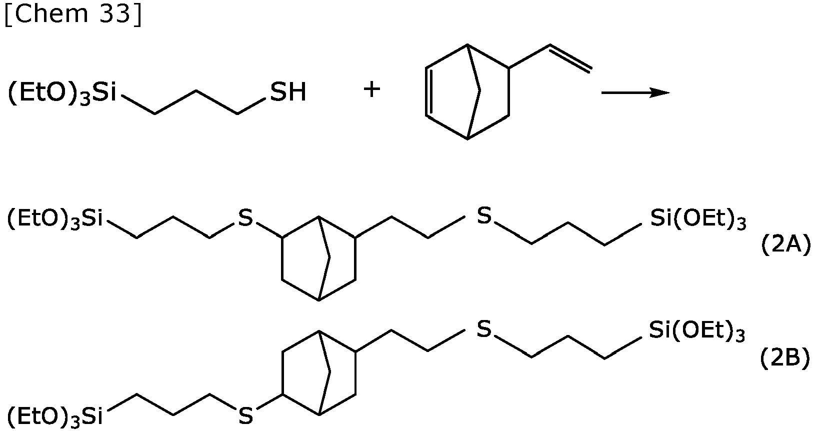

### [Detection of Stereoisomers of Silane Compound 2]

FIG. 7 illustrates the ¹H-NMR measurement results of the obtained silane compound 2. The ¹H-NMR measurement results confirmed that the double bond of the vinyl group had disappeared. It is presumed that the silane compound 2 is obtained by further reaction of the vinyl groups of the eight stereoisomers (1-adducts) of the silane compound 1 synthesized in Preparation Example 1 with mercaptosilane, thereby generating a 2-adduct. It is presumed that in such a case, only a reaction at the 1-position (outside) of the vinyl group with little steric hindrance occurs in the addition to the vinyl group, and the stereoisomerism of the silane compound 1 is maintained on an as-is basis in the addition to the vinyl group. Based on the above, it is presumed that the obtained silane compound 2 is a mixture of eight kinds of stereoisomers represented by the following Formulae.

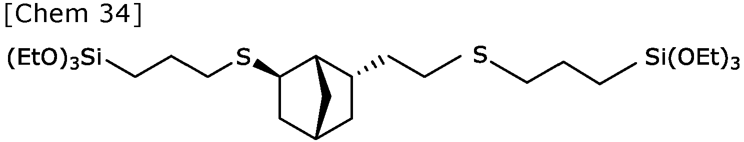

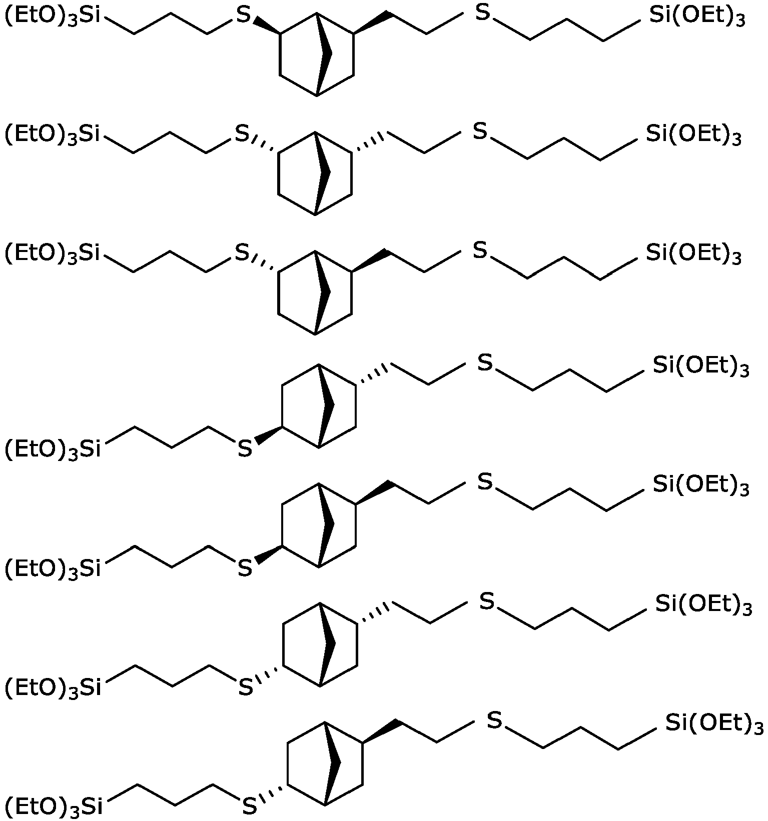

### [Preparation Example 3: Production of Silane Coupling Agent Composition 1]

A 100 mL three-necked flask was equipped with a ballcock, a three-way cock connected to a dry nitrogen line, a stirring blade, and a three-one motor, nitrogen was then allowed to flow from the nitrogen line to replace the inside of the system, and the inside of the system was allowed to be under ordinary pressure nitrogen atmosphere. In the flask, 6.0 g of carbon black (SEAST KH manufactured by TOKAI CARBON CO., LTD.) and 3.0 g of urea were added, and mixed by rotating the stirring blade at 60 rpm. Then, 5.18 g of silane compound 1 (VNB-SSi) and 0.825 g of silane compound 2 (VNB-2SSi) were gradually dropwise added using a dropping pipette 15 minutes after the start of the stirring. After the addition of the total amount, the rotation number of the stirring blade was increased to 200 rpm, and the resultant was further mixed. After 1 hour, the stirring was stopped to obtain 14.9 g of a black granular solid (silane coupling agent composition 1) having a diameter of about 1 to 3 mm.

### [Example 1-1]

### (Production of Silane Coupling Agent Composition, Rubber Composition, And Rubber Sheet)

First, the total amount of silane compound 1 (VNB-SSi), the total amount of silane compound 2 (VNB-2SSi), and the total amount of silanization reaction accelerator 1 (Urea) were mixed to obtain a silane coupling agent composition. Subsequently, each of the following components was kneaded using a 100-mL kneader (Labo Plastomill manufactured by Toyo Seiki Seisaku-sho, Ltd.) to obtain a rubber composition. The details of the kneading operation performed are as the following (i) to (iii).
(i) Mixer kneading: Natural rubber was put in a closed pressurization kneader heated to 150°C, and masticated at 30 rpm for 1 minute, a measured 1/2 amount of a mixture of silica, zinc oxide, stearic acid, and an anti-aging agent and the total amount of the silane coupling agent composition prepared as described above were then put, and kneading was performed for 1 minute and 30 seconds at a rotation number increased to 50 rpm. The remaining 1/2 amount of the mixture of silica, zinc oxide, stearic acid, and anti-aging agent was added, kneading was continued for 1 minute and 30 seconds, and the ram (floating weight) was then raised to add the powder of the mixture of silica, zinc oxide, stearic acid, and anti-aging agent, existing in the surroundings, to the kneaded product using a brush. Kneading was further continued for 1 minute, the ram was then raised again to add the powder of the mixture of silica, zinc oxide, stearic acid, and anti-aging agent, existing in the surroundings, to the kneading product using a brush, kneading was further performed for 3 minutes, and the resultant was released.
(ii) Remilling: In order to improve the dispersion of silica, the kneaded product released to a closed pressurization kneader heated to 120°C and having a sufficiently decreased temperature was further kneaded at 50 rpm for 2 minutes, and then released.
(iii) Roll kneading (addition of vulcanization system): Sulfur, a vulcanization accelerator, and the like were added to the released kneaded product having a sufficiently decreased temperature with two rolls, and kneaded to obtain a rubber composition.

Then, the obtained unvulcanized rubber composition was put in a mold (150 mm × 150 mm × 2 mm), and heated and pressurized at 150°C for 25 minutes to obtain a vulcanized rubber sheet having a thickness of 2 mm.
·Natural rubber (made in Thailand, RSS #3) 100 parts by mass
·Silica AQ (trade name: Nipsil AQ, manufactured by Tosoh Corporation) 40 parts by mass
·Zinc oxide No. 3 (trade name: Ginrei R, manufactured by Toho Zinc Co., Ltd.) 3 parts by mass
·Stearic Acid (trade name: Stearic Acid 300, manufactured by New Japan Chemical Co., Ltd.) 1 part by mass
·Anti-aging agent (trade name: Nocrac 6C, manufactured by OUCHI SHINKO CHEMICAL INDUSTRIAL CO., LTD. A) 1 part by mass
·Silanization reaction accelerator 1 (trade name: Urea, manufactured by Wako Pure Chemical Industries, Ltd.) 1 part by mass
·Silane compound 1 (VNB-SSi) (Preparation Example 1) 3.14 parts by mass
·Silane compound 2 (VNB-2SSi) (Preparation Example 2) 0.064 parts by mass
·Sulfur (5% oil-treated sulfur, manufactured by Hosoi Chemical Industry Co., Ltd.) 2.76 parts by mass
·Vulcanization accelerator (trade name: Nocceler CZ, manufactured by OUCHI SHINKO CHEMICAL INDUSTRIAL CO., LTD.) 1 part by mass
·Vulcanization accelerator (trade name: Nocceler D, manufactured by OUCHI SHINKO CHEMICAL INDUSTRIAL CO., LTD.) 0.5 parts by mass

### [Example 1-2]

A silane coupling agent composition, a rubber composition, and a rubber sheet were obtained in a manner similar to that in Example 1-1 except that the amount of added silane compound 1 (VNB-SSi) was changed to 3.04 parts by mass, and the amount of added silane compound 2 (VNB-2SSi) was changed to 0.16 parts by mass.

### [Example 1-3]

A silane coupling agent composition, a rubber composition, and a rubber sheet were obtained in a manner similar to that in Example 1-1 except that the amount of added silane compound 1 (VNB-SSi) was changed to 2.88 parts by mass, and the amount of added silane compound 2 (VNB-2SSi) was changed to 0.32 parts by mass.

### [Example 1-4]

A silane coupling agent composition, a rubber composition, and a rubber sheet were obtained in a manner similar to that in Example 1-1 except that the amount of added silane compound 1 (VNB-SSi) was changed to 2.72 parts by mass, and the amount of added silane compound 2 (VNB-2SSi) was changed to 0.48 parts by mass.

### [Example 1-5]

A silane coupling agent composition, a rubber composition, and a rubber sheet were obtained in a manner similar to that in Example 1-1 except that the amount of added silane compound 1 (VNB-SSi) was changed to 2.40 parts by mass, and the amount of added silane compound 2 (VNB-2SSi) was changed to 0.80 parts by mass.

### [Example 1-6]

A silane coupling agent composition, a rubber composition, and a rubber sheet were obtained in a manner similar to that in Example 1-4 except that the amount of added silanization reaction accelerator 1 (Urea) was changed to 0.5 parts by mass.

### [Comparative Example 1-1]

A silane coupling agent composition, a rubber composition, and a rubber sheet were obtained in a manner similar to that in Example 1-4 except that the silanization reaction accelerator 1 (Urea) was not added.

### [Evaluation of Physical Properties]

The physical properties of the rubber compositions and the rubber sheets obtained in Examples 1-1 to 1-6 and Comparative Example 1-1 were evaluated by the following methods.

### (Viscoelasticity)

According to JIS K 6394, the values of the tan δ of the rubber sheets obtained in Examples 1-1 to 1-6 and Comparative Example 1-1 at measured temperatures of 0°C and 60°C were determined under conditions of a strain of about 0.1% and a frequency of 10 Hz using a viscoelasticity measurement apparatus (REOGEL E-4000 manufactured by UBM), and a tan δ balance (= tangent δ (0°C)/tan δ (60°C)) was calculated from the values. The greater tan δ balance means that the viscoelastic characteristics of the rubber sheet is superior, and a balance between wet grip properties and fuel economy is superior.

### (Scorch Resistance)

According to JIS K6300, time t5 required for an unvulcanized rubber composition to be preheated at 125°C for 1 minute and then increased by 5 Mooney units from the minimum viscosity Vm was measured using a rotorless Mooney measurement machine manufactured by Toyo Seiki Seisaku-sho, Ltd. A greater measurement result means longer scorch time and superior processability of the rubber composition.

The measurement results and calculation results (tan δ balance) described above are set forth in Table 1. Each measured value and each calculated value were represented by indices in a case in which each value in Comparative Example 1-1 was set at 100.

**[Table 1]**

| | | Ex. 1-1 | Ex. 1-2 | Ex. 1-3 | Ex. 1-4 | Ex. 1-5 | Ex. 1-6 | Co. Ex. 1-1 |
|---|---|---|---|---|---|---|---|---|
| Composition of rubber composition (part(s) by mass) | Natural rubber (RSS #3) | 100 | 100 | 100 | 100 | 100 | 100 | 100 |
| | Silica AQ | 40 | 40 | 40 | 40 | 40 | 40 | 40 |
| | Zinc oxide No. 3 | 3 | 3 | 3 | 3 | 3 | 3 | 3 |
| | Stearic acid | 1 | 1 | 1 | 1 | 1 | 1 | 1 |
| | Anti-aging agent (Nocrac 6C) | 1 | 1 | 1 | 1 | 1 | 1 | 1 |
| | Silanization reaction accelerator 1 (Urea) | 1 | 1 | 1 | 1 | 1 | 0.5 | 0 |
| | Silane compound 1 (VNB-SSi) | 3.14 | 3.04 | 2.88 | 2.72 | 2.40 | 2.72 | 2.72 |
| | Silane compound 2 (VNB-2SSi) | 0.064 | 0.16 | 0.32 | 0.48 | 0.80 | 0.48 | 0.48 |
| | Sulfur (5% oil-treated) | 2.76 | 2.76 | 2.76 | 2.76 | 2.76 | 2.76 | 2.76 |
| | Vulcanization accelerator (Nocceler CZ) | 1 | 1 | 1 | 1 | 1 | 1 | 1 |
| | Vulcanization accelerator (Nocceler D) | 0.5 | 0.5 | 0.5 | 0.5 | 0.5 | 0.5 | 0.5 |
| Viscoelasticity | tan δ (0°C) (index) | 103 | 103 | 103 | 101 | 102 | 103 | 100 |
| | tan δ (60°C) (index) | 78 | 78 | 78 | 75 | 73 | 84 | 100 |
| | tan δ (0°C)/tan δ (60°C) (index) | 132 | 133 | 133 | 135 | 141 | 123 | 100 |
| Scorch resistance | T5 125°C (index) | 108 | 112 | 102 | 110 | 107 | 119 | 100 |

The results of Examples 1-1 to 1-6 and Comparative Example 1-1 showed that the use of the silane coupling agent composition including the silane compound and the silanization reaction accelerator 1 (Urea) resulted in improvement in the scorch resistance of the rubber composition and further in improvement in the viscoelastic characteristics of the rubber sheet. Thus, the use of the silane coupling agent composition and the rubber composition of the present invention was found to result in improvement in the processability of rubber and further to enable production of a tire practically excellent in the balance between wet grip properties and fuel economy.

### [Example 2-1]

### (Production of Silane Coupling Agent Composition, Rubber Composition, And Rubber Sheet)

Each of the following components was kneaded using a 100-mL kneader (Labo Plastomill manufactured by Toyo Seiki Seisaku-sho, Ltd.) to obtain a rubber composition. The details of the kneading operation performed are as the following (i) to (iii).
(i) Mixer kneading: Natural rubber was put in a closed pressurization kneader heated to 150°C, and masticated at 30 rpm for 1 minute, a measured 1/2 amount of a mixture of silica, carbon black, zinc oxide, stearic acid, and anti-aging agent, a silane coupling agent (total amount of silane compound 1 (VNB-SSi) and total amount of silane compound 2 (VNB-2SSi)), and the total amount of a silanization reaction accelerator 1 (Urea) were then put, and kneading was performed for 1 minute and 30 seconds at a rotation number increased to 50 rpm. The remaining 1/2 amount of the mixture of silica, carbon black, zinc oxide, stearic acid, and anti-aging agent was added, kneading was continued for 1 minute and 30 seconds, and the ram (floating weight) was then raised to add the powder of the mixture of silica, carbon black, zinc oxide, stearic acid, and anti-aging agent, existing in the surroundings, to the kneaded product using a brush. Kneading was further continued for 1 minute, the ram was then raised again to add the powder of the mixture of silica, carbon black, zinc oxide, stearic acid, and anti-aging agent, existing in the surroundings, to the kneading product using a brush, kneading was further performed for 3 minutes, and the resultant was released.
(ii) Remilling: In order to improve the dispersion of silica, the kneaded product released to a closed pressurization kneader heated to 120°C and having a sufficiently decreased temperature was further kneaded at 50 rpm for 2 minutes, and then released.
(iii) Roll kneading (addition of vulcanization system): Sulfur, a vulcanization accelerator, and the like were added to the released kneaded product having a sufficiently decreased temperature with two rolls, and kneaded to obtain a rubber composition.

Then, the obtained rubber composition was put in a mold (150 mm × 150 mm × 2 mm), and heated and pressurized at 150°C for 20 minutes to obtain a rubber sheet having a thickness of 2 mm.
·Natural rubber (RSS #3, manufactured by NZ) 100 parts by mass
·Silica AQ (trade name: Nipsil AQ, manufactured by Tosoh Corporation) 36.8 parts by mass
·Carbon black (trade name: SEAST KH, manufactured by TOKAI CARBON CO., LTD.) 3.2 parts by mass
·Zinc oxide No. 3 (trade name: Ginrei R, manufactured by Toho Zinc Co., Ltd.) 3 parts by mass
·Stearic Acid (trade name: Stearic Acid 300, manufactured by New Japan Chemical Co., Ltd.) 1 part by mass
·Anti-aging agent (trade name: Nocrac 6C, manufactured by OUCHI SHINKO CHEMICAL INDUSTRIAL CO., LTD. A) 1 part by mass
·Silanization reaction accelerator 1 (trade name: Urea, manufactured by Wako Pure Chemical Industries, Ltd.) 1 part by mass
·Silane compound 1 (VNB-SSi) (Preparation Example 1) 2.76 parts by mass
·Silane compound 2 (VNB-2SSi) (Preparation Example 2) 0.44 parts by mass
·Sulfur (5% oil-treated sulfur, manufactured by Hosoi Chemical Industry Co., Ltd.) 2.76 parts by mass
·Vulcanization accelerator (trade name: Nocceler CZ, manufactured by OUCHI SHINKO CHEMICAL INDUSTRIAL CO., LTD.) 1 part by mass
·Vulcanization accelerator (trade name: Nocceler D, manufactured by OUCHI SHINKO CHEMICAL INDUSTRIAL CO., LTD.) 0.5 parts by mass

### [Example 2-2]

A rubber composition and a rubber sheet were obtained in a manner similar to that in Example 2-1 except that the operation of (i) mixer kneading in Example 2-1 was changed as follows.
(i) Mixer kneading: Natural rubber was put in a closed pressurization kneader heated to 150°C, and masticated at 30 rpm for 1 minute, a measured 1/2 amount of a mixture of silica, zinc oxide, stearic acid, and an anti-aging agent and the total amount of the silane coupling agent composition 1 (7.4 parts by mass, Preparation Example 3) were then put, and kneading was performed for 1 minute and 30 seconds at a rotation number increased to 50 rpm. Kneading was performed for 1 minute and 30 seconds at a rotation number increased to 50 rpm. The remaining 1/2 amount of the mixture of silica, zinc oxide, stearic acid, and anti-aging agent was added, kneading was continued for 1 minute and 30 seconds, and the ram (floating weight) was then raised to add the powder of the mixture of silica, zinc oxide, stearic acid, and anti-aging agent, existing in the surroundings, to the kneaded product using a brush. Kneading was further continued for 1 minute, the ram was then raised again to add the powder of the mixture of silica, zinc oxide, stearic acid, and anti-aging agent, existing in the surroundings, to the kneading product using a brush, kneading was further performed for 3 minutes, and the resultant was released.

### [Comparative Example 2-1]

A rubber composition and a rubber sheet were obtained in a manner similar to that in Example 2-1 except that the silane compound 1 (VNB-SSi), the silane compound 2 (VNB-2SSi), and urea were not added, 3.2 parts by mass of another silane compound (Si69) (manufactured by Degussa AG) was added, and the content of sulfur was changed to 2.00 parts by mass.

### [Evaluation of Physical Properties]

The scorch resistance of the rubber compositions and the viscoelasticity of the rubber sheets, obtained in Examples 2-1 to 2-2 and Comparative Example 2-1 as described above, were evaluated by the method described in the evaluation of the physical properties in Example 1 described above. The measurement results and calculation results (tan δ balance) described above are set forth in Table 2. Each measured value and each calculated value were represented by indices in a case in which each value in Comparative Example 2-1 was set at 100.

**[Table 2]**

| | | Ex. 2-1 | Ex. 2-2 | Co. Ex. 2-1 |
|---|---|---|---|---|
| Composition of rubber composition (part(s) by mass) | Natural rubber (RSS #3) | 100 | 100 | 100 |
| | Silica AQ | 36.8 | 36.8 | 36.8 |
| | Carbon black | 3.2 | 0 | 3.2 |
| | Zinc oxide No. 3 | 3 | 3 | 3 |
| | Stearic acid | 1 | 1 | 1 |
| | Anti-aging agent (Nocrac 6C) | 1 | 1 | 1 |
| | Silanization reaction accelerator 1 (Urea) | 1 | 0 | 0 |
| | Silane compound 1 (VNB-SSi) | 2.76 | 0 | 0 |
| | Silane compound 2 (VNB-2SSi) | 0.44 | 0 | 0 |
| | Other silane compound (Si69) | 0 | 0 | 3.2 |
| | Silane coupling agent composition 1 | 0 | 7.4 | 0 |
| | Sulfur (5% oil-treated) | 2.76 | 2.76 | 2.00 |
| | Vulcanization accelerator (Nocceler CZ) | 1 | 1 | 1 |
| | Vulcanization accelerator (Nocceler D) | 0.5 | 0.5 | 0.5 |
| Viscoelasticity | tan δ (0°C) (index) | 95 | 98 | 100 |
| | tan δ (60°C) (index) | 88 | 90 | 100 |
| | tan δ (0°C)/tan δ (60°C) (index) | 108 | 109 | 100 |
| Scorch resistance | T5 125°C (index) | 173 | 159 | 100 |

The results of Examples 2-1 to 2-2 and Comparative Example 2-1 showed improvement in the scorch resistance of the rubber composition including the silane compound and the silanization reaction accelerator 1 (Urea), and further showed improvement in the viscoelastic characteristics of the rubber sheet. Thus, the use of the silane coupling agent composition and the rubber composition of the present invention was found to result in improvement in the processability of rubber and further to enable production of a tire practically excellent in the balance between wet grip properties and fuel economy.

### [Example 3-1]

### (Production of Silane Coupling Agent Composition, Rubber Composition, and Rubber Sheet)

First, the total amount of silane compound 1 (VNB-SSi), the total amount of silane compound 2 (VNB-2SSi), and the total amount of silanization reaction accelerator 2 (trade name: Guanidine Hydrochloride, manufactured by Tokyo Chemical Industry Co., Ltd.) were mixed to obtain a silane coupling agent composition. Subsequently, each of the following components was kneaded using a 100-mL kneader (Labo Plastomill manufactured by Toyo Seiki Seisaku-sho, Ltd.) to obtain a rubber composition. The details of the kneading operation performed are as the following (i) to (iii).
(i) Mixer kneading: Natural rubber was put in a closed pressurization kneader heated to 150°C, and masticated at 30 rpm for 1 minute, a measured 1/2 amount of a mixture of silica, zinc oxide, stearic acid, and an anti-aging agent and the total amount of the silane coupling agent composition prepared as described above were then put, and kneading was performed for 1 minute and 30 seconds at a rotation number increased to 50 rpm. The remaining 1/2 amount of the mixture of silica, zinc oxide, stearic acid, and anti-aging agent was added, kneading was continued for 1 minute and 30 seconds, and the ram (floating weight) was then raised to add the powder of the mixture of silica, zinc oxide, stearic acid, and anti-aging agent, existing in the surroundings, to the kneaded product using a brush. Kneading was further continued for 1 minute, the ram was then raised again to add the powder of the mixture of silica, zinc oxide, stearic acid, and anti-aging agent, existing in the surroundings, to the kneading product using a brush, kneading was further performed for 3 minutes, and the resultant was released.
(ii) Remilling: In order to improve the dispersion of silica, the kneaded product released to a closed pressurization kneader heated to 120°C and having a sufficiently decreased temperature was further kneaded at 50 rpm for 2 minutes, and then released.
(iii) Roll kneading (addition of vulcanization system): Sulfur, a vulcanization accelerator, and the like were added to the released kneaded product having a sufficiently decreased temperature with two rolls, and kneaded to obtain a rubber composition.

Then, the obtained unvulcanized rubber composition was put in a mold (150 mm × 150 mm × 2 mm), and heated and pressurized at 150°C for 25 minutes to obtain a vulcanized rubber sheet having a thickness of 2 mm.
·Natural rubber (made in Thailand, RSS #3) 100 parts by mass
·Silica AQ (trade name: Nipsil AQ, manufactured by Tosoh Corporation) 40 parts by mass
·Zinc oxide No. 3 (trade name: Ginrei R, manufactured by Toho Zinc Co., Ltd.) 3 parts by mass
·Stearic Acid (trade name: Stearic Acid 300, manufactured by New Japan Chemical Co., Ltd.) 1 part by mass
·Anti-aging agent (trade name: Nocrac 6C, manufactured by OUCHI SHINKO CHEMICAL INDUSTRIAL CO., LTD. A) 1 part by mass
·Silanization reaction accelerator 2 (trade name: Guanidine Hydrochloride, manufactured by Tokyo Chemical Industry Co., Ltd.) 1 part by mass
·Silane compound 1 (VNB-SSi) (Preparation Example 1) 2.72 parts by mass
·Silane compound 2 (VNB-2SSi) (Preparation Example 2) 0.48 parts by mass
·Sulfur (5% oil-treated sulfur, manufactured by Hosoi Chemical Industry Co., Ltd.) 2.76 parts by mass
·Vulcanization accelerator (trade name: Nocceler CZ, manufactured by OUCHI SHINKO CHEMICAL INDUSTRIAL CO., LTD.) 1 part by mass
·Vulcanization accelerator (trade name: Nocceler D, manufactured by OUCHI SHINKO CHEMICAL INDUSTRIAL CO., LTD.) 0.5 parts by mass

### [Example 3-2]

A silane coupling agent composition, a rubber composition, and a rubber sheet were obtained in a manner similar to that in Example 3-1 except that the silane compound 1 (VNB-SSi) and the silane compound 2 (VNB-2SSi) were not added, 3.20 parts by mass of another silane compound (Si69) was added, and the amount of added sulfur was changed to 2.00 parts by mass.

### [Comparative Example 3-2]

A silane coupling agent composition, a rubber composition, and a rubber sheet were obtained in a manner similar to that in Comparative Example 3-1 except that the silanization reaction accelerator 2 was not added.

### [Evaluation of Physical Properties]

The viscoelasticity of the rubber sheets and the scorch resistance of the rubber compositions, obtained in Example 3-1 and Comparative Examples 3-1 to 3-2 as described above, were evaluated by the above-described method in a manner similar to that in Example 1-1. The measurement results and calculation results (tan δ balance) described above are set forth in Table 3. Each measured value and each calculated value were represented by indices in a case in which each value in Comparative Example 3-1 was set at 100.

**[Table 3]**

| | | Ex. 3-1 | Ex. 3-2 | Co. Ex. 3-1 |
|---|---|---|---|---|
| Composition of rubber composition (part(s) by mass) | Natural rubber (RSS #3) | 100 | 100 | 100 |
| | Silica AQ | 40 | 40 | 40 |
| | Zinc oxide No. 3 | 3 | 3 | 3 |
| | Stearic acid | 1 | 1 | 1 |
| | Anti-aging agent (Nocrac 6C) | 1 | 1 | 1 |
| | Silanization reaction accelerator 2 (Guanidine Hydrochloride) | 1 | 1 | 0 |
| | Silane compound 1 (VNB-SSi) | 2.72 | 0 | 0 |
| | Silane compound 2 (VNB-2SSi) | 0.48 | 0 | 0 |
| | Other silane compound (Si69) | 0 | 3.20 | 3.20 |
| | Sulfur (5% oil-treated) | 2.76 | 2.00 | 2.00 |
| | Vulcanization accelerator (Nocceler CZ) | 1 | 1 | 1 |
| | Vulcanization accelerator (Nocceler D) | 0.5 | 0.5 | 0.5 |
| Viscoelasticity | tan δ (0°C) (index) | 98 | 97 | 100 |
| | tan δ (60°C) (index) | 91 | 97 | 100 |
| | tan δ (0°C)/tan δ (60°C) (index) | 108 | 100 | 100 |
| Scorch resistance | T5 125°C (index) | 251 | 126 | 100 |

The results of Examples 3-1 to 3-2 and Comparative Example 3-1 showed that the use of the silane coupling agent composition including the silane compound and the silanization reaction accelerator 2 (Guanidine Hydrochloride) resulted in improvement in the scorch resistance of the rubber composition including natural rubber. In addition, Example 3-1 showed improvement in the viscoelastic characteristics of the rubber sheet. Thus, the use of the silane coupling agent composition and the rubber composition of the present invention was found to result in improvement in the processability of rubber and further to enable production of a tire practically excellent in the balance between wet grip properties and fuel economy.

### [Example 4-1]

### (Production of Silane Coupling Agent Composition, Rubber Composition, and Rubber Sheet)

First, the total amount of silane compound 1 (VNB-SSi), the total amount of silane compound 2 (VNB-2SSi), the total amount of silanization reaction accelerator 1 (Urea), and the total amount of silanization reaction accelerator 3 (Diphenylguanidine) were mixed to obtain a silane coupling agent composition. Subsequently, each of the following components was kneaded using a 100-mL kneader (Labo Plastomill manufactured by Toyo Seiki Seisaku-sho, Ltd.) to obtain a rubber composition. The details of the kneading operation performed are as the following (i) to (iii).
(i) Mixer kneading: Natural rubber was put in a closed pressurization kneader heated to 150°C, and masticated at 30 rpm for 1 minute, a measured 1/2 amount of a mixture of silica, carbon black, zinc oxide, stearic acid, and an anti-aging agent and the total amount of the silane coupling agent composition prepared as described above were then put, and kneading was performed for 1 minute and 30 seconds at a rotation number increased to 50 rpm. The remaining 1/2 amount of the mixture of silica, zinc oxide, stearic acid, and anti-aging agent was added, kneading was continued for 1 minute and 30 seconds, and the ram (floating weight) was then raised to add the powder of the mixture of silica, carbon black, zinc oxide, stearic acid, and anti-aging agent, existing in the surroundings, to the kneaded product using a brush. Kneading was further continued for 1 minute, the ram was then raised again to add the powder of the mixture of silica, zinc oxide, stearic acid, and anti-aging agent, existing in the surroundings, to the kneading product using a brush, kneading was further performed for 3 minutes, and the resultant was released.
(ii) Remilling: In order to improve the dispersion of silica, the kneaded product released to a closed pressurization kneader heated to 120°C and having a sufficiently decreased temperature was further kneaded at 50 rpm for 2 minutes, and then released.
(iii) Roll kneading (addition of vulcanization system): Sulfur, a vulcanization accelerator, and the like were added to the released kneaded product having a sufficiently decreased temperature with two rolls, and kneaded to obtain a rubber composition.

Then, the obtained unvulcanized rubber composition was put in a mold (150 mm × 150 mm × 2 mm), and heated and pressurized at 160°C for 30 minutes to obtain a vulcanized rubber sheet having a thickness of 2 mm.
·Natural rubber (made in Thailand, RSS #3) 100 parts by mass
·Silica AQ (trade name: Nipsil AQ, manufactured by Tosoh Corporation) 40 parts by mass
·Carbon black (trade name: SEAST KH, manufactured by TOKAI CARBON CO., LTD.) 3.2 parts by mass
·Zinc oxide No. 3 (trade name: Ginrei R, manufactured by Toho Zinc Co., Ltd.) 3 parts by mass
·Stearic Acid (trade name: Stearic Acid 300, manufactured by New Japan Chemical Co., Ltd.) 1 part by mass
·Anti-aging agent (trade name: Nocrac 6C, manufactured by OUCHI SHINKO CHEMICAL INDUSTRIAL CO., LTD. A) 1 part by mass
·Silanization reaction accelerator 1 (trade name: Urea, manufactured by Wako Pure Chemical Industries, Ltd.) 1 part by mass
·Silanization reaction accelerator 3 (trade name: Diphenylguanidine (DPG), manufactured by OUCHI SHINKO CHEMICAL INDUSTRIAL CO., LTD.) 1 part by mass
·Silane compound 1 (VNB-SSi) (Preparation Example 1) 2.72 parts by mass
·Silane compound 2 (VNB-2SSi) (Preparation Example 2) 0.48 parts by mass
·Sulfur (5% oil-treated sulfur, manufactured by Hosoi Chemical Industry Co., Ltd.) 2.76 parts by mass
·Vulcanization accelerator (trade name: Nocceler CZ, manufactured by OUCHI SHINKO CHEMICAL INDUSTRIAL CO., LTD.) 1 part by mass
·Vulcanization accelerator (trade name: Nocceler D, manufactured by OUCHI SHINKO CHEMICAL INDUSTRIAL CO., LTD.) 0.5 parts by mass

### [Example 4-2]

A silane coupling agent composition, a rubber composition, and a rubber sheet were obtained in a manner similar to that in Example 4-1 except that the amount of added silanization reaction accelerator 3 (Diphenylguanidine) was changed to 0.05 parts by mass.

### [Comparative Example 4-1]

A silane coupling agent composition, a rubber composition, and a rubber sheet were obtained in a manner similar to that in Example 4-1 except that the silanization reaction accelerator 1 (Urea), the silanization reaction accelerator 3 (Diphenylguanidine), the silane compound 1 (VNB-SSi), and the silane compound 2 (VNB-2SSi) were not added, 3.20 parts by mass of another silane compound (Si69) was added, and the amount of added sulfur was changed to 2.00 parts by mass.

### [Example 4-3]

A silane coupling agent composition, a rubber composition, and a rubber sheet were obtained in a manner similar to that in Example 4-1 except that each of the following components was used.
·Natural rubber (made in Thailand, RSS #3) 100 parts by mass
·Silica AQ (trade name: Nipsil AQ, manufactured by Tosoh Corporation) 50 parts by mass
·Zinc oxide No. 3 (trade name: Ginrei R, manufactured by Toho Zinc Co., Ltd.) 3 parts by mass
·Stearic Acid (trade name: Stearic Acid 300, manufactured by New Japan Chemical Co., Ltd.) 1 part by mass
·Anti-aging agent (trade name: Nocrac 6C, manufactured by OUCHI SHINKO CHEMICAL INDUSTRIAL CO., LTD. A) 1 part by mass
·Silanization reaction accelerator 1 (trade name: Urea, manufactured by Wako Pure Chemical Industries, Ltd.) 1.25 parts by mass
·Silanization reaction accelerator 3 (trade name: Diphenylguanidine (DPG), manufactured by OUCHI SHINKO CHEMICAL INDUSTRIAL CO., LTD.) 1 part by mass
·Silane compound 1 (VNB-SSi) (Preparation Example 1) 3.40 parts by mass
·Silane compound 2 (VNB-2SSi) (Preparation Example 2) 0.60 parts by mass
·Sulfur (5% oil-treated sulfur, manufactured by Hosoi Chemical Industry Co., Ltd.) 2.95 parts by mass
·Vulcanization accelerator (trade name: Nocceler CZ, manufactured by OUCHI SHINKO CHEMICAL INDUSTRIAL CO., LTD.) 1 part by mass
·Vulcanization accelerator (trade name: Nocceler D, manufactured by OUCHI SHINKO CHEMICAL INDUSTRIAL CO., LTD.) 0.5 parts by mass

### [Comparative Example 4-2]

A silane coupling agent composition, a rubber composition, and a rubber sheet were obtained in a manner similar to that in Example 4-3 except that the silanization reaction accelerator 1 (Urea), the silanization reaction accelerator 3 (Diphenylguanidine), the silane compound 1 (VNB-SSi), and the silane compound 2 (VNB-2SSi) were not added, 4.00 parts by mass of another silane compound (Si69) was added, and the amount of added sulfur was changed to 2.00 parts by mass.

### [Evaluation of Physical Properties]

The viscoelasticity of the rubber sheets and the scorch resistance of the rubber compositions, obtained in Examples 4-1 to 4-3 and Comparative Examples 4-1 to 4-2 as described above, were evaluated by the above-described method in a manner similar to that in Example 1-1.

### (Viscosity of Uncross-Linked Compound)

The moony viscosities of the rubber compositions obtained in Examples 4-1 to 4-3 and Comparative Examples 4-1 to 4-2 as described above were measured under conditions of a preheating time of 1 minute, a rotor rotation time of 4 minutes, 100°C, and 2 rpm using a Mooney viscometer with an L-type rotor (having a diameter of 38.1mm and a thickness of 5.5 mm) according to JIS K6300. A smaller measurement result means the lower viscosity of the rubber composition and superior processability.

The measurement results and calculation results (tan δ balance) described above are set forth in Table 4. Each measured value and each calculated value in Examples 4-1 and 4-2 were described as relative values in a case in which each value in Comparative Example 4-1 was set at 100. Each measured value and each calculated value in Example 4-3 were described as relative values in a case in which each value in Comparative Example 4-2 was set at 100.

**[Table 4]**

| | | Ex. 4-1 | Ex. 4-2 | Co. Ex. 4-1 | Ex. 4-3 | Co. Ex. 4-2 |
|---|---|---|---|---|---|---|
| Composition of rubber composition (part(s) by mass) | Natural rubber (RSS #3) | 100 | 100 | 100 | 100 | 100 |
| | Silica AQ | 40 | 40 | 40 | 50 | 50 |
| | Carbon black | 3.2 | 3.2 | 3.2 | 0 | 0 |
| | Zinc oxide No. 3 | 3 | 3 | 3 | 3 | 3 |
| | Stearic acid | 1 | 1 | 1 | 1 | 1 |
| | Anti-aging agent (Nocrac 6C) | 1 | 1 | 1 | 1 | 1 |
| | Silanization reaction accelerator 1 (Urea) | 1 | 1 | 0 | 1.25 | 0 |
| | Silanization reaction accelerator 3 (DPG) | 1 | 0.05 | 0 | 1 | 0 |
| | Silane compound 1 (VNB-SSi) | 2.72 | 2.72 | 0 | 3.40 | 0 |
| | Silane compound 2 (VNB-2SSi) | 0.48 | 0.48 | 0 | 0.60 | 0 |
| | Other silane compound (Si69) | 0 | 0 | 3.20 | 0 | 4.00 |
| | Sulfur (5% oil-treated) | 2.76 | 2.76 | 2.00 | 2.95 | 2.00 |
| | Vulcanization accelerator (Nocceler CZ) | 1 | 1 | 1 | 1 | 1 |
| | Vulcanization accelerator (Nocceler D) | 0.5 | 0.5 | 0.5 | 0.5 | 0.5 |
| | DPG/Urea | 1 | 0.05 | - | 0.8 | - |
| Viscosity of uncross-linked compound | ML1 + 4(100°C) (index) | 84 | 91 | 100 | 65 | 100 |
| Viscoelasticity | tan δ (0°C) (index) | 90 | 95 | 100 | 93 | 100 |
| | tan δ (60°C) (index) | 60 | 69 | 100 | 44 | 100 |
| | tan δ (0°C)/tan δ (60°C) (index) | 150 | 138 | 100 | 211 | 100 |
| Scorch resistance | T5 125°C (index) | 112 | 142 | 100 | 186 | 100 |

The results of Examples 4-1 to 4-3 and Comparative Examples 4-1 to 4-2 showed that the use of the silane coupling agent composition including the silane compound, silanization reaction accelerator 1 (Urea), and silanization reaction accelerator 3 (Diphenylguanidine) resulted in the decreased viscosity of the rubber composition including natural rubber in the case of uncross-linked compound, in improvement in the scorch resistance, and further in improvement in the viscoelastic characteristics of the rubber sheet. Thus, the use of the silane coupling agent composition and the rubber composition of the present invention was found to result in improvement in the processability of rubber and further to enable production of a tire practically excellent in the balance between wet grip properties and fuel economy.

### [Example 5-1]

### (Production of Silane Coupling Agent Composition, Rubber Composition, and Rubber Sheet)

First, the total amount of silane compound 1 (VNB-SSi), the total amount of silane compound 2 (VNB-2SSi), and the total amount of silanization reaction accelerator 1 (Urea) were mixed to obtain a silane coupling agent composition. Subsequently, each of the following components was kneaded using a 100-mL kneader (Labo Plastomill manufactured by Toyo Seiki Seisaku-sho, Ltd.) to obtain a rubber composition. The details of the kneading operation performed are as the following (i) to (iii).
(i) Mixer kneading: Natural rubber was put in a closed pressurization kneader heated to 150°C, and masticated at 30 rpm for 1 minute, a measured 1/2 amount of a mixture of silica, zinc oxide, stearic acid, and an anti-aging agent and the total amount of the silane coupling agent composition prepared as described above were then put, and kneading was performed for 1 minute and 30 seconds at a rotation number increased to 50 rpm. The remaining 1/2 amount of the mixture of silica, zinc oxide, stearic acid, and anti-aging agent was added, kneading was continued for 1 minute and 30 seconds, and the ram (floating weight) was then raised to add the powder of the mixture of silica, zinc oxide, stearic acid, and anti-aging agent, existing in the surroundings, to the kneaded product using a brush. Kneading was further continued for 1 minute, the ram was then raised again to add the powder of the mixture of silica, zinc oxide, stearic acid, and anti-aging agent, existing in the surroundings, to the kneading product using a brush, kneading was further performed for 3 minutes, and the resultant was released.
(ii) Remilling: In order to improve the dispersion of silica, the kneaded product released to a closed pressurization kneader heated to 120°C and having a sufficiently decreased temperature was further kneaded at 50 rpm for 2 minutes, and then released.
(iii) Roll kneading (addition of vulcanization system): Sulfur, a vulcanization accelerator, and the like were added to the released kneaded product having a sufficiently decreased temperature with two rolls, and kneaded to obtain a rubber composition.

Then, the obtained unvulcanized rubber composition was put in a mold (150 mm × 150 mm × 2 mm), and heated and pressurized at 160°C for 30 minutes to obtain a vulcanized rubber sheet having a thickness of 2 mm.
·Synthetic isoprene rubber (trade name: IR-2200, manufactured by Zeon Corporation) 100 parts by mass
·Silica AQ (trade name: Nipsil AQ, manufactured by Tosoh Corporation) 60 parts by mass
·Zinc oxide No. 3 (trade name: Ginrei R, manufactured by Toho Zinc Co., Ltd.) 3 parts by mass
·Stearic Acid (trade name: Stearic Acid 300, manufactured by New Japan Chemical Co., Ltd.) 1 part by mass
·Anti-aging agent (trade name: Nocrac 6C, manufactured by OUCHI SHINKO CHEMICAL INDUSTRIAL CO., LTD. A) 1 part by mass
·Silanization reaction accelerator 1 (trade name: Urea, manufactured by Wako Pure Chemical Industries, Ltd.) 1.50 parts by mass
·Silane compound 1 (VNB-SSi) (Preparation Example 1) 4.27 parts by mass
·Silane compound 2 (VNB-2SSi) (Preparation Example 2) 0.53 parts by mass
·Sulfur (5% oil-treated sulfur, manufactured by Hosoi Chemical Industry Co., Ltd.) 3.14 parts by mass
·Vulcanization accelerator (trade name: Nocceler CZ, manufactured by OUCHI SHINKO CHEMICAL INDUSTRIAL CO., LTD.) 1.00 part by mass
·Vulcanization accelerator (trade name: Nocceler D, manufactured by OUCHI SHINKO CHEMICAL INDUSTRIAL CO., LTD.) 0.5 parts by mass

### [Comparative Example 5-1]

A silane coupling agent composition, a rubber composition, and a rubber sheet were obtained in a manner similar to that in Example 5-1 except that the silanization reaction accelerator 1 (Urea), the silane compound 1 (VNB-SSi), and the silane compound 2 (VNB-2SSi) were not added, 4.80 parts by mass of another silane compound (Si69) was added, and the amount of added sulfur was changed to 2.00 parts by mass.

### [Evaluation of Physical Properties]

The viscoelasticity of the rubber sheets and the scorch resistance of the rubber compositions, obtained in Example 5-1 and Comparative Example 5-1 as described above, were evaluated by the above-described method in a manner similar to that in Example 1-1. Moreover, the uncross-linked compound viscosity of the rubber composition was evaluated by the above-described method in a manner similar to that in Example 4-1. The measurement results and calculation results (tan δ balance) described above are set forth in Table 5. Each measured value and each calculated value were represented by indices in a case in which each value in Comparative Example 5-1 was set at 100.

**[Table 5]**

| | | Ex. 5-1 | Co. Ex. 5-1 |
|---|---|---|---|
| Composition of rubber composition (part(s) by mass) | Synthetic isoprene rubber (IR-2000) | 100 | 100 |
| | Silica AQ | 60 | 60 |
| | Zinc oxide No. 3 | 3 | 3 |
| | Stearic acid | 1 | 1 |
| | Anti-aging agent (Nocrac 6C) | 1 | 1 |
| | Silanization reaction accelerator 1 (Urea) | 1.50 | 0 |
| | Silane compound 1 (VNB-SSi) | 4.27 | 0 |
| | Silane compound 2 (VNB-2SSi) | 0.53 | 0 |
| | Other silane compound (Si69) | 0 | 4.80 |
| | Sulfur (5% oil-treated) | 3.14 | 2.00 |
| | Vulcanization accelerator (Nocceler CZ) | 1.00 | 1.00 |
| | Vulcanization accelerator (Nocceler D) | 0.5 | 0.5 |
| Uncross-linked | ML1 + 4 (100°C) (index) | 67 | 100 |

| compound viscosity | | | |
|---|---|---|---|
| Viscoelasticity | tan δ (0°C) (index) | 93 | 100 |
| | tan δ (60°C) (index) | 81 | 100 |
| | tan δ (0°C)/tan δ (60°C) (index) | 116 | 100 |
| Scorch resistance | T5 125°C (index) | 159 | 100 |

The results of Example 5-1 and Comparative Example 5-1 showed that the use of the silane coupling agent composition including the silane compound and silanization reaction accelerator 1 (Urea) resulted in the decreased viscosity of the rubber composition including synthetic isoprene rubber in the case of uncross-linked compound, in improvement in the scorch resistance, and further in improvement in the viscoelastic characteristics of the rubber sheet. Thus, the use of the silane coupling agent composition and the rubber composition of the present invention was found to result in improvement in the processability of rubber and further to enable production of a tire practically excellent in the balance between wet grip properties and fuel economy.

### [Example 6-1]

### (Production of Silane Coupling Agent Composition, Rubber Composition, and Rubber Sheet)

First, the total amount of the silane compound 2 (VNB-2SSi) synthesized as described above and the total amount of the silanization reaction accelerator 1 (Urea) were mixed to obtain a silane coupling agent composition. Subsequently, each of the following components was kneaded using a 100-mL kneader (Labo Plastomill manufactured by Toyo Seiki Seisaku-sho, Ltd.) to obtain a rubber composition. The details of the kneading operation performed are as the following (i) to (iii).
(i) Mixer kneading: Natural rubber was put in a closed pressurization kneader heated to 150°C, and masticated at 30 rpm for 1 minute, a measured 1/2 amount of a mixture of silica, zinc oxide, stearic acid, and an anti-aging agent and the total amount of the silane coupling agent composition prepared as described above were then put, and kneading was performed for 1 minute and 30 seconds at a rotation number increased to 50 rpm. The remaining 1/2 amount of the mixture of silica, zinc oxide, stearic acid, and anti-aging agent was added, kneading was continued for 1 minute and 30 seconds, and the ram (floating weight) was then raised to add the powder of the mixture of silica, zinc oxide, stearic acid, and anti-aging agent, existing in the surroundings, to the kneaded product using a brush. Kneading was further continued for 1 minute, the ram was then raised again to add the powder of the mixture of silica, zinc oxide, stearic acid, and anti-aging agent, existing in the surroundings, to the kneading product using a brush, kneading was further performed for 3 minutes, and the resultant was released.
(ii) Remilling: In order to improve the dispersion of silica, the kneaded product released to a closed pressurization kneader heated to 120°C and having a sufficiently decreased temperature was further kneaded at 50 rpm for 2 minutes, and then released.
(iii) Roll kneading (addition of vulcanization system): Sulfur, a vulcanization accelerator, and the like were added to the released kneaded product having a sufficiently decreased temperature with two rolls, and kneaded to obtain a rubber composition.

Then, the obtained unvulcanized rubber composition was put in a mold (150 mm × 150 mm × 2 mm), and heated and pressurized at 150°C for 25 minutes to obtain a vulcanized rubber sheet having a thickness of 2 mm.
·Natural rubber (made in Thailand, RSS #3) 100 parts by mass
·Silica AQ (trade name: Nipsil AQ, manufactured by Tosoh Corporation) 40 parts by mass
·Zinc oxide No. 3 (trade name: Ginrei R, manufactured by Toho Zinc Co., Ltd.) 3 parts by mass
·Stearic Acid (trade name: Stearic Acid 300, manufactured by New Japan Chemical Co., Ltd.) 1 part by mass
·Anti-aging agent (trade name: Nocrac 6C, manufactured by OUCHI SHINKO CHEMICAL INDUSTRIAL CO., LTD. A) 1 part by mass
·Silanization reaction accelerator 1 (trade name: Urea, manufactured by Wako Pure Chemical Industries, Ltd.) 1 part by mass
·Silane compound 2 (VNB-2SSi) (Preparation Example 2) 3.20 parts by mass
·Sulfur (5% oil-treated sulfur, manufactured by Hosoi Chemical Industry Co., Ltd.) 2.76 parts by mass
·Vulcanization accelerator (trade name: Nocceler CZ, manufactured by OUCHI SHINKO CHEMICAL INDUSTRIAL CO., LTD.) 1 part by mass
·Vulcanization accelerator (trade name: Nocceler D, manufactured by OUCHI SHINKO CHEMICAL INDUSTRIAL CO., LTD.) 0.5 parts by mass

### [Example 6-2]

A silane coupling agent composition, a rubber composition, and a rubber sheet were obtained in a manner similar to that in Example 6-1 except that the amount of added urea was changed to 2 parts by mass.

### [Example 6-3]

A silane coupling agent composition, a rubber composition, and a rubber sheet were obtained in a manner similar to that in Example 6-1 except that the amount of added urea was changed to 0.5 parts by mass.

### [Example 6-4]

A silane coupling agent composition, a rubber composition, and a rubber sheet were obtained in a manner similar to that in Example 6-1 except that the amount of added urea was changed to 3 parts by mass.

### [Example 6-5]

A silane coupling agent composition, a rubber composition, and a rubber sheet were obtained in a manner similar to that in Example 6-1 except that the amount of added urea was changed to 5 parts by mass.

### [Comparative Example 6-1]

A silane coupling agent composition, a rubber composition, and a rubber sheet were obtained in a manner similar to that in Example 6-1 except that urea was not added.

### [Evaluation of Physical Properties]

### (Hardness)

Three rubber sheets (having a thickness of 2 mm) obtained in Examples 6-1 to 6-5 and Comparative Example 6-1 were stacked, and the JIS-A strength thereof was measured according to JIS K6353 (published in 2012). The larger measurement result means the higher hardness of the rubber sheet and the superior handling stability of the tire.

### (Viscoelasticity)

The viscoelasticity of the rubber sheets obtained in Examples 6-1 to 6-5 and Comparative Example 6-1 was evaluated by the above-described method in a manner similar to that in Example 1-1.

The measurement results and calculation results (tan δ balance) described above are set forth in Table 6. Each measured value and each calculated value were represented by indices in a case in which each value in Comparative Example 6-1 was set at 100.

**[Table 6]**

| | | Ex. 6-1 | Ex. 6-2 | Ex. 6-3 | Ex. 6-4 | Ex. 6-5 | Co. Ex. 6-1 |
|---|---|---|---|---|---|---|---|
| Composition of rubber composition (part(s) by mass) | Natural rubber (RSS #3) | 100 | 100 | 100 | 100 | 100 | 100 |
| | Silica AQ | 40 | 40 | 40 | 40 | 40 | 40 |
| | Zinc oxide No. 3 | 3 | 3 | 3 | 3 | 3 | 3 |
| | Stearic acid | 1 | 1 | 1 | 1 | 1 | 1 |
| | Anti-aging agent (Nocrac 6C) | 1 | 1 | 1 | 1 | 1 | 1 |
| | Silanization reaction accelerator 1 (Urea) | 1 | 2 | 0.5 | 3 | 5 | 0 |
| | Silane compound 2 (VNB-2SSi) | 3.20 | 3.20 | 3.20 | 3.20 | 3.20 | 3.20 |
| | Sulfur (5% oil-treated) | 2.76 | 2.76 | 2.76 | 2.76 | 2.76 | 2.76 |
| | Vulcanization accelerator (Nocceler CZ) | 1 | 1 | 1 | 1 | 1 | 1 |
| | Vulcanization accelerator (Nocceler D) | 0.5 | 0.5 | 0.5 | 0.5 | 0.5 | 0.5 |
| Hardness | JIS-A hardness (index) | 106 | 110 | 105 | 106 | 105 | 100 |
| Viscoelasticity | tan δ (0°C) (index) | 111 | 112 | 111 | 113 | 115 | 100 |
| | tan δ (60°C) (index) | 73 | 67 | 77 | 66 | 66 | 100 |
| | tan δ (0°C)/tan δ (60°C) (index) | 152 | 169 | 145 | 172 | 176 | 100 |

The results of Examples 6-1 to 6-5 and Comparative Example 6-1 showed that the use of the silane coupling agent composition including the silane compound and the silanization reaction accelerator 1 (Urea) resulted in improvement in the hardness and viscoelastic characteristics of the rubber sheet including natural rubber. Thus, the use of the silane coupling agent composition of the present invention was found to enable production of a tire practically excellent in handling stability and excellent in the balance between wet grip properties and fuel economy.

### [Example 7-1]

### (Production of Silane Coupling Agent Composition, Rubber Composition, and Rubber Sheet)

First, the total amount of the silane compound 2 (VNB-2SSi) synthesized as described above and the total amount of the silanization reaction accelerator 2 (Guanidine Hydrochloride) were mixed to obtain a silane coupling agent composition. Subsequently, each of the following components was kneaded using a 100-mL kneader (Labo Plastomill manufactured by Toyo Seiki Seisaku-sho, Ltd.) to obtain a rubber composition. The details of the kneading operation performed are as the following (i) to (iii).
(i) Mixer kneading: Natural rubber was put in a closed pressurization kneader heated to 150°C, and masticated at 30 rpm for 1 minute, a measured 1/2 amount of a mixture of silica, zinc oxide, stearic acid, and an anti-aging agent and the total amount of the silane coupling agent composition prepared as described above were then put, and kneading was performed for 1 minute and 30 seconds at a rotation number increased to 50 rpm. The remaining 1/2 amount of the mixture of silica, zinc oxide, stearic acid, and anti-aging agent was added, kneading was continued for 1 minute and 30 seconds, and the ram (floating weight) was then raised to add the powder of the mixture of silica, zinc oxide, stearic acid, and anti-aging agent, existing in the surroundings, to the kneaded product using a brush. Kneading was further continued for 1 minute, the ram was then raised again to add the powder of the mixture of silica, zinc oxide, stearic acid, and anti-aging agent, existing in the surroundings, to the kneading product using a brush, kneading was further performed for 3 minutes, and the resultant was released.
(ii) Remilling: In order to improve the dispersion of silica, the kneaded product released to a closed pressurization kneader heated to 120°C and having a sufficiently decreased temperature was further kneaded at 50 rpm for 2 minutes, and then released.
(iii) Roll kneading (addition of vulcanization system): Sulfur, a vulcanization accelerator, and the like were added to the released kneaded product having a sufficiently decreased temperature with two rolls, and kneaded to obtain a rubber composition.

Then, the obtained unvulcanized rubber composition was put in a mold (150 mm × 150 mm × 2 mm), and heated and pressurized at 150°C for 25 minutes to obtain a vulcanized rubber sheet having a thickness of 2 mm.
·Natural rubber (made in Thailand, RSS #3) 100 parts by mass
·Silica AQ (trade name: Nipsil AQ, manufactured by Tosoh Corporation) 40 parts by mass
·Zinc oxide No. 3 (trade name: Ginrei R, manufactured by Toho Zinc Co., Ltd.) 3 parts by mass
·Stearic Acid (trade name: Stearic Acid 300, manufactured by New Japan Chemical Co., Ltd.) 1 part by mass
·Anti-aging agent (trade name: Nocrac 6C, manufactured by OUCHI SHINKO CHEMICAL INDUSTRIAL CO., LTD. A) 1 part by mass
·Silanization reaction accelerator 2 (trade name: Guanidine Hydrochloride, manufactured by Tokyo Chemical Industry Co., Ltd.) 2 parts by mass
·Silane compound 2 (VNB-2SSi) (Preparation Example 2) 3.20 parts by mass
·Sulfur (5% oil-treated sulfur, manufactured by Hosoi Chemical Industry Co., Ltd.) 2.76 parts by mass
·Vulcanization accelerator (trade name: Nocceler CZ, manufactured by OUCHI SHINKO CHEMICAL INDUSTRIAL CO., LTD.) 1 part by mass
·Vulcanization accelerator (trade name: Nocceler D, manufactured by OUCHI SHINKO CHEMICAL INDUSTRIAL CO., LTD.) 0.5 parts by mass

### [Example 7-2]

A silane coupling agent composition, a rubber composition, and a rubber sheet were obtained in a manner similar to that in Example 7-1 except that the silane compound (VNB-2SSi) was not added, 3.20 parts by mass of another silane compound (Si69) was added, and the amount of added sulfur was changed to 2.00 parts by mass.

### [Comparative Example 7-1]

A silane coupling agent composition, a rubber composition, and a rubber sheet were obtained in a manner similar to that in Example 7-2 except that the silanization reaction accelerator 2 was not added.

### [Evaluation of Physical Properties]

The viscoelasticity of the rubber sheets and the scorch resistance of the rubber compositions, obtained in Examples 7-1 to 7-2 and Comparative Example 7-1 as described above, were evaluated by the above-described method in a manner similar to that in Example 1-1. The measurement results and calculation results (tan δ balance) described above are set forth in Table 7. Each measured value and each calculated value were represented by indices in a case in which each value in Comparative Example 7-1 was set at 100.

**[Table 7]**

| | | Ex. 7-1 | Ex. 7-2 | Co. Ex. 7-1 |
|---|---|---|---|---|
| Composition of rubber composition (part(s) by mass) | Natural rubber (RSS #3) | 100 | 100 | 100 |
| | Silica AQ | 40 | 40 | 40 |
| | Zinc oxide No. 3 | 3 | 3 | 3 |
| | Stearic acid | 1 | 1 | 1 |
| | Anti-aging agent (Nocrac 6C) | 1 | 1 | 1 |
| | Silanization reaction accelerator 2 (Guanidine Hydrochloride) | 1 | 1 | 0 |
| | Silane compound (VNB-2SSi) | 3.20 | 0 | 0 |
| | Other silane compound (Si69) | 0 | 3.20 | 3.20 |
| | Sulfur (5% oil-treated) | 2.76 | 2.00 | 2.00 |
| | Vulcanization accelerator (Nocceler CZ) | 1 | 1 | 1 |
| | Vulcanization accelerator (Nocceler D) | 0.5 | 0.5 | 0.5 |
| Viscoelasticity | tan δ (0°C) (index) | 103 | 97 | 100 |
| | tan δ (60°C) (index) | 82 | 97 | 100 |
| | tan δ (0°C)/tan δ (60°C) (index) | 125 | 100 | 100 |
| Scorch resistance | T5 125°C (index) | 215 | 126 | 100 |

The results of Examples 7-1 to 7-2 and Comparative Example 7-1 showed that the use of the silane coupling agent composition including the silane compound and the silanization reaction accelerator 2 (Guanidine Hydrochloride) resulted in improvement in the scorch resistance of the rubber composition including natural rubber and further in improvement in the viscoelastic characteristics of the rubber sheet. Thus, the use of the silane coupling agent composition and the rubber composition of the present invention was found to result in improvement in the processability of rubber and further to enable production of a tire practically excellent in the balance between wet grip properties and fuel economy.

### [Example 8-1]

### (Production of Silane Coupling Agent Composition, Rubber Composition, and Rubber Sheet)

First, the total amount of the silane compound 2 (VNB-2SSi) synthesized as described above and the total amount of the silanization reaction accelerator 1 (Urea) were mixed to obtain a silane coupling agent composition. Subsequently, each of the following components was kneaded using a 100-mL kneader (Labo Plastomill manufactured by Toyo Seiki Seisaku-sho, Ltd.) to obtain a rubber composition. The details of the kneading operation performed are as the following (i) to (iii).
(i) Mixer kneading: Natural rubber was put in a closed pressurization kneader heated to 150°C, and masticated at 30 rpm for 1 minute, a measured 1/2 amount of a mixture of silica, zinc oxide, stearic acid, and an anti-aging agent and the total amount of the silane coupling agent composition prepared as described above were then put, and kneading was performed for 1 minute and 30 seconds at a rotation number increased to 50 rpm. The remaining 1/2 amount of the mixture of silica, zinc oxide, stearic acid, and anti-aging agent was added, kneading was continued for 1 minute and 30 seconds, and the ram (floating weight) was then raised to add the powder of the mixture of silica, zinc oxide, stearic acid, and anti-aging agent, existing in the surroundings, to the kneaded product using a brush. Kneading was further continued for 1 minute, the ram was then raised again to add the powder of the mixture of silica, zinc oxide, stearic acid, and anti-aging agent, existing in the surroundings, to the kneading product using a brush, kneading was further performed for 3 minutes, and the resultant was released.
(ii) Remilling: In order to improve the dispersion of silica, the kneaded product released to a closed pressurization kneader heated to 120°C and having a sufficiently decreased temperature was further kneaded at 50 rpm for 2 minutes, and then released.
(iii) Roll kneading (addition of vulcanization system): Sulfur, a vulcanization accelerator, and the like were added to the released kneaded product having a sufficiently decreased temperature with two rolls, and kneaded to obtain a rubber composition.

Then, the obtained unvulcanized rubber composition was put in a mold (150 mm × 150 mm × 2 mm), and heated and pressurized at 160°C for 30 minutes to obtain a vulcanized rubber sheet having a thickness of 2 mm.
·Styrene-butadiene rubber (trade name: NS616, manufactured by ZS Elastomers Co., Ltd) 70 parts by mass
·Butadiene rubber (trade name: UBEPOL BR150, manufactured by Ube Industries, Ltd.) 30 parts by mass
·Silica AQ (trade name: Nipsil AQ, manufactured by Tosoh Corporation) 80 parts by mass
·Zinc oxide No. 3 (trade name: Ginrei R, manufactured by Toho Zinc Co., Ltd.) 3 parts by mass
·Stearic Acid (trade name: Stearic Acid 300, manufactured by New Japan Chemical Co., Ltd.) 1 part by mass
·Anti-aging agent (trade name: Nocrac 6C, manufactured by OUCHI SHINKO CHEMICAL INDUSTRIAL CO., LTD. A) 1 part by mass
·Silanization reaction accelerator 1 (trade name: Urea, manufactured by Wako Pure Chemical Industries, Ltd.) 1 part by mass
·Silane compound 2 (VNB-2SSi) (Preparation Example 2) 6.40 parts by mass
·Sulfur (5% oil-treated sulfur, manufactured by Hosoi Chemical Industry Co., Ltd.) 2.52 parts by mass
·Vulcanization accelerator (trade name: Nocceler CZ, manufactured by OUCHI SHINKO CHEMICAL INDUSTRIAL CO., LTD.) 2.3 parts by mass
·Vulcanization accelerator (trade name: Nocceler D, manufactured by OUCHI SHINKO CHEMICAL INDUSTRIAL CO., LTD.) 1.1 parts by mass

### [Example 8-2]

A silane coupling agent composition, a rubber composition, and a rubber sheet were obtained in a manner similar to that in Example 8-1 except that the amount of added urea was changed to 2 parts by mass.

### [Comparative Example 8-1]

A silane coupling agent composition, a rubber composition, and a rubber sheet were obtained in a manner similar to that in Example 8-1 except that the silanization reaction accelerator 1 and the silane compound 2 (VNB-2SSi) were not added, 6.40 parts by mass of another silane compound (Si69) was added, and the amount of added sulfur was changed to 1.00 part by mass.

### [Comparative Example 8-2]

A silane coupling agent composition, a rubber composition, and a rubber sheet were obtained in a manner similar to that in Example 8-1 except that the silanization reaction accelerator 1 was not added.

### [Evaluation of Physical Properties]

The viscoelasticity and hardness of the rubber sheets obtained in Examples 8-1 to 8-2 and Comparative Examples 8-1 to 8-2 as described above were evaluated by the method described above in manners similar to those in Examples 1-1 and 6-1, respectively. The measurement results and calculation results (tan δ balance) described above are set forth in Table 8. Each measured value and each calculated value were represented by indices in a case in which each value in Comparative Example 8-1 was set at 100.

**[Table 8]**

| | | Ex. 8-1 | Ex. 8-2 | Co. Ex. 8-1 | Co. Ex. 8-2 |
|---|---|---|---|---|---|
| Composition of rubber composition (part(s) by mass) | Styrene-butadiene rubber | 70 | 70 | 70 | 70 |
| | Butadiene rubber | 30 | 30 | 30 | 30 |
| | Silica AQ | 80 | 80 | 80 | 80 |
| | Zinc oxide No. 3 | 3 | 3 | 3 | 3 |
| | Stearic acid | 1 | 1 | 1 | 1 |
| | Anti-aging agent (Nocrac 6C) | 1 | 1 | 1 | 1 |
| | Silanization reaction accelerator 1 (Urea) | 1 | 2 | 0 | 0 |
| | Silane compound 2 (VNB-2SSi) | 6.40 | 6.40 | 0 | 6.40 |
| | Other silane compound (Si69) | 0 | 0 | 6.40 | 0 |
| | Sulfur (5% oil-treated) | 2.52 | 2.52 | 1.00 | 2.52 |
| | Vulcanization accelerator (Nocceler CZ) | 2.3 | 2.3 | 2.3 | 2.3 |
| | Vulcanization accelerator (Nocceler D) | 1.1 | 1.1 | 1.1 | 1.1 |
| Hardness | JIS-A hardness (index) | 106 | 105 | 100 | 104 |
| Viscoelasticity | tan δ (0°C) (index) | 103 | 104 | 100 | 98 |
| | tan δ (60°C) (index) | 85 | 83 | 100 | 88 |
| | tan δ (0°C)/tan δ (60°C) (index) | 122 | 125 | 100 | 112 |

The results of Examples 8-1 to 8-2 and Comparative Examples 8-1 to 8-2 showed that the use of the silane coupling agent composition including the silane compound and the silanization reaction accelerator 1 (Urea) resulted in improvement in the hardness and viscoelastic characteristics of the rubber sheet. Thus, the use of the rubber composition including the silane coupling agent composition of the present invention was found to enable production of a tire practically excellent in handling stability and excellent in the balance between wet grip properties and fuel economy.

### [Example 9-1]

### (Production of Silane Coupling Agent Composition, Rubber Composition, and Rubber Sheet)

First, the total amount of a silane compound 3 (trade name: Si363, manufactured by Degussa AG) represented by the following Formula: 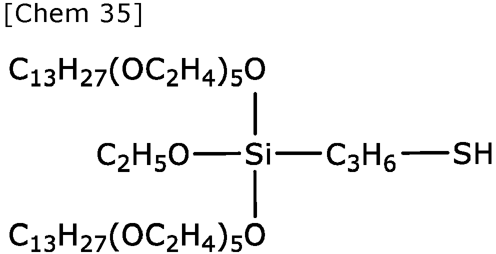 and the total amount of the silanization reaction accelerator 1 (Urea) were mixed to obtain a silane coupling agent composition.

Subsequently, each of the following components was kneaded using a 100-mL kneader (Labo Plastomill manufactured by Toyo Seiki Seisakusho, Ltd.) to obtain a rubber composition. The details of the kneading operation performed are as the following (i) to (iii).
(i) Mixer kneading: Natural rubber was put in a closed pressurization kneader heated to 150°C, and masticated at 30 rpm for 1 minute, a measured 1/2 amount of a mixture of silica, zinc oxide, stearic acid, and an anti-aging agent and the total amount of the silane coupling agent composition prepared as described above were then put, and kneading was performed for 1 minute and 30 seconds at a rotation number increased to 50 rpm. The remaining 1/2 amount of the mixture of silica, zinc oxide, stearic acid, and anti-aging agent was added, kneading was continued for 1 minute and 30 seconds, and the ram (floating weight) was then raised to add the powder of the mixture of silica, zinc oxide, stearic acid, and anti-aging agent, existing in the surroundings, to the kneaded product using a brush. Kneading was further continued for 1 minute, the ram was then raised again to add the powder of the mixture of silica, zinc oxide, stearic acid, and anti-aging agent, existing in the surroundings, to the kneading product using a brush, kneading was further performed for 3 minutes, and the resultant was released.
(ii) Remilling: In order to improve the dispersion of silica, the kneaded product released to a closed pressurization kneader heated to 120°C and having a sufficiently decreased temperature was further kneaded at 50 rpm for 2 minutes, and then released.
(iii) Roll kneading (addition of vulcanization system): Sulfur, a vulcanization accelerator, and the like were added to the released kneaded product having a sufficiently decreased temperature with two rolls, and kneaded to obtain a rubber composition.

Then, the obtained unvulcanized rubber composition was put in a mold (150 mm × 150 mm × 2 mm), and heated and pressurized at 160°C for 30 minutes to obtain a vulcanized rubber sheet having a thickness of 2 mm.
·Natural rubber (made in Thailand, RSS #3) 100 parts by mass
·Silica AQ (trade name: Nipsil AQ, manufactured by Tosoh Corporation) 40 parts by mass
·Zinc oxide No. 3 (trade name: Ginrei R, manufactured by Toho Zinc Co., Ltd.) 3 parts by mass
·Stearic Acid (trade name: Stearic Acid 300, manufactured by New Japan Chemical Co., Ltd.) 1 part by mass
·Anti-aging agent (trade name: Nocrac 6C, manufactured by OUCHI SHINKO CHEMICAL INDUSTRIAL CO., LTD. A) 1 part by mass
·Silane compound 3 (trade name: Si363, manufactured by Degussa AG) 3.2 parts by mass
·Silanization reaction accelerator 1 (trade name: Urea, manufactured by Wako Pure Chemical Industries, Ltd.) 1 part by mass
·Sulfur (5% oil-treated sulfur, manufactured by Hosoi Chemical Industry Co., Ltd.) 2.0 parts by mass
·Vulcanization accelerator (trade name: Nocceler CZ, manufactured by OUCHI SHINKO CHEMICAL INDUSTRIAL CO., LTD.) 1 part by mass
·Vulcanization accelerator (trade name: Nocceler D, manufactured by OUCHI SHINKO CHEMICAL INDUSTRIAL CO., LTD.) 0.5 parts by mass

### [Example 9-2]

A silane coupling agent composition, a rubber composition, and a rubber sheet were obtained in a manner similar to that in Example 9-1 except that the silanization reaction accelerator 1 (Urea) was not added, and 1 part by mass of the silanization reaction accelerator 2 (Guanidine Hydrochloride) was added.

### [Example 9-3]

A silane coupling agent composition, a rubber composition, and a rubber sheet were obtained in a manner similar to that in Example 9-1 except that the amount of added silane compound 3 (Si363) was changed to 1.6 parts by mass, and 1.6 parts by mass of the other silane compound (Si69, manufactured by Degussa AG) was added.

### [Example 9-4]

A silane coupling agent composition, a rubber composition, and a rubber sheet were obtained in a manner similar to that in Example 9-1 except that the silane compound 3 (Si363) was not added, and 3.2 parts by mass of the other silane compound (Si69) was added.

### [Comparative Example 9-1]

A silane coupling agent composition, a rubber composition, and a rubber sheet were obtained in a manner similar to that in Example 9-3 except that the silanization reaction accelerator 1 (Urea) was not added.

### [Comparative Example 9-2]

A silane coupling agent composition, a rubber composition, and a rubber sheet were obtained in a manner similar to that in Example 9-1 except that the silanization reaction accelerator 1 (Urea) was not added.

### [Comparative Example 9-3]

A silane coupling agent composition, a rubber composition, and a rubber sheet were obtained in a manner similar to that in Example 9-4 except that the silanization reaction accelerator 1 (Urea) was not added.

### [Evaluation of Physical Properties]

The viscoelasticity of the rubber sheets obtained in Examples 9-1 to 9-4 and Comparative Examples 9-1 to 9-3 was evaluated by the above-described method in a manner similar to that in Example 1-1. Moreover, the uncross-linked compound viscosity of the rubber composition was evaluated by the above-described method in a manner similar to that in Example 4-1. In addition, the hardness of the rubber sheets was evaluated by the above-described method in a manner similar to that in Example 6-1.

### (Tensile Strength)

No. 3 dumbbell-shaped test pieces were obtained by punching the rubber sheets obtained in Examples 9-1 to 9-4 and Comparative Examples 9-1 to 9-3, and were subjected to a tensile test at a tension speed of 500 mm/min according to JIS K6251 (published in 2010), and the 100% moduli thereof [MPa] were measured at room temperature (25°C). The larger measurement result means the higher tensile strength of the rubber sheet and the superior performance of the tire.

The measurement results and calculation results (tan δ balance) described above are set forth in Table 9. Each measured value and each calculated value were represented by indices in a case in which each value in Comparative Example 9-3 was set at 100.

**[Table 9]**

| | | Ex. 9-1 | Ex. 9-2 | Ex. 9-3 | Ex. 9-4 | Co. Ex. 9-1 | Co. Ex. 9-2 | Co. Ex. 9-3 |
|---|---|---|---|---|---|---|---|---|
| Composition of rubber composition (part(s) by mass) | Natural rubber (RSS #3) | 100 | 100 | 100 | 100 | 100 | 100 | 100 |
| | Silica AQ | 40 | 40 | 40 | 40 | 40 | 40 | 40 |
| | Zinc oxide No. 3 | 3 | 3 | 3 | 3 | 3 | 3 | 3 |
| | Stearic acid | 1 | 1 | 1 | 1 | 1 | 1 | 1 |
| | Anti-aqinq agent (Nocrac 6C) | 1 | 1 | 1 | 1 | 1 | 1 | 1 |
| | Silane compound 3 (Si363) | 3.2 | 3,2 | 1.6 | 0 | 1.6 | 3.2 | 0 |
| | Other silane compound (Si69) | 0 | 0 | 1.6 | 3.2 | 1.6 | 0 | 3.2 |
| | Silanization reaction accelerator 1 (Urea) | 1 | 0 | 1 | 1 | 0 | 0 | 0 |
| | Silanization reaction accelerator 2 (Guanidine Hydrochloride) | 0 | 1 | 0 | 0 | 0 | 0 | 0 |
| | Sulfur (5% oil-treated) | 2.0 | 2.0 | 2.0 | 2.0 | 2.0 | 2.0 | 2.0 |
| | Vulcanization accelerator (Nocceler CZ) | 1 | 1 | 1 | 1 | 1 | 1 | 1 |
| | Vulcanization accelerator (Nocceler D) | 0.5 | 0.5 | 0.5 | 0.5 | 0.5 | 0.5 | 0.5 |
| Viscosity of uncross-linked compound | ML1 + 4 @ 100°C (index) | 94 | 94 | 94 | 92 | 106 | 110 | 100 |
| Hardness | JIS-A hardness (index) | 103 | 103 | 102 | 105 | 107 | 112 | 100 |
| Viscoelasticity | tan δ (0°C) (index) | 102 | 98 | 100 | 97 | 99 | 100 | 100 |
| | tan δ (60°C) (index) | 78 | 82 | 81 | 82 | 94 | 97 | 100 |
| | tan δ (0°C)/tan δ (60°C) (index) | 131 | 120 | 123 | 118 | 105 | 103 | 100 |
| Tensile strength | 100% modulus (index) | 113 | 106 | 110 | 106 | 97 | 97 | 100 |

The results of Examples 9-1 to 9-4 and Comparative Examples 9-1 to 9-3 showed that the use of the silane coupling agent composition including the silane compound, silanization reaction accelerator 1 (Urea), and/or silanization reaction accelerator 2 (Guanidine Hydrochloride) resulted in the decreased viscosity of the rubber composition in the case of uncross-linked compound, and further in improvement in the hardness, viscoelastic characteristics, and tensile strength of the rubber sheet. Thus, the use of the silane coupling agent composition and the rubber composition of the present invention was found to result in improvement in the processability of rubber and further to enable production of a tire practically excellent in handling stability and excellent in the balance between wet grip properties and fuel economy.

### [Example 10-1]

First, the total amount of the silane compound 1 (VNB-SSi) and the total amount of a silanization reaction accelerator 4 (Hexamethylenetetramine) were mixed to obtain a silane coupling agent composition. Subsequently, each of the following components was kneaded using a 250-mL kneader (Labo Plastomill manufactured by Toyo Seiki Seisaku-sho, Ltd.) to obtain a rubber composition. The details of the kneading operation performed are as the following (i) to (iii).
(i) Mixer kneading: Natural rubber was put in a closed pressurization kneader heated to 135°C, and masticated at 30 rpm for 1 minute, a measured 1/2 amount of a mixture of silica, zinc oxide, stearic acid, and an anti-aging agent and the total amount of the silane coupling agent composition prepared as described above were then put, and kneading was performed for 1 minute and 30 seconds at a rotation number increased to 50 rpm. The remaining 1/2 amount of the mixture of silica, zinc oxide, stearic acid, and anti-aging agent was added, kneading was continued for 1 minute and 30 seconds, and the ram (floating weight) was then raised to add the powder of the mixture of silica, zinc oxide, stearic acid, and anti-aging agent, existing in the surroundings, to the kneaded product using a brush. Kneading was further continued for 1 minute, the ram was then raised again to add the powder of the mixture of silica, zinc oxide, stearic acid, and anti-aging agent, existing in the surroundings, to the kneading product using a brush, kneading was further performed for 3 minutes, and the resultant was released.
(ii) Remilling: In order to improve the dispersion of silica, the kneaded product released to a closed pressurization kneader heated to 120°C and having a sufficiently decreased temperature was further kneaded at 50 rpm for 2 minutes, and then released.
(iii) Roll kneading (addition of vulcanization system): Sulfur, a vulcanization accelerator, and the like were added to the released kneaded product having a sufficiently decreased temperature with two rolls, and kneaded to obtain a rubber composition.

Then, the obtained unvulcanized rubber composition was put in a mold (150 mm × 150 mm × 2 mm), and heated and pressurized at 150°C for 30 minutes to obtain a vulcanized rubber sheet having a thickness of 1 mm.
·Natural rubber (made in Thailand, RSS #3) 100 parts by mass
·Silica AQ (trade name: Nipsil AQ, manufactured by Tosoh Corporation) 60 parts by mass
·Zinc oxide No. 3 (trade name: Ginrei R, manufactured by Toho Zinc Co., Ltd.) 3 parts by mass
·Stearic Acid (trade name: Stearic Acid 300, manufactured by New Japan Chemical Co., Ltd.) 1 part by mass
·Anti-aging agent (trade name: Nocrac 6C, manufactured by OUCHI SHINKO CHEMICAL INDUSTRIAL CO., LTD. A) 1 part by mass
·Silane compound 1 (VNB-SSi) (Preparation Example 1) 4.8 parts by mass
·Silanization reaction accelerator 4 (trade name: Hexamethylenetetramine, manufactured by FUJIFILM Wako Pure Chemical Corporation) 0.50 parts by mass
·Sulfur (5% oil-treated sulfur, manufactured by Hosoi Chemical Industry Co., Ltd.) 3.14 parts by mass
·Vulcanization accelerator (trade name: Nocceler CZ, manufactured by OUCHI SHINKO CHEMICAL INDUSTRIAL CO., LTD.) 1 part by mass
·Vulcanization accelerator (trade name: Nocceler D, manufactured by OUCHI SHINKO CHEMICAL INDUSTRIAL CO., LTD.) 0.5 parts by mass

### [Example 10-2]

A silane coupling agent composition, a rubber composition, and a rubber sheet were obtained in a manner similar to that in Example 10-1 except that the amount of added silanization reaction accelerator 4 (Hexamethylenetetramine) was changed to 1.00 part by mass.

### [Example 10-3]

A silane coupling agent composition, a rubber composition, and a rubber sheet were obtained in a manner similar to that in Example 10-1 except that the amount of added silanization reaction accelerator 4 (Hexamethylenetetramine) was changed to 1.50 parts by mass.

### [Example 10-4]

A silane coupling agent composition, a rubber composition, and a rubber sheet were obtained in a manner similar to that in Example 10-1 except that the amount of added silanization reaction accelerator 4 (Hexamethylenetetramine) was changed to 1.76 parts by mass.

### [Example 10-5]

A silane coupling agent composition, a rubber composition, and a rubber sheet were obtained in a manner similar to that in Example 10-1 except that the silanization reaction accelerator 4 (Hexamethylenetetramine) was not added, and 0.50 parts by mass of a silanization reaction accelerator 5 (trade name: Paraformaldehyde, manufactured by FUJIFILM Wako Pure Chemical Corporation) was added.

### [Example 10-6]

A silane coupling agent composition, a rubber composition, and a rubber sheet were obtained in a manner similar to that in Example 10-5 except that the amount of added silanization reaction accelerator 5 (Paraformaldehyde) was changed to 1.00 part by mass.

### [Example 10-7]

A silane coupling agent composition, a rubber composition, and a rubber sheet were obtained in a manner similar to that in Example 10-5 except that the amount of added silanization reaction accelerator 5 (Paraformaldehyde) was changed to 1.50 parts by mass.

### [Example 10-8]

A silane coupling agent composition, a rubber composition, and a rubber sheet were obtained in a manner similar to that in Example 10-1 except that the silanization reaction accelerator 4 (Hexamethylenetetramine) was not added, and 1.50 parts by mass of a silanization reaction accelerator 6 (trade name: Aqueous ammonia (having a concentration of 25% by mass), manufactured by FUJIFILM Wako Pure Chemical Corporation) was added.

### [Example 10-9]

A silane coupling agent composition, a rubber composition, and a rubber sheet were obtained in a manner similar to that in Example 10-8 except that the amount of added silanization reaction accelerator 6 (Aqueous ammonia (having a concentration of 25% by mass)) was changed to 3.45 parts by mass.

### [Comparative Example 10-1]

A silane coupling agent composition, a rubber composition, and a rubber sheet were obtained in a manner similar to that in Example 10-1 except that the silanization reaction accelerator 4 (Hexamethylenetetramine) was not added.

### [Comparative Example 10-2]

A silane coupling agent composition, a rubber composition, and a rubber sheet were obtained in a manner similar to that in Example 10-1 except that the silane compound 1 (VNB-SSi) and the silanization reaction accelerator 4 (Hexamethylenetetramine) were not added, 4.80 parts by mass of another silane compound (Si69) was added, and the amount of added sulfur was changed to 1.90 parts by mass.

### [Evaluation of Physical Properties]

The viscoelasticity of the rubber sheets obtained in Examples 10-1 to 10-9 and Comparative Examples 10-1 to 10-2 was evaluated by the above-described method in a manner similar to that in Example 1-1. Moreover, the scorch resistance of the rubber compositions was evaluated by the above-described method in a manner similar to that in Example 1-1.

### (Abrasion Resistance)

The abrasion masses (abrasion volumes) of the rubber sheets obtained in Examples 10-1 to 10-9 and Comparative Examples 10-1 to 10-2 were measured using a DIN abrasion tester (model number: No. 151, manufactured by YASUDA SEIKI SEISAKUSHO, LTD.) under conditions of an additional force of 10.0 N, a drum rotation speed of 40 times/min, and a traversing speed of 4.20 mm/drum rotation according to JIS K 6264-2 to evaluate abrasion resistance. The less value means superior abrasion resistance.

The measurement results and calculation results (tan δ balance) described above are set forth in Table 10. Each measured value and each calculated value were represented by indices in a case in which each value in Comparative Example 10-2 was set at 100.

**[Table 10]**

| | | Ex. 10-1 | Ex. 10-2 | Ex. 10-3 | Ex. 10-4 | Ex. 10-5 | Ex. 10-6 | Ex. 10-7 | Ex. 10-8 | Ex. 10-9 | Co. Ex. 10-1 | Co. Ex. 10-2 |
|---|---|---|---|---|---|---|---|---|---|---|---|---|
| Composition of rubber composition (part(s) by mass) | Natural rubber (RSS #3) | 100 | 100 | 100 | 100 | 100 | 100 | 100 | 100 | 100 | 100 | 100 |
| | Silica AQ | 60 | 60 | 60 | 60 | 60 | 60 | 60 | 60 | 60 | 60 | 60 |
| | Zinc oxide No. 3 | 3 | 3 | 3 | 3 | 3 | 3 | 3 | 3 | 3 | 3 | 3 |
| | Stearic acid | 1 | 1 | 1 | 1 | 1 | 1 | 1 | 1 | 1 | 1 | 1 |
| | Anti-aging agent (Nocrac 6C) | 1 | 1 | 1 | 1 | 1 | 1 | 1 | 1 | 1 | 1 | 1 |
| | Silane compound 1 (VNB-SSi) | 4.80 | 4.80 | 4.80 | 4.80 | 4.80 | 4.80 | 4.80 | 4.80 | 4.80 | 4.80 | 0 |
| | Other silane compound (Si69) | 0 | 0 | 0 | 0 | 0 | 0 | 0 | 0 | 0 | 0 | 4.80 |
| | Silanization reaction accelerator 4 (Hexamethylenetetramine) | 0.50 | 1.00 | 1.50 | 1.76 | 0 | 0 | 0 | 0 | 0 | 0 | 0 |
| | Silanization reaction accelerator 5 (Paraformaldehyde) | 0 | 0 | 0 | 0 | 0.50 | 1.00 | 1.50 | 0 | 0 | 0 | 0 |
| | Silanization reaction accelerator 6 (Aqueous ammonia 25 w%) | 0 | 0 | 0 | 0 | 0 | 0 | 0 | 1.50 | 3.45 | 0 | 0 |
| | Sulfur (5% oil-treated) | 3.14 | 3.14 | 3.14 | 3.14 | 3.14 | 3.14 | 3.14 | 3.14 | 3.14 | 3.14 | 1.90 |
| | Vulcanization accelerator (Nocceler CZ) | 1 | 1 | 1 | 1 | 1 | 1 | 1 | 1 | 1 | 1 | 1 |
| | Vulcanization accelerator (Nocceler D) | 0.5 | 0.5 | 0.5 | 0.5 | 0.5 | 0.5 | 0.5 | 0.5 | 0.5 | 0.5 | 0.5 |
| Viscoelasticity | tan δ (0°C) (index) | 84 | 77 | 76 | 81 | 84 | 83 | 80 | 86 | 84 | 91 | 100 |
| | tan δ (60°C) (index) | 83 | 78 | 75 | 74 | 85 | 82 | 82 | 88 | 88 | 93 | 100 |
| | tan δ (0°C)/tan δ (60°C) (index) | 101 | 99 | 101 | 108 | 99 | 101 | 97 | 98 | 96 | 97 | 100 |
| Abrasion resistance | Abrasion mass (index) | 98 | 94 | 94 | 93 | 103 | 100 | 101 | 101 | 105 | 110 | 100 |
| Scorch resistance | T5 125°C (index) | 234 | 217 | 194 | 140 | 194 | 171 | 169 | 229 | 197 | 331 | 100 |

The results of Examples 10-1 to 10-9 and Comparative Examples 10-1 to 10-2 showed that the use of the silane coupling agent composition including the silane compound and at least one of the silanization reaction accelerator 4 (Hexamethylenetetramine), the silanization reaction accelerator 5 (Paraformaldehyde), and the silanization reaction accelerator 6 (ammonia) resulted in improvement in the scorch resistance of the rubber composition. Thus, the use of the silane coupling agent composition and the rubber composition of the present invention was found to result in improvement in the processability of rubber and further to enable production of a tire practically excellent in abrasion resistance and excellent in the balance between wet grip properties and fuel economy.

### [Example 11-1]

First, the total amount of a silane compound 4 (triethoxyvinylsilane) and the total amount of the silanization reaction accelerator 1 (Urea) were mixed to obtain a silane coupling agent composition. Subsequently, each of the following components was kneaded using a 250-mL kneader (Labo Plastomill manufactured by Toyo Seiki Seisaku-sho, Ltd.) to obtain a rubber composition. The details of the kneading operation performed are as the following (i) to (iii).
(i) Mixer kneading: Natural rubber was put in a closed pressurization kneader heated to 135°C, and masticated at 30 rpm for 1 minute, a measured 1/2 amount of a mixture of silica, zinc oxide, stearic acid, and an anti-aging agent and the total amount of the silane coupling agent composition prepared as described above were then put, and kneading was performed for 1 minute and 30 seconds at a rotation number increased to 50 rpm. The remaining 1/2 amount of the mixture of silica, zinc oxide, stearic acid, and anti-aging agent was added, kneading was continued for 1 minute and 30 seconds, and the ram (floating weight) was then raised to add the powder of the mixture of silica, zinc oxide, stearic acid, and anti-aging agent, existing in the surroundings, to the kneaded product using a brush. Kneading was further continued for 1 minute, the ram was then raised again to add the powder of the mixture of silica, zinc oxide, stearic acid, and anti-aging agent, existing in the surroundings, to the kneading product using a brush, kneading was further performed for 3 minutes, and the resultant was released.
(ii) Remilling: In order to improve the dispersion of silica, the kneaded product released to a closed pressurization kneader heated to 120°C and having a sufficiently decreased temperature was further kneaded at 50 rpm for 2 minutes, and then released.
(iii) Roll kneading (addition of vulcanization system): Sulfur, a vulcanization accelerator, and the like were added to the released kneaded product having a sufficiently decreased temperature with two rolls, and kneaded to obtain a rubber composition.

Then, the obtained unvulcanized rubber composition was put in a mold (150 mm × 150 mm × 2 mm), and heated and pressurized at 150°C for 30 minutes to obtain a vulcanized rubber sheet having a thickness of 1 mm.
·Natural rubber (made in Thailand, RSS #3) 100 parts by mass
·Silica AQ (trade name: Nipsil AQ, manufactured by Tosoh Corporation) 60 parts by mass
·Zinc oxide No. 3 (trade name: Ginrei R, manufactured by Toho Zinc Co., Ltd.) 3 parts by mass
·Stearic Acid (trade name: Stearic Acid 300, manufactured by New Japan Chemical Co., Ltd.) 1 part by mass
·Anti-aging agent (trade name: Nocrac 6C, manufactured by OUCHI SHINKO CHEMICAL INDUSTRIAL CO., LTD. A) 1 part by mass
·Silane compound 4 (triethoxyvinylsilane, trade name: V0044, manufactured by Tokyo Chemical Industry Co., Ltd.) 6.45 parts by mass
·Silanization reaction accelerator 1 (trade name: Urea, manufactured by Wako Pure Chemical Industries, Ltd.) 1.50 parts by mass
·Sulfur (5% oil-treated sulfur, manufactured by Hosoi Chemical Industry Co., Ltd.) 3.14 parts by mass
·Vulcanization accelerator (trade name: Nocceler CZ, manufactured by OUCHI SHINKO CHEMICAL INDUSTRIAL CO., LTD.) 1 part by mass
·Vulcanization accelerator (trade name: Nocceler D, manufactured by OUCHI SHINKO CHEMICAL INDUSTRIAL CO., LTD.) 0.5 parts by mass

### [Example 11-2]

A silane coupling agent composition, a rubber composition, and a rubber sheet were obtained in a manner similar to that in Example 11-1 except that the silanization reaction accelerator 1 (Urea) was not added, and 1.50 parts by mass of a silanization reaction accelerator 7 (ethylene urea, trade name: I0005, manufactured by Tokyo Chemical Industry Co., Ltd.) was added.

### [Example 11-3]

A silane coupling agent composition, a rubber composition, and a rubber sheet were obtained in a manner similar to that in Example 11-1 except that the silanization reaction accelerator 1 (Urea) was not added, and 1.50 parts by mass of a silanization reaction accelerator 9 (cyanuric acid, trade name: C0459, manufactured by Tokyo Chemical Industry Co., Ltd.) was added.

### [Example 11-4]

A silane coupling agent composition, a rubber composition, and a rubber sheet were obtained in a manner similar to that in Example 11-1 except that the silanization reaction accelerator 1 (Urea) was not added, and 1.50 parts by mass of a silanization reaction accelerator 10 (melamine, trade name: T0337, manufactured by Tokyo Chemical Industry Co., Ltd.) was added.

### [Example 11-5]

A silane coupling agent composition, a rubber composition, and a rubber sheet were obtained in a manner similar to that in Example 11-1 except that the natural rubber was not added, and 100 parts by mass of synthetic isoprene rubber (trade name: IR-2200, manufactured by Zeon Corporation) was added.

### [Example 11-6]

A silane coupling agent composition, a rubber composition, and a rubber sheet were obtained in a manner similar to that in Example 11-2 except that the natural rubber was not added, and 100 parts by mass of synthetic isoprene rubber (IR-2200) was added.

### [Example 11-7]

A silane coupling agent composition, a rubber composition, and a rubber sheet were obtained in a manner similar to that in Example 11-5 except that the silanization reaction accelerator 1 (Urea) was not added, and 1.50 parts by mass of a silanization reaction accelerator 8 (hydantoin, trade name: H0167, manufactured by Tokyo Chemical Industry Co., Ltd.) was added.

### [Example 11-8]

A silane coupling agent composition, a rubber composition, and a rubber sheet were obtained in a manner similar to that in Example 11-4 except that the natural rubber was not added, and 100 parts by mass of synthetic isoprene rubber (IR-2200) was added.

### [Comparative Example 11-1]

A silane coupling agent composition, a rubber composition, and a rubber sheet were obtained in a manner similar to that in Example 11-1 except that the silane compound 4 (VNB-SSi) and the silanization reaction accelerator 1 (Urea) were not added, 4.80 parts by mass of another silane compound (Si69) was added, and the amount of added sulfur was changed to 2.00 parts by mass.

### [Evaluation of Physical Properties]

The viscoelasticity of the rubber sheets obtained in Examples 11-1 to 11-8 and Comparative Example 11-1 was evaluated by the above-described method in a manner similar to that in Example 1-1. The abrasion resistance of the rubber sheets was evaluated by the above-described method in a manner similar to that in Example 10-1. Moreover, the uncross-linked compound viscosity of the rubber composition was evaluated by the above-described method in a manner similar to that in Example 4-1. The scorch resistance of the rubber compositions was evaluated by the above-described method in a manner similar to that in Example 1-1.

The measurement results and calculation results (tan δ balance) described above are set forth in Table 11. Each measured value and each calculated value were represented by indices in a case in which each value in Comparative Example 11-1 was set at 100.

**[Table 11]**

| | | Ex. 11-1 | Ex. 11-2 | Ex. 11-3 | Ex. 11-4 | Ex. 11-5 | Ex. 11-6 | Ex. 11-7 | Ex. 11-8 | Co. Ex. 11-1 |
|---|---|---|---|---|---|---|---|---|---|---|
| Composition of rubber composition (part(s) by mass) | Natural rubber (RSS #3) | 100 | 100 | 100 | 100 | 0 | 0 | 0 | 0 | 100 |
| | Synthetic IR (IR-2200) | 0 | 0 | 0 | 0 | 100 | 100 | 100 | 100 | 0 |
| | Silica AQ | 60 | 60 | 60 | 60 | 60 | 60 | 60 | 60 | 60 |
| | Zinc oxide No. 3 | 3 | 3 | 3 | 3 | 3 | 3 | 3 | 3 | 3 |
| | Stearic acid | 1 | 1 | 1 | 1 | 1 | 1 | 1 | 1 | 1 |
| | Anti-aging agent (Nocrac 6C) | 1 | 1 | 1 | 1 | 1 | 1 | 1 | 1 | 1 |
| | Silane compound 4 (triethoxyvinylsilane) | 4.80 | 4.80 | 4.80 | 4.80 | 4.80 | 4.80 | 4.80 | 4.80 | 0 |
| | Other silane compound (Si69) | 0 | 0 | 0 | 0 | 0 | 0 | 0 | 0 | 4.80 |
| | Silanization reaction accelerator 1 (Urea) | 1.50 | 0 | 0 | 0 | 1.50 | 0 | 0 | 0 | - |
| | Silanization reaction accelerator 7 (ethylene urea) | 0 | 1.50 | 0 | 0 | 0 | 1.50 | 0 | 0 | - |
| | Silanization reaction accelerator 8 (hydantoin) | 0 | 0 | 0 | 0 | 0 | 0 | 1.50 | 0 | - |
| | Silanization reaction accelerator 9 (cyanuric acid) | 0 | 0 | 1.50 | 0 | 0 | 0 | 0 | 0 | - |
| | Silanization reaction accelerator 10 (melamine) | 0 | 0 | 0 | 1.50 | 0 | 0 | 0 | 1.50 | - |
| | Sulfur (5% oil-treated) | 3.14 | 3.14 | 3.14 | 3.14 | 3.14 | 3.14 | 3.14 | 3.14 | 2.00 |
| | Vulcanization accelerator (Nocceler CZ) | 1 | 1 | 1 | 1 | 1 | 1 | 1 | 1 | 1 |
| | Vulcanization accelerator (Nocceler D) | 0.5 | 0.5 | 0.5 | 0.5 | 0.5 | 0.5 | 0.5 | 0.5 | 0.5 |
| Viscoelasticity | tan δ (0°C) (index) | 89 | 88 | 96 | 93 | 92 | 88 | 90 | 94 | 100 |
| | tan δ (60°C) (index) | 81 | 85 | 97 | 77 | 80 | 83 | 89 | 80 | 100 |
| | tan δ (0°C)/tan δ (60°C) (index) | 110 | 103 | 99 | 121 | 115 | 107 | 100 | 118 | 100 |
| Abrasion resistance | Abrasion mass (index) | 84 | 97 | 125 | 93 | 80 | 91 | 130 | 92 | 100 |
| Compound viscosity | ML1 + 4@100°C (index) | 85 | 89 | 94 | 85 | 91 | 95 | 94 | 96 | 100 |
| Scorch resistance | T5 125°C (index) | 303 | 364 | 396 | 434 | 255 | 445 | 448 | 459 | 100 |

The results of Examples 11-1 to 11-8 and Comparative Example 11-1 showed that the use of the silane coupling agent composition including the silane compound and at least one of the silanization reaction accelerator 1 (Urea), the silanization reaction accelerator 7 (ethylene urea), the silanization reaction accelerator 8 (hydantoin), the silanization reaction accelerator 9 (cyanuric acid), and the silanization reaction accelerator 10 (melamine) resulted in improvement in the scorch resistance of the rubber composition. Thus, the use of the silane coupling agent composition and the rubber composition of the present invention was found to result in improvement in the processability of rubber and further to enable production of a tire practically excellent in abrasion resistance and excellent in the balance between wet grip properties and fuel economy.

### [Example 12-1]

First, the total amount of a silane compound 1 (triethoxy VNB-SSi) and the total amount of the silanization reaction accelerator 1 (Urea) were mixed to obtain a silane coupling agent composition. Subsequently, each of the following components was kneaded using a 250-mL kneader (Labo Plastomill manufactured by Toyo Seiki Seisaku-sho, Ltd.) to obtain a rubber composition. The details of the kneading operation performed are as the following (i) to (iii).
(i) Mixer kneading: Natural rubber was put in a closed pressurization kneader heated to 135°C, and masticated at 30 rpm for 1 minute, a measured 1/2 amount of a mixture of silica, zinc oxide, stearic acid, and an anti-aging agent and the total amount of the silane coupling agent composition prepared as described above were then put, and kneading was performed for 1 minute and 30 seconds at a rotation number increased to 50 rpm. The remaining 1/2 amount of the mixture of silica, zinc oxide, stearic acid, and anti-aging agent was added, kneading was continued for 1 minute and 30 seconds, and the ram (floating weight) was then raised to add the powder of the mixture of silica, zinc oxide, stearic acid, and anti-aging agent, existing in the surroundings, to the kneaded product using a brush. Kneading was further continued for 1 minute, the ram was then raised again to add the powder of the mixture of silica, zinc oxide, stearic acid, and anti-aging agent, existing in the surroundings, to the kneading product using a brush, kneading was further performed for 3 minutes, and the resultant was released.
(ii) Remilling: In order to improve the dispersion of silica, the kneaded product released to a closed pressurization kneader heated to 120°C and having a sufficiently decreased temperature was further kneaded at 50 rpm for 2 minutes, and then released.
(iii) Roll kneading (addition of vulcanization system): Sulfur, a vulcanization accelerator, and the like were added to the released kneaded product having a sufficiently decreased temperature with two rolls, and kneaded to obtain a rubber composition.

Then, the obtained unvulcanized rubber composition was put in a mold (150 mm × 150 mm × 2 mm), and heated and pressurized at 150°C for 30 minutes to obtain a vulcanized rubber sheet having a thickness of 1 mm.
·Natural rubber (made in Thailand, RSS #3) 100 parts by mass
·Silica AQ (trade name: Nipsil AQ, manufactured by Tosoh Corporation) 60 parts by mass
·Zinc oxide No. 3 (trade name: Ginrei R, manufactured by Toho Zinc Co., Ltd.) 3 parts by mass
·Stearic Acid (trade name: Stearic Acid 300, manufactured by New Japan Chemical Co., Ltd.) 1 part by mass
·Anti-aging agent (trade name: Nocrac 6C, manufactured by OUCHI SHINKO CHEMICAL INDUSTRIAL CO., LTD. A) 1 part by mass
·Silane compound 1 (VNB-SSi) 6.45 parts by mass
·Silanization reaction accelerator 1 (trade name: Urea, manufactured by Wako Pure Chemical Industries, Ltd.) 1.5 parts by mass
·Sulfur (5% oil-treated sulfur, manufactured by Hosoi Chemical Industry Co., Ltd.) 3.14 parts by mass
·Vulcanization accelerator (trade name: Nocceler CZ, manufactured by OUCHI SHINKO CHEMICAL INDUSTRIAL CO., LTD.) 1 part by mass
·Vulcanization accelerator (trade name: Nocceler D, manufactured by OUCHI SHINKO CHEMICAL INDUSTRIAL CO., LTD.) 0.5 parts by mass

### [Example 12-2]

A silane coupling agent composition, a rubber composition, and a rubber sheet were obtained in manner similar to that in Example 12-1 except that the silane compound 1 (VNB-SSi) was not added, and 3.61 parts by mass of a silane compound 5 (allyltriethoxysilane, trade name: A0785, manufactured by Tokyo Chemical Industry Co., Ltd.) was added.

### [Example 12-3]

A silane coupling agent composition, a rubber composition, and a rubber sheet were obtained in a manner similar to that in Example 12-1 except that the silane compound 1 (triethoxy VNB-SSi) was not added, and 4.65 parts by mass of a silane compound 6 (3-methacryloxypropyltriethoxysilane, trade name: KBE-503, manufactured by Shin-Etsu Chemical Co., Ltd.) was added.

### [Example 12-4]

First, trimethoxyocten-1-ylsilane (0.075 mol), ethanol (0.5 mol), and 5% by mol of sodium methoxide as a catalyst were put in a flask, stirred at 78°C, and allowed to react for 2 hours to obtain a silane compound 7. GC measurement was performed to confirm the disappearance of trimethoxyocten-1-ylsilane. NMR measurement confirmed that the obtained silane compound 7 was triethoxyocten-1-ylsilane.

A silane coupling agent composition, a rubber composition, and a rubber sheet were obtained in a manner similar to that in Example 12-1 except that the silane compound 1 (triethoxy VNB-SSi) was not added, and 4.89 parts by mass of the silane compound 7 (triethoxyocten-1-ylsilane) was added.

### [Example 12-5]

A silane compound 8 (trimethoxy VNB-SSi) was obtained using 3-mercaptopropyltriethoxysilane instead of 3-mercaptopropyltrimethoxysilane in the synthesis of the silane compound 1 (triethoxy VNB-SSi) described above.

A silane coupling agent composition, a rubber composition, and a rubber sheet were obtained in a manner similar to that in Example 12-1 except that the silane compound 1 (triethoxy VNB-SSi) was not added, and 5.66 parts by mass of the silane compound 8 (trimethoxy VNB-SSi) was added.

### [Example 12-6]

A silane coupling agent composition, a rubber composition, and a rubber sheet were obtained in manner similar to that in Example 12-1 except that the silane compound 1 (triethoxy VNB-SSi) was not added, and 3.10 parts by mass of a silane compound 9 (allyltrimethoxysilane, trade name: A1504, manufactured by Tokyo Chemical Industry Co., Ltd.) was added.

### [Example 12-7]

A silane coupling agent composition, a rubber composition, and a rubber sheet were obtained in manner similar to that in Example 12-1 except that the silane compound 1 (triethoxy VNB-SSi) was not added, and 3.95 parts by mass of a silane compound 10 (trimethoxy 4-vinylphenylsilane, trade name: T3185, manufactured by Tokyo Chemical Industry Co., Ltd.) was added.

### [Example 12-8]

A silane coupling agent composition, a rubber composition, and a rubber sheet were obtained in manner similar to that in Example 12-1 except that the silane compound 1 (triethoxy VNB-SSi) was not added, and 4.12 parts by mass of a silane compound 11 (trimethoxyocten-1-ylsilane, trade name: T3359, manufactured by Tokyo Chemical Industry Co., Ltd.) was added.

### [Comparative Example 12-1]

A silane coupling agent composition, a rubber composition, and a rubber sheet were obtained in a manner similar to that in Example 12-1 except that the silane compound 1 (VNB-SSi) and the silanization reaction accelerator 1 (Urea) were not added, 4.80 parts by mass of another silane compound (Si69) was added, and the amount of added sulfur was changed to 1.90 parts by mass.

### [Evaluation of Physical Properties]

The viscoelasticity of the rubber sheets obtained in Examples 12-1 to 12-8 and Comparative Example 12-1 was evaluated by the above-described method in a manner similar to that in Example 1-1. The abrasion resistance of the rubber sheets was evaluated by the above-described method in a manner similar to that in Example 10-1. The scorch resistance of the rubber compositions was evaluated by the above-described method in a manner similar to that in Example 1-1.

The measurement results and calculation results (tan δ balance) described above are set forth in Table 12. Each measured value and each calculated value were represented by indices in a case in which each value in Comparative Example 12-1 was set at 100.

Moreover, the uncross-linked compound viscosity of the rubber composition was evaluated by the above-described method in a manner similar to that in Example 4-1. As a result, the value in Example 12-1 was 57, the value in Example 12-4 was 78, the value in Example 12-5 was 55, the value in Example 12-7 was 97, and the value in Example 12-8 was 73 in the case in which each value in Comparative Example 12-1 was set at 100.

**[Table 12]**

| | | Ex. 12-1 | Ex. 12-2 | Ex. 12-3 | Ex. 12-4 | Ex. 12-5 | Ex. 12-6 | Ex. 12-7 | Ex. 12-8 | Co.Ex. 12-1 |
|---|---|---|---|---|---|---|---|---|---|---|
| Composition of rubber composition (part(s) by mass) | Natural rubber (RSS #3) | 100 | 100 | 100 | 100 | 100 | 100 | 100 | 100 | 100 |
| | Silica AQ | 60 | 60 | 60 | 60 | 60 | 60 | 60 | 60 | 60 |
| | Zinc oxide No. 3 | 3 | 3 | 3 | 3 | 3 | 3 | 3 | 3 | 3 |
| | Stearic acid | 1 | 1 | 1 | 1 | 1 | 1 | 1 | 1 | 1 |
| | Anti-aging agent (Nocrac 6C) | 1 | 1 | 1 | 1 | 1 | 1 | 1 | 1 | 1 |
| | Silane compound 1 (triethoxy VNB-SSi) | 6.45 | 0 | 0 | 0 | 0 | 0 | 0 | 0 | 0 |
| | Silane compound 5 (allyltriethoxysilane) | 0 | 3.61 | 0 | 0 | 0 | 0 | 0 | 0 | 0 |
| | Silane compound 6 (3-methacryloxypropyltriethoxysilane) | 0 | 0 | 4.65 | 0 | 0 | 0 | 0 | 0 | 0 |
| | Silane compound 7 (triethoxyocten-1-ylsilane) | 0 | 0 | 0 | 4.89 | 0 | 0 | 0 | 0 | 0 |
| | Silane compound 8 (trimethoxy VNB-SSi) | 0 | 0 | 0 | 0 | 5.66 | 0 | 0 | 0 | 0 |
| | Silane compound 9 (allyltrimethoxysilane) | 0 | 0 | 0 | 0 | 0 | 3.10 | 0 | 0 | 0 |
| | Silane compound 10 (trimethoxy 4-vinylphenylsilane) | 0 | 0 | 0 | 0 | 0 | 0 | 3.95 | 0 | 0 |
| | Silane compound 11 (trimethoxyocten-1-ylsilane) | 0 | 0 | 0 | 0 | 0 | 0 | 0 | 4.12 | 0 |
| | Other silane compound (Si69) | 0 | 0 | 0 | 0 | 0 | 0 | 0 | 0 | 4.80 |
| | Silanization reaction accelerator 1 (Urea) | 1.5 | 1.5 | 1.5 | 1.5 | 1.5 | 1.5 | 1.5 | 1.5 | 0 |
| | Sulfur (5% oil-treated) | 3.14 | 3.14 | 3.14 | 3.14 | 3.14 | 3.14 | 3.14 | 3.14 | 1.90 |
| | Vulcanization accelerator (Nocceler CZ) | 1 | 1 | 1 | 1 | 1 | 1 | 1 | 1 | 1 |
| | Vulcanization accelerator (Nocceler D) | 0.5 | 0.5 | 0.5 | 0.5 | 0.5 | 0.5 | 0.5 | 0.5 | 0.5 |
| Viscoelasticity | tan δ (0°C) (index) | 91 | 73 | 78 | 83 | 95 | 75 | 81 | 86 | 100 |
| | tan δ (60°C) (index) | 89 | 77 | 79 | 83 | 86 | 77 | 79 | 82 | 100 |
| | tan δ (0°C)/tan δ (60°C) (index) | 102 | 95 | 98 | 101 | 111 | 97 | 103 | 104 | 100 |
| Abrasion resistance | Abrasion mass (index) | 79 | 77 | 77 | 82 | 76 | 80 | 66 | 82 | 100 |
| Scorch resistance | T5 125°C (index) | 319 | 151 | 244 | 83 | 325 | 152 | 168 | 213 | 100 |

The results of Examples 12-1 to 12-8 and Comparative Example 12-1 showed that the use of the silane coupling agent composition including various silane compounds and the silanization reaction accelerator 1 (Urea) resulted in improvement in the scorch resistance of the rubber composition. Thus, the use of the silane coupling agent composition and the rubber composition of the present invention was found to result in improvement in the processability of rubber and further to enable production of a tire practically excellent in abrasion resistance and excellent in the balance between wet grip properties and fuel economy.

## Claims

1. A silane coupling agent composition comprising a silane compound and a silanization reaction accelerator.

2. The silane coupling agent composition according to claim 1, wherein the silanization reaction accelerator is at least one selected from a group consisting of a carbamide compound, a guanidine compound, another nitrogen-containing compound (excluding carbamide compounds and guanidine compounds), and paraformaldehyde.

3. The silane coupling agent composition according to claim 2, wherein the carbamide compound is a urea derivative.

4. The silane coupling agent composition according to claim 3, wherein the urea derivative is at least one of urea and ethylene urea.

5. The silane coupling agent composition according to claim 2, wherein the guanidine compound is at least one of guanidine hydrochloride and diphenyl guanidine.

6. The silane coupling agent composition according to claim 2, wherein the other nitrogen-containing compound is at least one selected from a group consisting of hexamethylenetetramine, ammonia, hydantoin, cyanuric acid, and melamine.

7. The silane coupling agent composition according to claim 1, further comprising carbon black.

8. The silane coupling agent composition according to claim 1, wherein the silane coupling agent composition is used in natural rubber and/or synthetic isoprene rubber.

9. A rubber composition comprising the silane coupling agent composition according to any one of claims 1 to 8, a diene rubber, and silica, wherein
the diene rubber comprises at least natural rubber and/or synthetic isoprene rubber, and
a content of the silane compound is 0.5 to 30 parts by mass with respect to 100 parts by mass of the silica.

10. The rubber composition according to claim 9, wherein the content of the silica is 0.5 to 300 parts by mass with respect to 100 parts by mass of the diene rubber.

11. The rubber composition according to claim 9, wherein the rubber composition is used in a tire.

12. A crosslinking substance of the rubber composition according to claim 9.

13. A tire comprising the crosslinking substance according to claim 12.
